# EUROPEAN PATENT APPLICATION

(11) **EP 4 442 801 A1**
(43) Date of publication of application: **09.10.2024**
(21) Application number: 22901408.9
(22) Date of filing: 01.12.2022
(51) Int. Cl.: C12J 1/08, A23L 2/02, A23L 2/52, A23L 2/68, A23L 7/10, A23L 27/00, A23L 27/20, A23L 27/60, C12J 1/00

(54) **ACETIC ACID-CONTAINING FOOD OR BEVERAGE**

(30) Priority: 02.12.2021 JP 2021196076
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: NAKAJIMA, Shingo, Handa-shi, Aichi 475-8585 (JP)
(74) Representative: Hasegawa, Kan
(86) International application number: PCT/JP2022/044368
(87) International publication number: WO 2023/100978

(57) **Abstract**

It is an object of the present invention to provide a vinegar and acetic acid-containing food or drink that can be used for a wide range of applications by improving the stuffy odor of the vinegar and acetic acid-containing food or drink without depending on sugar or a high-intensity sweetener. The problem is solved by a vinegar and acetic acid-containing food or drink having an acidity of 0.2 w/v% or more and a ratio of a content of the lower fatty acid (component B) to a content of the higher alcohol (component A) (component B/component A) of 0 to 10.

## Description

### Technical Field

The present invention relates to a vinegar and acetic acid-containing food or drink having an improved a stuffy odor and imparted with a rich aroma.

### Background Art

Acetic acid is used in various foods as a flavoring ingredient and for its expected bacteriostatic effect etc. In recent years, as people have become more health-conscious, acetic acid has been widely consumed as a beverage in expectation of its various beneficial effects, such as improving obesity, controlling blood pressure, and suppressing elevated blood glucose levels.

However, in acetic acid-containing foods or drinks, a stuffy odor (odor like the smell of sweaty feet or socks that have been taken off) mainly derived from vinegar may be felt, and these unpleasant odors may hinder the intake of acetic acid-containing foods or drinks. In particular, it is important to consume an acetic acid-containing food or drink on a daily basis if the beneficial effects mentioned above are to be expected. Therefore, solving this problem is particularly important.

In view of such a background, as a method for improving the palatability of acetic acid-containing food or drink, a method using sugar or a high-intensity sweetener is known. For example, Patent Literature 1 (PTL 1) discloses a method for adding sucralose to a black vinegar drink, and Patent Literature 2 (PTL 2) discloses a method for adding brown sugar to a black vinegar drink. In addition, Patent Literature 3 (PTL 3) discloses a method in which a rare sugar is contained in an acetic acid-containing food or drink. However, the use of sugars and high-intensity sweeteners can be repelled by health-conscious consumers. In addition, in the acetic acid-containing seasoning, since excessive sweetness may impair the original flavor of the seasoning, a method for improving the stuffy odor of the vinegar without depending on the sweetness is required. On the other hand, as a technique for alleviating a peculiar unpleasant odor of the vinegar itself, Patent Literature 4 (PTL 4) discloses a technique in which isomerized sugar and fructose are contained in specific amounts with respect to the vinegar using a raw material containing sugar. However, even with this technique, the stuffy odor of the vinegar could not be sufficiently suppressed.

In addition, as a method for suppressing the stuffy odor of the vinegar in the acetic acid-containing food or drink, there is a case where a fruit juice is blended, but in this method, the stuffy odor derived from the vinegar cannot be suppressed over a long period of time after production, and there is a problem that a deterioration odor of the fruit juice is occurred.

### Citation List

### Patent Literature

PTL 1: JP2002-335924A
PTL 2: JP2019-140948A
PTL 3: JP2014-8036A
PTL 4: JP2008-206431A

### Summary of Invention

### Technical Problem

An object of the present invention is to provide a vinegar and acetic acid-containing food or drink that can be used for a wide range of applications by improving the stuffy odor of the vinegar and acetic acid-containing food or drink without depending on sugar or a high-intensity sweetener.

### Solution to Problem

The present inventors have repeatedly studied to solve the above problems, and have found that a higher alcohol and a lower fatty acid contained in a vinegar and acetic acid-containing food or drink affect a stuffy odor of the vinegar and acetic acid-containing food or drink. In addition, the present inventors have found that five types of higher alcohols including isoamyl alcohol, isobutanol, butanol, propanol, and n-amyl alcohol as the higher alcohol, and five types of lower fatty acids including isovaleric acid, isobutyric acid, butyric acid, propionic acid, and valeric acid as the lower fatty acids strongly affect the stuffy odor particularly of a vinegar and acetic acid-containing food or drink. As a result of further intensive studies, the present inventors have found that by adjusting the ratio of the lower fatty acid to the higher alcohol to a predetermined range, not only the stuffy odor of a vinegar and acetic acid-containing food or drink can be suppressed, but also vinegar and acetic acid-containing food or drink having a rich aroma (it refers to a bright aroma like a fruit, and can also be expressed as, for example, an aroma like a ginjo aroma in Japanese sake) can be provided.

Specifically, the present invention includes the following embodiments.

Item 1. An acetic acid-containing food or drink, in which acidity (acetic acid concentration) is 0.2 to 20 w/v%, 0.2 to 18 w/v%, 0.2 to 16 w/v%, 0.2 to 14 w/v%, 0.2 to 12 w/v%, or 0.2 to 10 w/v%, the lower limit can be usually 0.2 w/v% or more, 0.5 w/v% or more, 1 w/v% or more, 1.5 w/v% or more, 2 w/v% or more, 3 w/v% or more, or 4 w/v% or more, and the upper limit is not limited and is, for example, 21 w/v% or less, 19 w/v% or less, 17 w/v% or less, 15 w/v% or less, 13 w/v% or less, 11 w/v% or less, 9 w/v% or less, 8 w/v% or less, 7 w/v% or less, or 6 w/v% or less, a ratio of the content of the lower fatty acid (component B) to the content of the higher alcohol (component A) (component B/component A) is 0 to 10, 0.1 to 9, 0.2 to 8, 0.3 to 7, 0.35 to 6.5, the upper limit is usually 10 or less, 9 or less, 8 or less, 7 or less, 6.5 or less, 6 or less, 5.5 or less, 5 or less, 4.5 or less, 4 or less, 3 or less, or 2 or less, further, the lower limit is not particularly limited and is, for example, 0 or more, 0.1 or more, 0.2 or more, 0.3 or more, 0.35 or more, or 0.4 or more.

Item 2. The acetic acid-containing food or drink according to the item, in which the higher alcohol is at least one, two or more, three or more, four or more, or all five selected from the group consisting of isoamyl alcohol (component A1), isobutanol (component A2), butanol (component A3), propanol (component A4), and n-amyl alcohol (component A5), and preferably contains at least one of isoamyl alcohol (component A1) and isobutanol (component A2), and more preferably contains isoamyl alcohol (component A1) and isobutanol (component A2).

Item 3. The acetic acid-containing food or drink according to any one of the items, in which the lower fatty acid is at least one, two or more, three or more, four or more, or all five selected from the group consisting of isovaleric acid (component B1), isobutyric acid (component B2), butyric acid (component B3), propionic acid (component B4), and valeric acid (component B5), contains at least one of isovaleric acid (component B1), isobutyric acid (component B2), and propionic acid (component B4), contains two of isovaleric acid (component B1), isobutyric acid (component B2), and propionic acid (component B4), and contains isovaleric acid (component B1), isobutyric acid (component B2) and propionic acid (component B4).

Item 4. The acetic acid-containing food or drink according to any one of the items, in which a ratio of the content of one or more of component B1, component B2 and component B4 to the content of one or more of component A1 and component A2 (component B1/component A1, or component B2/component A1, or component B4/component A1, or component B1/component A2, or component B2/component A2, or component B4/component A2, or (component B1 and component B2)/component A1, or (component B1 and component B4)/component A1, or (component B2 and component B4)/component A1, or (component B1 and component B2)/component A2, or (component B1 and component B4)/component A2, or (component B2 and component B4)/component A2, or (component B1, component B2 and component B4)/component A1, or (component B1, component B2 and component B4)/component A2, or component B1/(component A1 and component A2), or component B2/(component A1 and component A2), or component B4/(component A1 and component A2), or (component B1 and component B2)/(component A1 and component A2), or (component B1 and component B4)/(component A1 and component A2), or (component B2 and component B4)/(component A1 and component A2), or (component B1, component B2 and component B4)/(component A1 and component A2)) is 80 or less, 70 or less, 60 or less, 50 or less, 45 or less, 40 or less, 35 or less, 30 or less, 25 or less, or 20 or less, and a lower limit thereof is not particularly limited and is, for example, 0 or more, 0.1 or more, 0.2 or more, 0.3 or more, 0.35 or more, or 0.4 or more.

Item 5. The acetic acid-containing food or drink according to any one of the items, which meets at least one requirement selected from the group consisting of
(requirement 1) the ratio of the content of the isovaleric acid (component B1) to the content of the isoamyl alcohol (component A1) (component B1/component A1) is 8 or less, 7 or less, 6.5 or less, 6 or less, 5.5 or less, 5.3 or less, 5 or less, 4.5 or less, 4 or less, 3 or less, or 2 or less, and the lower limit is not particularly limited and is, for example, 0 or more, 0.01 or more, 0.05 or more, 0.1 or more, 0.15 or more, 0.18 or more, or 0.2 or more,
(requirement 2) the ratio of the content of isobutyric acid (component B2) to the content of isobutanol (component A2) (component B2/component A2) is 10 or less, 9 or less, 8 or less, 7 or less, 6.5 or less, 6 or less, 5.5 or less, 5 or less, 4 or less, 3 or less, or 2 or less, and the lower limit is not particularly limited and is, for example, 0 or more, 0.001 or more, 0.005 or more, 0.01 or more, 0.03 or more, 0.05 or more, or 0.07 or more, and
(requirement 3) the ratio of the content of propionic acid (component B4) to the content of propanol (component A4) (component B4/component A4) is 80 or less, 70 or less, 60 or less, 50 or less, 40 or less, 35 or less, 30 or less, 25 or less, or 20 or less, and the lower limit is not particularly limited and is, for example, 1 or more, 2 or more, 3 or more, 4 or more, 5 or more, 6 or more, 6.5 or more, 7 or more, 8 or more, or 8.5 or more.

Item 6. The acetic acid-containing food or drink according to any one of the items, which meets at least one requirement selected from the group consisting of
(requirement 4) containing isoamyl alcohol (component A1), the content of which is 24 ppm or less, 20 ppm or less, 16 ppm or less, 12 ppm or less, 10 ppm or less, 8 ppm or less, 7 ppm or less, 6 ppm or less, 5 ppm or less, or 4 ppm or less per 1% of acidity (acetic acid concentration), and the lower limit is, for example, 0.4 ppm or more, 1 ppm or more, 1.5 ppm or more, 2 ppm or more, or 2.5 ppm or more, and
(requirement 5) containing isobutanol (component A2), the content of which is 24 ppm or less, 20 ppm or less, 16 ppm or less, 12 ppm or less, 10 ppm or less, 6 ppm or less, 5 ppm or less, 4 ppm or less, or 3.5 ppm or less per 1% of acidity (acetic acid concentration), and the lower limit is, for example, 0.4 ppm or more, 0.8 ppm or more, 1.2 ppm or more, 1.7 ppm or more, or 2 ppm or more.

Item 7. The acetic acid-containing food or drink according to any one of the items, which meets at least one requirement selected from the group consisting of
(requirement 6) the content of butanol (component A3) is 8 ppm or less, 7 ppm or less, 5 ppm or less, 4 ppm or less, or 2 ppm or less per 1% of acidity (acetic acid concentration), and the lower limit is not particularly limited and is, for example, 0 ppm,
(requirement 7) the content of propanol (component A4) is 10 ppm or less, 8 ppm or less, 6 ppm or less, 4 ppm or less, 2 ppm or less, 1 ppm or less, or 0.5 ppm or less per 1% of acidity (acetic acid concentration), and the lower limit is not particularly limited and is, for example, 0 ppm or more, 0.001 ppm or more, 0.005 ppm or more, 0.01 ppm or more, 0.1 ppm or more, or 0.17 ppm or more, and
(requirement 8) the content of the n-amyl alcohol (component A5) is 8 ppm or less, 7 ppm or less, 5 ppm or less, 4 ppm or less, 3 ppm or less, 2.5 ppm or less, 2 ppm or less, 1 ppm or less, 0.5 ppm or less, 0.1 ppm or less, or 0.05 ppm or less per 1% of acidity (acetic acid concentration), and the lower limit is not particularly limited and is, for example, 0 ppm.

Item 8. The acetic acid-containing food or drink according to any one of the items, which meets at least one requirement selected from the group consisting of
(requirement 9) the content of the isovaleric acid (component B1) is 20 ppm or less, 19 ppm or less, 18 ppm or less, 17 ppm or less, 16 ppm or less, 15 ppm or less, 14 ppm or less, 12 ppm or less, 10 ppm or less, 8 ppm or less, or 4 ppm or less per 1% of acidity (acetic acid concentration), and the lower limit is not particularly limited and is, for example, 0.1 ppm or more, 0.2 ppm or more, 0.4 ppm or more, 0.6 ppm or more, or 0.8 ppm or more;
(requirement 10) the content of isobutyric acid (component B2) is 16 ppm or less, 15 ppm or less, 14 ppm or less, 13 ppm or less, 12 ppm or less, 11 ppm or less, 10 ppm or less, 9 ppm or less, 8 ppm or less, or 4 ppm or less per 1% of acidity (acetic acid concentration), and a lower limit thereof is not particularly limited and is, for example, 0.01 ppm or more, 0.03 ppm or more, 0.05 ppm or more, 0.1 ppm or more, or 0.15 ppm or more,
(requirement 11) the content of butyric acid (component B3) is 8 ppm or less, 7 ppm or less, 6 ppm or less, 5.5 ppm or less, 5 ppm or less, 4.5 ppm or less, 4 ppm or less, 3 ppm or less, or 2 ppm or less per 1% of acidity (acetic acid concentration), and a lower limit thereof is not particularly limited and is, for example, 0 ppm or more,
(requirement 12) the content of propionic acid (component B4) is 20 ppm or less, 16 ppm or less, 12 ppm or less, 11 ppm or less, 10 ppm or less, 9 ppm or less, 8 ppm or less, 7 ppm or less, 6 ppm or less, 5.5 ppm or less, 5 ppm or less, or 4 ppm or less per 1% of acidity (acetic acid concentration), and the lower limit is not particularly limited and is, for example, 0.1 ppm or more, 0.3 ppm or more, 0.5 ppm or more, 1 ppm or more, or 1.5 ppm or more, and
(requirement 13) the content of valeric acid (component B5) is 8 ppm or less, 6 ppm or less, 5 ppm or less, 4 ppm or less, 3 ppm or less, 2 ppm or less, 1.5 ppm or less, 1 ppm or less, or 0.5 ppm or less per 1% of acidity (acetic acid concentration), and the lower limit thereof is not particularly limited and is, for example, 0 ppm or more.

Item 9. The acetic acid-containing food or drink according to any one of the items, which meets at least one requirement selected from the group consisting of
(requirement 14) the ratio of the content of isobutyric acid (component B2) to the content of isoamyl alcohol (component A1) (component B2/component A1) is 10 or less, 9 or less, 8 or less, 7 or less, 6 or less, 5.5 or less, 5 or less, 4.5 or less, or 4 or less, and the lower limit is not particularly limited and is, for example, 0 or more, 0.01 or more, 0.05 or more, 0.1 or more, 0.5 or more, or 1.0 or more,
(requirement 15) the ratio of the content of propionic acid (component B4) to the content of isoamyl alcohol (component A1) (component B4/component A1) is 10 or less, 9 or less, 8 or less, 7 or less, 6 or less, 5 or less, 4 or less, 3 or less, or 2 or less, and the lower limit is not particularly limited and is, for example, 0 or more, 0.01 or more, 0.05 or more, 0.1 or more, 0.2 or more, 0.3 or more, 0.4 or more, 0.5 or more, 0.6 or more, or 0.7 or more, and
(requirement 16) the ratio of the content of isovaleric acid (component B1) to the content of isobutanol (component A2) (component B1/component A2) is 15 or less, 14 or less, 13 or less, 12 or less, 11 or less, 10 or less, 9.5 or less, 9 or less, or 8.5 or less, and the lower limit is not particularly limited and is, for example, 0 or more, 0.01 or more, 0.05 or more, 0.1 or more, 0.5 or more, 1.0 or more, or 1.5 or more.

Item 10. The acetic acid-containing food or drink according to any one of the items, in which the ratio of the content of acetoin to the content of the higher alcohol (component A) is 39 or less, 35 or less, 29 or less, 27 or less, 24 or less, 20 or less, 18 or less, 15 or less, 13 or less, 10 or less, 8 or less, 7 or less, 6.5 or less, 6 or less, 5.5 or less, 4.9 or less, 4.5 or less, 4.0 or less, 3.5 or less, 3.0 or less, 2.5 or less, 2.0 or less, 1.6 or less, or 1.3 or less, and the lower limit is not particularly limited and is, for example, 0 or more, 0.01 or more, 0.05 or more, 0.1 or more, 0.5 or more, 0.75 or more, or 1.0 or more.

Item 11. The acetic acid-containing food or drink according to any one of the items, in which the ratio of the content of diacetyl to the content of the higher alcohol (component A) is 0.5 or less, 0.4 or less, 0.3 or less, 0.2 or less, 0.15 or less, 0.1 or less, 0.070 or less, 0.054 or less, 0.050 or less, 0.045 or less, 0.040 or less, 0.035 or less, 0.031 or less, 0.025 or less, or 0.020 or less, and the lower limit is not particularly limited and is, for example, 0.

Item 12. The acetic acid-containing food or drink according to any one of the items, in which a decane peak area ratio to acetic acid in the acetic acid-containing food or drink as measured by the following Analysis Method A is greater than 0, 0.000001 or more, 0.000005 or more, 0.00001 or more, 0.00005 or more, 0.0001 or more, 0.00025 or more, 0.0004 or more, 0.0005 or more, 0.0006 or more, 0.0007 or more, 0.001 or more, or 0.0015 or more, and an upper limit thereof is not particularly limited and is, for example, 1000 or less, 900 or less, 800 or less, 700 or less, 600 or less, 500 or less, 250 or less, or 100 or less. Analysis Method A

The components are separated and concentrated according to the following conditions.

100 g of the ultra-pure 2 fold diluted sample is weighed into a 1 L vial and sealed before preheating at 40°C for 30 min. Thereafter, 200 ml of a gas phase in the vial as a sample is introduced into the concentrator. In the concentrator, a volatile organic compound is concentrated by removing moisture and an atmospheric component from the sample collected in the vial, introduced into GC-MS, and used for analysis. Specifically, by passing the sample through M1 (Empty) and M2 (Tenax) cooled with liquid nitrogen, moisture is retained in M1 (Empty), the volatile organic compound is concentrated into M2 (Tenax), and the other components are broken. Thereafter, only the volatile organic compound is desorbed (Desorb), transferred to M3 (CryoFoucus) by a carrier gas, trapped at -150°C, then desorbed (Desorb) by rapid heating, and introduced into GC. Volatile component concentrator
- M1 (Empty) temperature: Trap -40°C → Desorb 10°C
- M2 (Tenax) temperature: Trap -50°C → Desorb 220°C
- M3 (CryoFocus) temperature: Trap -150°C -> Desorb 80°C

Item 13. The acetic acid-containing food or drink according to any one of the items, in which the decane peak area ratio with respect to the higher alcohol (component A) in the acetic acid-containing food or drink as measured by the Analysis Method A is greater than 0, 0.000001 or more, 0.000005 or more, 0.00001 or more, 0.00005 or more, 0.0001 or more, 0.00025 or more, 0.0005 or more, 0.00075 or more, 0.001 or more, or 0.0015 or more, and the upper limit is not particularly limited and is, for example, 1000 or less, 900 or less, 800 or less, 700 or less, 600 or less, 500 or less, 250 or less, or 100 or less.

Item 14. The acetic acid-containing food or drink according to any one of the items, in which the acetic acid-containing food or drink is vinegar.

Item 15. The acetic acid-containing food or drink containing the vinegar according to any one of the items, in which the alcohol used as a raw material of the vinegar meets (i) and/or (ii) and/or (iii):
(i) the alcohol used as a raw material of the vinegar contains 50 mass% or less, 40 mass% or less, 30 mass% or less, 20 mass% or less, 10 mass% or less, 5 mass% or less, 1 mass% or less, or 0 mass% of an alcohol subjected to a distillation step in a production process,
(ii) the alcohol used as the raw material of the vinegar is obtained by alcoholic fermentation of carbohydrate, the carbon source of the alcohol used as the raw material of the vinegar is cereals (rice, wheat, barley, corn, etc.), sake cake, fruits (apple, grape, etc.), vegetables, other agricultural products, or honey, and the carbon source is derived from a single plant.
(iii) the vinegar is defined as "pure OO vinegar" in the vinegar quality labelling standard (Ministry of Agriculture, Forestry and Fisheries Notification of Japan Notification No. 1507 on October 16, 2008).

Item 16. The acetic acid-containing food or drink according to any one of the items, in which the acetic acid-containing food or drink is a drink or a composition for preparing the drink.

Item 17. The acetic acid-containing food or drink according to any one of the items, further containing fruit juice.

Item 18. The acetic acid-containing food or drink according to any one of the items, in which a fruit juice content (on a not-from-concentrate fruit juice basis) is 0.2 mass% or more and 900 mass% or less, 1 mass% or more and 800 mass% or less, or 2 mass% or more and 800 mass% or less, more specifically, the lower limit of the content is, for example, 1 mass% or more, 2 mass% or more, 3 mass% or more, 5 mass% or more, or 10 mass% or more, and the upper limit of the content is 50 mass% or less, 100 mass% or less, 150 mass% or less, 200 mass% or less, 250 mass% or less, 300 mass% or less, 400 mass% or less, 500 mass% or less, 600 mass% or less, 700 mass% or less, or 800 mass% or less.

Item 19. The acetic acid-containing food or drink according to any one of the items, in which the fruit juice is at least one selected from the group consisting of strawberry juice, apple juice, citrus juice, pomegranate juice, peach juice, grape juice, blueberry juice, raspberry juice, pineapple juice, and mango juice.

Item 20. The acetic acid-containing food or drink according to any one of the items, further containing vegetable juice.

Item 21. The acetic acid-containing food or drink according to any one of the items, in which the vegetable juice is at least one selected from the group consisting of tomato juice, ginger juice, and soy milk.

Item 22. The acetic acid-containing food or drink according to any one of the items, in which the acetic acid-containing food or drink is seasoning, a dessert sauce, or rice.

Item 23. The acetic acid-containing food or drink according to any one of the items, which is for preparing at least one acetic acid-containing food or drink selected from the group consisting of a drink, a seasoning, a dessert sauce, and rice.

Item 23A. Use of the acetic acid-containing food or drink according to any one of the items for preparation of at least one acetic acid-containing food or drink selected from the group consisting of a drink, a seasoning, a dessert sauce, and rice.

Item 23B. A method for preparing at least one acetic acid-containing food or drink selected from the group consisting of a drink, a seasoning, a dessert sauce, and rice, including blending the acetic acid-containing food or drink according to any one of the items.

### Advantageous Effects of Invention

According to the present invention, it is possible to provide a vinegar and acetic acid-containing food or drink that can be used for a wide range of applications by improving the stuffy odor of the vinegar and acetic acid-containing food or drink without depending on sugar or a high-intensity sweetener.

### Description of Embodiments

In the present specification, the expressions "comprise" and "contain" include the concepts of "comprise," "contain," "consist essentially of," and "consist of."

In the present specification, the expression "and (and)/or (or)" includes both meanings of "and (and)" and "or (or)". For example, "A and/or B" includes meaning of both A and B and A or B, and indicates three of A alone, B alone, and both A and B. In addition, in the present specification, the description "to" indicating a numerical range means including numerical values before and after the numerical range. For example, a numerical range of "M to N" (M, N is any positive number, M < N) means" M or more and N or less ". Note that, in the present specification, a range obtained by arbitrarily replacing the upper limit and/or the lower limit of the above range and a range obtained by arbitrarily combining the above ranges are also disclosed.

In the proportion definition in the present invention, when it is simply described as "w/v%", "mass%", and "ppm" without particular designation, it represents the proportion of "in terms of wet mass". In the present invention, "ppm" has the same meaning as "ppm by mass". In the present invention, "in terms of wet mass" (It may also be simply referred to as "wet mass basis".) represents the content ratio of the target component in the sample, which is calculated with the wet mass including moisture of the sample as the denominator and the content mass of the target component in the sample as the numerator.

The method for calculating the concentration of each component in the acetic acid-containing food or drink in the present invention is as follows. The concentration of the component in the acetic acid-containing food or drink in the present invention can be calculated from the blending amount of the component and the volume and/or mass of the acetic acid-containing food or drink when the blending amount of the component is clear (for example, a case where the acetic acid-containing food or drink is obtained by mixing purified components, and the like), and can be measured according to a known method when the blending amount of the component is unknown.

In one aspect, the present invention relates to an acetic acid-containing food or drink having an acidity (acetic acid concentration) of 0.2 w/v% or more and a ratio of a content of the lower fatty acid (component B) to a content of the higher alcohol (component A) (component B/component A) of 0 to 10 (In the present specification, the "acetic acid-containing food or drink of the present invention" may be referred to.). This acetic acid-containing food or drink is described below.

The acetic acid-containing food or drink of the present invention contains acetic acid. Acetic acid refers to acetic acid molecules (CH₃COOH) and acetate ions (CH₃COO⁻), and the acetic acid content refers to the total concentration of these. The origin of acetic acid in the acetic acid-containing food or drink of the present invention is not particularly limited as long as it is derived from a source suitable for food or drink. For example, the acetic acid can be derived from a food additive (for example, commercially available acetic acid), or may be contained by a known method for producing a vinegar. The acetic acid in the acetic acid-containing food or drink of the present invention is preferably included in vinegar by subjecting a raw material such as fruit or grain to alcohol fermentation by yeast, and further subjecting the fermented product to acetic acid fermentation by acetic acid bacteria, and the raw material is particularly preferably grain (brown rice or the like). From this viewpoint, in one aspect of the present invention, the content of acetic acid obtained by acetic acid fermentation of an alcoholic fermentation product of fruit and/or grain with respect to 100 mass% of acetic acid in the acetic acid-containing food or drink of the present invention is, for example, 70 mass% or more, preferably 80 mass% or more, more preferably 90 mass% or more, still preferably 95 mass% or more, still more preferably 97 mass% or more, especially preferably 99 mass% or more, and particularly preferably 100 mass%.

The acidity (acetic acid concentration) of the acetic acid-containing food or drink of the present invention is not particularly limited, and is preferably 0.2 to 20 w/v%, more preferably 0.2 to 18 w/v%, still preferably 0.2 to 16 w/v%, still more preferably 0.2 to 14 w/v%, especially preferably 0.2 to 12 w/v%, and particularly preferably 0.2 to 10 w/v% from the viewpoint of being suitable for preparation of food or drink (particularly drinking) to be eaten. The lower limit value of the acetic acid content is not particularly limited, and may be, for example, 0.2 w/v%, 0.5 w/v%, 1 w/v%, 1.5 w/v%, 2 w/v%, 3 w/v%, or 4 w/v%, and the upper limit value may be, for example, 21 w/v%, 19 w/v%, 17 w/v%, 15 w/v%, 13 w/v%, 11 w/v%, 9 w/v%, 8 w/v%, 7 w/v%, or 6 w/v%. In the claims and specification, there is a description of "per 1% acidity (acetic acid concentration)", which is synonymous with "per 1.0 w/v% acidity (acetic acid concentration)".

The acidity of the acetic acid-containing food or drink of the present invention refers to the acetic acid concentration. Specifically, the acidity in the present specification is a value measured by the following method. The acetic acid content quantification method sample is diluted with ultrapure water so that the concentration of acetic acid is about 100 mg%, and the peak area of acetic acid is analyzed by high-performance liquid chromatography (HPLC) under the following conditions. In addition, 100 mg% of acetic acid diluted with ultrapure water is similarly analyzed as a standard sample, and the content of acetic acid in each sample is calculated by an external standard method. When the acetic acid-containing food or drink of the present invention is vinegar, the acidity may be determined by neutralization titration (end point pH 8.2) of a measurement sample (vinegar) using phenolphthalein as an indicator and a 1 N aqueous sodium hydroxide solution.
- Measuring equipment: high-performance liquid chromatography (Model: LC-10ADVP, produced by Shimadzu Corporation)
- Mobile phase (1): 4 mM p-toluenesulfonic acid aqueous solution, flow rate 0.9 mL/min
- Mobile phase (2): 16 mM Bis-Tris aqueous solution containing 4 mM p-toluenesulfonic acid and 80 µM MEDTA, flow rate 0.9 mL/min
- Column: Shodex KC810P + KC-811 × 2 (produced by Showa Denko K.K.)
- Column temperature: 50°C
- Detection: Electric conductivity detector CDD-10VP (produced by Shimadzu Corporation)

The acetic acid-containing food or drink of the present invention contains the higher alcohol (component A) and the lower fatty acid (component B).

The higher alcohol in the present invention refers to a chain alcohol having 3 or more carbon atoms. The higher alcohol in the present invention is preferably at least one selected from the group consisting of isoamyl alcohol (component A1), isobutanol (component A2), butanol (component A3), propanol (component A4), and n-amyl alcohol (component A5), preferably two or more, preferably three or more, preferably four or more, and preferably all five. The higher alcohol preferably contains at least one of isoamyl alcohol (component A1) and isobutanol (component A2), and preferably contains isoamyl alcohol (component A1) and isobutanol (component A2). In addition, in an aspect in which component A is at least one selected from the group consisting of components A1 to A5, component A refers collectively to components A1 to A5, and the total content of component A refers to the total content of components A1 to A5. In the present specification, the expression "higher alcohol" is appropriately paraphrased as "higher alcohol in the present invention" and "higher alcohol of the present invention".

The content of the higher alcohol in the acetic acid-containing food or drink of the present invention can also be measured by a known method, for example, can be measured by a gas chromatography method by the method described in Examples described later. In addition, the origin of the higher alcohol contained in the acetic acid-containing food or drink of the present invention is not particularly limited as long as it is derived from a source suitable for food or drink, and for example, the higher alcohol can be derived from a food additive, or may be contained by a known method for producing a vinegar.

The lower fatty acid in the present invention refers to a fatty acid having 5 or less carbon atoms. The lower fatty acid contained in the acetic acid-containing food or drink of the present invention is preferably at least one selected from the group consisting of isovaleric acid (component B1), isobutyric acid (component B2), butyric acid (component B3), propionic acid (component B4), and valeric acid (component B5), preferably two or more, preferably three or more, preferably four or more, and preferably all five, preferably contains at least one of isovaleric acid (component B1), isobutyric acid (component B2), and propionic acid (component B4), and preferably contains any two of isovaleric acid (component B1), isobutyric acid (component B2), and propionic acid (component B4), preferably contains isovaleric acid (component B1), isobutyric acid (component B2), and propionic acid (component B4). In addition, in an aspect in which component B is at least one selected from the group consisting of components B1 to B5, component B refers collectively to components B1 to B5, and the total content of component B refers to the total content of components B1 to B5. In the present specification, the expression "lower fatty acid" is appropriately paraphrased as "lower fatty acid in the present invention" and "lower fatty acid of the present invention".

The content of the lower fatty acid in the acetic acid-containing food or drink of the present invention can also be measured by a known method, for example, by high-performance liquid chromatography and by the method described in Examples described later. In addition, the origin of the lower fatty acid contained in the acetic acid-containing food or drink of the present invention is not particularly limited as long as it is derived from a source suitable for food or drink, and for example, the lower fatty acid can be derived from a food additive, or may be contained by a known method for producing a vinegar.

The acetic acid-containing food or drink of the present invention contains component A and component B at a predetermined ratio. In the acetic acid-containing food or drink of the present invention, the ratio of the content of component B (in the aspect where component B is at least one selected from the group consisting of components B1 to B5 component, the total content of component B1 to B5 component) to the content of component A (in the aspect where component A is at least one selected from the group consisting of components A1 to A5 component, the total content of component A1 to A5 component) (component B/component A) per 1% acidity (acetic acid concentration) is 0 to 10, preferably 0.1 to 9, more preferably 0.2 to 8, and still preferably 0.3 to 7, particularly preferably 0.35 to 6.5, usually 10 or less, preferably 9 or less, more preferably 8 or less, still preferably 7 or less, especially preferably 6.5 or less, particularly preferably 6 or less, 5.5 or less, 5 or less, 4.5 or less, 4 or less, 3 or less, or 2 or less. The lower limit value is not particularly limited, and can be, for example, 0, 0.1, 0.2, 0.3, 0.35, or 0.4.

In addition to the above, the ratio of the content of component B1 to the total content of component A may be in a certain range. The ratio may be, for example, 10 or less, 8 or less, 6 or less, 4 or less, 3 or less, or 2 or less. The lower limit is not particularly limited, and may be, for example, 0 or more, 0.1 or more, 0.2 or more, 0.3 or more, 0.35 or more, or 0.4 or more.

In addition, the content of component B2 may be satisfied instead of the content of component B1, the content of component B3 may be satisfied, the content of component B4 may be satisfied, the content of component B5 may be satisfied, the total content of component B1 and component B2 may be satisfied, the total content of component B1 and component B4 may be satisfied, the total content of component B2 and component B4 may be satisfied, and the total content of component B1, component B2, and component B4 may be satisfied.

The ratio of the total content of component B to the content of component A1 may be within a certain range. The ratio may be, for example, 50 or less, 45 or less, 40 or less, 35 or less, 30 or less, or 25 or less. The lower limit is not particularly limited, and may be, for example, 0 or more, 0.1 or more, 0.2 or more, 0.3 or more, 0.35 or more, or 0.4 or more.

In addition, the content of component A2 may be satisfied instead of the content of component A1, the content of component A3 may be satisfied, the content of component A4 may be satisfied, the content of component A5 may be satisfied, and the total content of component A1 and component A2 may be satisfied.

Furthermore, the ratio of the content of one or more of component B1, component B2, and component B4 to the content of one or more of component A1 and component A2 may be, for example, 80 or less, 70 or less, 60 or less, 50 or less, 45 or less, 40 or less, 35 or less, 30 or less, 25 or less, or 20 or less. The lower limit is not particularly limited, and may be, for example, 0 or more, 0.1 or more, 0.2 or more, 0.3 or more, 0.35 or more, or 0.4 or more.

By adjusting the ratio of the higher alcohol of the present invention and the lower fatty acid of the present invention as described above, the stuffy odor of a vinegar and acetic acid-containing food or drink can be remarkably suppressed, and a rich aroma can be imparted.

The acetic acid-containing food or drink of the present invention further preferably contains a component A and a component B in predetermined amounts.

The content of component A (in the aspect where component A is at least one selected from the group consisting of components A1 to A5 component, the total content of component A1 to A5 component) is not particularly limited, and is preferably 40 ppm or less, more preferably 36 ppm or less, still preferably 24 ppm or less, especially preferably 16 ppm or less, and particularly preferably 12 ppm or less per 1% of acidity (acetic acid concentration) from a viewpoint of not impairing a neat acidic taste peculiar to vinegar and suppressing development of a pungent odor of vinegar derived from a higher alcohol. In addition, the lower limit value is preferably 0.4 ppm or more, more preferably 1 ppm or more, still preferably 1.5 ppm or more, especially preferably 2 ppm or more, particularly preferably 2.5 ppm or more, 3 ppm or more, 4 ppm or more, or 5 ppm or more per 1% of acidity (acetic acid concentration) from the viewpoint of sufficiently developing a rich aroma. In an aspect in which component A is at least one selected from the group consisting of components A1 to A5, when the content of component A exceeds 20 ppm per 1% of acidity (acetic acid concentration), a pungent odor of vinegar derived from a higher alcohol may be felt. That is, by adjusting the content of the higher alcohol within the above range, the development of a pungent odor is suppressed, and a rich aroma can be sufficiently developed.

The content of the lower fatty acid (component B) in the present invention (in the aspect where component B is at least one selected from the group consisting of components B1 to B5 component, the total content of component B1 to B5 component) is not particularly limited, and is preferably 60 ppm or less, more preferably 50 ppm or less, still preferably 45 ppm or less, especially preferably 40 ppm or less, particularly preferably 35 ppm or less, 30 ppm or less, 20 ppm or less, or 10 ppm or less per 1% of acidity (acetic acid concentration) from the viewpoint of remarkably suppressing a stuffy odor of a vinegar and acetic acid-containing food or drink. The lower limit value is not particularly limited, and can be, for example, 0.2 ppm, 0.4 ppm, 1 ppm, 2 ppm, or 3 ppm per 1% of acidity (acetic acid concentration).

The acetic acid-containing food or drink of the present invention is preferably characterized by an aspect in which component A is at least one selected from the group consisting of components A1 to A5, and component B is at least one selected from the group consisting of components B1 to B5. In this aspect, it is preferable to adjust the contents of component A and component B and the ratio thereof (component B/component A) within the above-mentioned ranges, and further meet at least one requirement selected from the group consisting of (requirement 1) a ratio of the content of isovaleric acid (component B1) to the content of isoamyl alcohol (component A1) (component B1/component A1) is 8 or less,
(requirement 2) a ratio of the content of isobutyric acid (component B2) to the content of isobutanol (component A2) (component B2/component A2) is 10 or less, and
(requirement 3) a ratio of the content of propionic acid (component B4) to the content of propanol (component A4) (component B4/component A4) is 80 or less.

The acetic acid-containing food or drink of the present invention can meet preferably one or more, more preferably two or more, and still preferably all three of the requirements 1 to 3. By meeting the plurality of requirements, the stuffy odor of the vinegar and acetic acid-containing food or drink is more remarkably suppressed, and a rich aroma can be more strongly imparted. Although the detailed mechanism by which the above effect is exhibited is unknown, it is considered that by adjusting the content of each component or the ratio of the content to other components within an appropriate range, the aromas of each component alone are combined, and as a result, the stuffy odor is suppressed, which is perceived as a rich aroma. In addition, the content of each component and the ratio of component A and component B (component B/component A, component B1/component A1, component B2/component A2, component B4/component A4) can be arbitrarily adjusted within the range disclosed in the present specification.

Furthermore, the acetic acid-containing food or drink may meet at least one requirement selected from the group consisting of
(requirement 14) a ratio of the content of isobutyric acid (component B2) to the content of isoamyl alcohol (component A1) (component B2/component A1) is 10 or less,
(requirement 15) a ratio of the content of propionic acid (component B4) to the content of isoamyl alcohol (component A1) (component B4/component A1) is 10 or less, and
(requirement 16) a ratio of the content of isovaleric acid (component B1) to the content of isobutanol (component A2) (component B1/component A2) is 15 or less.

The acetic acid-containing food or drink of the present invention can meet preferably one or more, more preferably two or more, and still preferably all three of the requirements 14 to 16. By meeting the plurality of requirements, the stuffy odor of the vinegar and acetic acid-containing food or drink is more remarkably suppressed, and a rich aroma can be more strongly imparted. Although the detailed mechanism by which the above effect is exhibited is unknown, it is considered that by adjusting the content of each component or the ratio of the content to other components within an appropriate range, the aromas of each component alone are combined, and as a result, the stuffy odor is suppressed, which is perceived as a rich aroma. In addition, the content of each component and the ratio of component A and component B (component B/component A, component B2/component A1, component B4/component A1, component B1/component A2) can be arbitrarily adjusted within the range disclosed in the present specification.

Isoamyl alcohol (component A1) is a type of organic compound represented by the chemical formula C₅H₁₂O and classified as an alcohol (CAS #: 123-51-3). The content of the isoamyl alcohol in the acetic acid-containing food or drink of the present invention is not particularly limited, and is preferably 24 ppm or less, more preferably 20 ppm or less, still preferably 16 ppm or less, particularly preferably 12 ppm or less, particularly preferably 10 ppm or less, 8 ppm or less, 7 ppm or less, 6 ppm or less, 5 ppm or less, or 4 ppm or less per 1% of acidity (acetic acid concentration) from the viewpoint of not impairing a neat acidic taste peculiar to vinegar and not developing a pungent odor, and the lower limit value is preferably 0.4 ppm or more, more preferably 1 ppm or more, still preferably 1.5 ppm or more, especially preferably 2 ppm or more, and particularly preferably 2.5 ppm or more per 1% of acidity (acetic acid concentration) from the viewpoint of suppressing the stuffy odor of a vinegar and acetic acid-containing food or drink and sufficiently developing a rich aroma. That is, by adjusting the content of component A1 within the above range, the stuffy odor of the vinegar and acetic acid-containing food or drink can be suppressed, the development of the pungent odor can be suppressed, and the rich aroma can be sufficiently developed.

Isobutanol (component A2) is a type of organic compound represented by the chemical formula C₄H₁₀O and classified as an alcohol (CAS #: 78-83-1), and is also called isobutyl alcohol. The content of isobutanol in the acetic acid-containing food or drink of the present invention is not particularly limited, and is preferably 24 ppm or less, more preferably 20 ppm or less, still preferably 16 ppm or less, especially preferably 12 ppm or less, particularly preferably 10 ppm or less, 6 ppm or less, 5 ppm or less, 4 ppm or less, or 3.5 ppm or less per 1% of acidity (acetic acid concentration) from the viewpoint of not impairing a neat acidic taste peculiar to vinegar and not developing a pungent odor, and the lower limit value can preferably 0.4 ppm or more, more preferably 0.8 ppm or more, still preferably 1.2 ppm or more, especially preferably 1.7 ppm or more, particularly preferably 2 ppm or more per 1% of acidity (acetic acid concentration) from the viewpoint of suppressing a stuffy odor of a vinegar and acetic acid-containing food or drink and sufficiently developing a rich aroma. That is, by adjusting the content of component A2 within the above range, the stuffy odor of the vinegar and acetic acid-containing food or drink can be suppressed, the development of the pungent odor can be suppressed, and the rich aroma can be sufficiently developed.

Butanol (component A3) refers collectively to monohydric alcohols having 4 carbon atoms represented by the chemical formula C₄H₁₀O, and is also referred to as butyl alcohol. Although butanol has an isomer, butanol in the acetic acid-containing food or drink of the present invention refers to n-butanol (CAS #: 71-36-3). The content of butanol in the acetic acid-containing food or drink of the present invention is not particularly limited, and is preferably 8 ppm or less, more preferably 7 ppm or less, still preferably 5 ppm or less, especially preferably 4 ppm or less, and particularly preferably 2 ppm or less from the viewpoint of not impairing a neat acidic taste peculiar to vinegar, suppressing a stuffy odor of a vinegar and acetic acid-containing food or drink, suppressing development of pungent odor, and sufficiently developing a rich aroma. In addition, the lower limit value of the content of butanol in the acetic acid-containing food or drink of the present invention is not particularly limited, and may be, for example, 0 ppm per 1% of acidity (acetic acid concentration).

Propanol (component A4) is a type of organic compound represented by the chemical formula C₃H₈O and classified as an alcohol. Although propanol has an isomer, the propanol in the acetic acid-containing food or drink of the present invention refers to 1-propanol (CAS #: 71-23-8). The content of propanol in the acetic acid-containing food or drink of the present invention is not particularly limited, and is preferably 10 ppm or less, more preferably 8 ppm or less, still preferably 6 ppm or less, especially preferably 4 ppm or less, particularly preferably 2 ppm or less, 1 ppm or less, or 0.5 ppm or less per 1% of acidity (acetic acid concentration) from the viewpoint of not impairing a neat acidic taste peculiar to vinegar and not developing a pungent odor, and the lower limit value can be preferably 0 ppm or more, more preferably 0.001 ppm or more, still preferably 0.005 ppm or more, especially preferably 0.01 ppm or more, particularly preferably 0.1 ppm or more, or 0.17 ppm or more per 1% of acidity (acetic acid concentration) from the viewpoint of suppressing a stuffy odor of a vinegar and acetic acid-containing food or drink and sufficiently developing a rich aroma. That is, by adjusting the content of component A4 within the above range, the stuffy odor of the vinegar and acetic acid-containing food or drink can be suppressed, the development of the pungent odor can be suppressed, and the rich aroma can be sufficiently developed.

n-Amyl alcohol (component A5) is a type of organic compound represented by C₅H₁₂O and classified as an alcohol (CAS #: 71-41-0), and is also referred to as 1-pentanol. The content of the n-amyl alcohol in the acetic acid-containing food or drink of the present invention is not particularly limited, and is preferably 8 ppm or less, more preferably 7 ppm or less, still preferably 5 ppm or less, especially preferably 4 ppm or less, particularly preferably 3 ppm or less, 2.5 ppm or less, 2 ppm or less, 1 ppm or less, 0.5 ppm or less, 0.1 ppm or less, or 0.05 ppm or less per 1% of acidity (acetic acid concentration) from the viewpoint of not impairing a neat acidic taste peculiar to vinegar, suppressing a stuffy odor of a vinegar and acetic acid-containing food or drink, suppressing the development of a pungent odor, and sufficiently developing a rich aroma. The lower limit value of the content of the n-amyl alcohol in the acetic acid-containing food or drink of the present invention is not particularly limited, and may be, for example, 0 ppm per 1% of acidity (acetic acid concentration).

Isovaleric acid (component B1) is a short-chain fatty acid represented by the chemical formula C₅H₁₀O₂ (CAS #: 503-74-2), and is also referred to as 3-methylbutanoic acid. The content of isovaleric acid in the acetic acid-containing food or drink of the present invention is not particularly limited, and is preferably 20 ppm or less, more preferably 19 ppm or less, still preferably 18 ppm or less, especially preferably 17 ppm or less, particularly preferably 16 ppm or less, 15 ppm or less, 14 ppm or less, 12 ppm or less, 10 ppm or less, 8 ppm or less, or 4 ppm or less per 1% of acidity (acetic acid concentration) from the viewpoint of suppressing a stuffy odor of a vinegar and acetic acid-containing food or drink. The lower limit value of the content of isovaleric acid in the acetic acid-containing food or drink of the present invention may be, for example, 0.1 ppm, 0.2 ppm, 0.4 ppm, 0.6 ppm, or 0.8 ppm per 1% of acidity (acetic acid concentration) from the viewpoint of suppressing a stuffy odor of a vinegar and acetic acid-containing food or drink.

Isobutyric acid (component B2) is a short-chain fatty acid represented by the chemical formula C₄H₈O₂ (CAS #: 79-31-2). The content of isobutyric acid in the acetic acid-containing food or drink of the present invention is not particularly limited, and is preferably 16 ppm or less, more preferably 15 ppm or less, still preferably 14 ppm or less, especially preferably 13 ppm or less, particularly preferably 12 ppm or less, 11 ppm or less, 10 ppm or less, 9 ppm or less, 8 ppm or less, or 4 ppm or less per 1% of acidity (acetic acid concentration) from the viewpoint of suppressing a stuffy odor of a vinegar and acetic acid-containing food or drink. The lower limit value of the content of isobutyric acid in the acetic acid-containing food or drink of the present invention may be, for example, 0.01 ppm, 0.03 ppm, 0.05 ppm, 0.1 ppm, or 0.15 ppm per 1% of acidity (acetic acid concentration) from the viewpoint of suppressing a stuffy odor of a vinegar and acetic acid-containing food or drink.

Butyric acid (component B3) is a short-chain fatty acid represented by the chemical formula C₄H₈O₂ (CAS #: 107-92-6). The content of butyric acid in the acetic acid-containing food or drink of the present invention is preferably 8 ppm or less, more preferably 7 ppm or less, still preferably 6 ppm or less, especially preferably 5.5 ppm or less, particularly preferably 5 ppm or less, 4.5 ppm or less, 4 ppm or less, 3 ppm or less, or 2 ppm or less per 1% of acidity (acetic acid concentration) from the viewpoint of suppressing a stuffy odor of a vinegar and acetic acid-containing food or drink. In addition, the lower limit value of the content of butyric acid in the acetic acid-containing food or drink of the present invention is usually 0 ppm or more per 1% of acidity (acetic acid concentration) from the viewpoint of suppressing a stuffy odor of the vinegar and acetic acid-containing food or drink.

Propionic acid (component B4) is a short-chain fatty acid represented by the chemical formula C₃H₆O₂ (CAS #: 79-09-4). The content of propionic acid in the acetic acid-containing food or drink of the present invention is preferably 20 ppm or less, more preferably 16 ppm or less, still preferably 12 ppm or less, especially preferably 11 ppm or less, particularly preferably 10 ppm or less, 9 ppm or less, 8 ppm or less, 7 ppm or less, 6 ppm or less, 5.5 ppm or less, 5 ppm or less, or 4 ppm or less per 1% of acidity (acetic acid concentration) from the viewpoint of suppressing a stuffy odor of a vinegar and acetic acid-containing food or drink. In addition, the lower limit value of the content of butyric acid in the acetic acid-containing food or drink of the present invention may be, for example, 0.1 ppm, 0.3 ppm, 0.5 ppm, 1 ppm, or 1.5 ppm per 1% of acidity (acetic acid concentration) from the viewpoint of suppressing a stuffy odor of a vinegar and acetic acid-containing food or drink.

Valeric acid (component B5) is a short-chain fatty acid represented by the chemical formula C₅H₁₀O₂ (CAS #: 109-52-4), and is also referred to as pentanoic acid. The content of valeric acid in the acetic acid-containing food or drink of the present invention is not particularly limited, and is preferably 8 ppm or less, more preferably 6 ppm or less, still preferably 5 ppm or less, especially preferably 4 ppm or less, particularly preferably 3 ppm or less, 2 ppm or less, 1.5 ppm or less, 1 ppm or less, or 0.5 ppm or less per 1% of acidity (acetic acid concentration) from the viewpoint of suppressing a stuffy odor of a vinegar and acetic acid-containing food or drink. The lower limit value of the content of valeric acid in the acetic acid-containing food or drink of the present invention is usually 0 ppm or more per 1% of acidity (acetic acid concentration) from the viewpoint of suppressing a stuffy odor of a vinegar and acetic acid-containing food or drink.

In the present invention, from the viewpoint of suppressing a stuffy odor of a vinegar and acetic acid-containing food or drink and developing a rich aroma, the ratio of the content of isovaleric acid (component B1) to isoamyl alcohol (component A1) (component B1/component A1) per 1% of acidity (acetic acid concentration) is preferably a predetermined value or less. The ratio is preferably 8 or less, more preferably 7 or less, still preferably 6.5 or less, especially preferably 6 or less, particularly preferably 5.5 or less, 5.3 or less, 5 or less, 4.5 or less, 4 or less, 3 or less, or 2 or less. The lower limit value is not particularly limited, and can be, for example, 0, 0.01, 0.05, 0.1, 0.15, 0.18, or 0.2.

In the present invention, from the viewpoint of suppressing a stuffy odor of a vinegar and acetic acid-containing food or drink and developing a rich aroma, a ratio of a content of isobutyric acid (component B2) to isobutanol (component A2) (component B2/component A2) per 1% of acidity (acetic acid concentration) is preferably a predetermined value or less. The ratio is preferably 10 or less, more preferably 9 or less, still preferably 8 or less, especially preferably 7 or less, particularly preferably 6.5 or less, 6 or less, 5.5 or less, 5 or less, 4 or less, 3 or less, or 2 or less. The lower limit value is not particularly limited, and can be, for example, 0, 0.001, 0.005, 0.01, 0.03, 0.05, or 0.07.

In the present invention, a ratio of a content of propionic acid (component B4) to propanol (component A4) (component B4/component A4) per 1% of acidity (acetic acid concentration) is preferably a predetermined value or less from a viewpoint of suppressing a stuffy odor of a vinegar and acetic acid-containing food or drink and developing a rich aroma. The ratio is preferably 80 or less, more preferably 70 or less, still preferably 60 or less, especially preferably 50 or less, particularly preferably 40 or less, 35 or less, 30 or less, 25 or less, or 20 or less. The lower limit value is not particularly limited, and can be, for example, 1, 2, 3, 4, 5, 6, 6.5, 7, 8, or 8.5.

In the present invention, the ratio of the content of isobutyric acid (component B2) to the content of isoamyl alcohol (component A1) (component B2/component A1) per 1% of acidity (acetic acid concentration) may be a predetermined value or less from the viewpoint of suppressing a stuffy odor of a vinegar and acetic acid-containing food or drink and developing a rich aroma. The ratio may be 10 or less, 9 or less, 8 or less, 7 or less, 6 or less, 5.5 or less, 5 or less, 4.5 or less, or 4 or less. The lower limit thereof is not particularly limited, and may be, for example, 0 or more, 0.01 or more, 0.05 or more, 0.1 or more, 0.5 or more, or 1.0 or more.

In the present invention, the ratio of the content of propionic acid (component B4) to the content of isoamyl alcohol (component A1) (component B4/component A1) per 1% of acidity (acetic acid concentration) may be a predetermined value or less from the viewpoint of suppressing a stuffy odor of a vinegar and acetic acid-containing food or drink and developing a rich aroma. The ratio may be 10 or less, 9 or less, 8 or less, 7 or less, 6 or less, 5 or less, 4 or less, 3 or less, or 2 or less. The lower limit thereof is not particularly limited, and may be, for example, 0 or more, 0.01 or more, 0.05 or more, 0.1 or more, 0.2 or more, 0.3 or more, 0.4 or more, 0.5 or more, 0.6 or more, or 0.7 or more.

In the present invention, the ratio of the content of isovaleric acid (component B1) to the content of isobutanol (component A2) (component B1/component A2) per 1% of acidity (acetic acid concentration) may be a predetermined value or less from the viewpoint of suppressing a stuffy odor of a vinegar and acetic acid-containing food or drink and developing a rich aroma. The ratio may be 15 or less, 14 or less, 13 or less, 12 or less, 11 or less, 10 or less, 9.5 or less, 9 or less, or 8.5 or less. The lower limit thereof is not particularly limited, and may be, for example, 0 or more, 0.01 or more, 0.05 or more, 0.1 or more, 0.5 or more, 1.0 or more, or 1.5 or more.

In the acetic acid-containing food or drink of the present invention, it is particularly preferable to contain a predetermined amount of component A1 and/or component A2 from the viewpoint of suppressing a stuffy odor of a vinegar and acetic acid-containing food or drink and remarkably developing a rich aroma. That is, the acetic acid-containing food or drink of the present invention preferably meets at least one requirement selected from the group consisting of
(requirement 4) containing isoamyl alcohol (component A1), the content of which is 24 ppm or less per 1% of acidity (acetic acid concentration), and
(requirement 5) containing isobutanol (component A2), the content of which is 24 ppm or less per 1% of acidity (acetic acid concentration),
and more preferably meets both the requirements 4 and 5.

Further, in the aspect that meets the requirement 4 and/or the requirement 5,
it preferably meets at least one requirement selected from the group consisting of
   (requirement 6) the content of butanol (component A3) is 8 ppm or less per 1% of acidity (acetic acid concentration),
   (requirement 7) the content of propanol (component A4) is 10 ppm or less per 1% of acidity (acetic acid concentration), and
   (requirement 8) the content of the n-amyl alcohol (component A5) is 8 ppm or less per 1% of acidity (acetic acid concentration),
more preferably at least two requirements selected from the group consisting of the requirements 6 to 8, and still preferably meets all of the requirements 6 to 8.

In an aspect in which the acetic acid-containing food or drink of the present invention meets requirement 4 and/or requirement 5, the content of component A1 is preferably 0.4 to 24 ppm, more preferably 1 to 20 ppm, still preferably 1.5 to 18 ppm, especially preferably 2 to 16 ppm, and particularly preferably 2.5 to 8 ppm, per 1% of acidity (acetic acid concentration). The upper limit value of the content of component A1 can be, for example, 24 ppm, 22 ppm, 21 ppm, 19 ppm, 17 ppm, or 10 ppm per 1% of acidity (acetic acid concentration), and the lower limit value can be, for example, 0.3 ppm, 0.8 ppm, 1.2 ppm, 1.7 ppm, or 2.2 ppm per 1% of acidity (acetic acid concentration). In addition, the content of component A2 is preferably 0.4 to 24 ppm, more preferably 0.8 to 20 ppm, still preferably 1.2 to 16 ppm, especially preferably 1.7 to 12 ppm, and particularly preferably 2 to 6 ppm per 1% of acidity (acetic acid concentration). The upper limit value of the content of component A2 can be, for example, 24 ppm, 22 ppm, 21 ppm, 18 ppm, 14 ppm, or 8 ppm per 1% of acidity (acetic acid concentration), and the lower limit value can be, for example, 0.3 ppm, 0.5 ppm, 1 ppm, 1.2 ppm, or 1.8 ppm per 1% of acidity (acetic acid concentration).

When the acetic acid-containing food or drink of the present invention is an aspect that meets the requirement 4 and/or the requirement 5 and further meets at least one of the requirements 6 to 8, the range of the contents of components A3 to A5 can be arbitrarily adjusted within the range disclosed in the present specification. By adjusting the content of component A and component B and the ratio thereof (component B/component A, component B1/component A1, component B2/component A2, component B4/component A4) within the range disclosed in the present specification while containing component A1 and/or component A2 within the above range, the effect of suppressing a stuffy odor of a vinegar and acetic acid-containing food or drink, not imparting a pungent odor, and imparting a rich aroma is more remarkably exhibited. There are various types of higher alcohols, and among them, it is an extremely qualitatively different effect that these effects are remarkably exhibited by particularly containing component A1 and/or component A2 in a predetermined amount, adjusting the contents of component A3 to component A5, and further adjusting the ratio of the higher alcohol and the lower fatty acid.

In the acetic acid-containing food or drink of the present invention, it is particularly preferable that the acetic acid-containing food or drink contains at least one component selected from B1 to components B5, and the content of the component is equal to or less than the above content, from the viewpoint of remarkably suppressing a stuffy odor of a vinegar and acetic acid-containing food or drink and developing a rich aroma. That is, the acetic acid-containing food or drink of the present invention preferably meets at least one requirement selected from the group consisting of
(requirement 9) the content of isovaleric acid (component B1) is 20 ppm or less per 1% of acidity (acetic acid concentration),
(requirement 10) the content of isobutyric acid (component B2) is 16 ppm or less per 1% of acidity (acetic acid concentration),
(requirement 11) the content of butyric acid (component B3) is 8 ppm or less per 1% of acidity (acetic acid concentration),
(requirement 12) the content of propionic acid (component B4) is 20 ppm or less per 1% of acidity (acetic acid concentration), and
(requirement 13) the content of valeric acid (component B5) is 8 ppm or less per 1% of acidity (acetic acid concentration). In the acetic acid-containing food or drink of the present invention, among the requirements 9 to 13, particularly it is preferable to meet the requirement 9 and/or the requirement 10, and it is more preferable to meet both the requirement 9 and the requirement 10. In addition, in an aspect that meets the requirement 9 and/or the requirement 10, it is still preferable to meet at least one requirement selected from the group consisting of the requirements 11 to 13, it is especially preferable to meet at least two requirements selected from the group consisting of the requirements 11 to 13, and it is particularly preferable to meet all of the requirements 11 to 13. By adjusting the content of component A and component B and the ratio thereof (component B/component A, component B1/component A1, component B2/component A2, and component B4/component A4) within the range disclosed in the present specification while meeting the above requirements, the effect of suppressing a stuffy odor of a vinegar and acetic acid-containing food or drink and imparting a rich aroma is more remarkably exhibited.

In the aspect in which the acetic acid-containing food or drink of the present invention meets requirement 9 and/or requirement 10, the content of component B1 is preferably 20 ppm or less, more preferably 16 ppm or less, still preferably 10 ppm or less, especially preferably 8 ppm or less, and particularly preferably 4 ppm or less per 1% of acidity (acetic acid concentration), and the lower limit value is, for example, 0.1 ppm, 0.2 ppm, 0.4 ppm, 0.6 ppm, or 0.8 ppm per 1% of acidity (acetic acid concentration). In addition, the content of component B2 is preferably 16 ppm or less, more preferably 12 ppm or less, still preferably 10 ppm or less, especially preferably 8 ppm or less, and particularly preferably 4 ppm or less per 1% of acidity (acetic acid concentration), and the lower limit value is, for example, 0.01 ppm, 0.03 ppm, 0.05 ppm, 0.1 ppm, or 0.15 ppm per 1% of acidity (acetic acid concentration) from the viewpoint of suppressing a stuffy odor of a vinegar and acetic acid-containing food or drink. When the acetic acid-containing food or drink of the present invention meets the requirements 9 and/or 10, the range of the contents of components B3 to B5 can be arbitrarily adjusted within the range disclosed in the present specification.

The acetic acid-containing food or drink of the present invention may contain a predetermined amount of acetoin (CAS #: 513-86-0, another name: 3-hydroxy-2-butanone). The content of acetoin in the acetic acid-containing food or drink of the present invention is measured by a GC (FID) method, specifically by the method described in Examples described later. In the FID, the component content in the sample can be measured by combusting an organic compound in a hydrogen flame formed of air and hydrogen, detecting a change in the electrode generated when the ionized compound is collected in the electrode section, analyzing the sample and the standard sample diluted to an arbitrary content, and comparing the values. The content of acetoin may be 1000 ppm or less, 900 ppm or less, 800 ppm or less, 700 ppm or less, 600 ppm or less, 500 ppm or less, 450 ppm or less, 400 ppm or less, 350 ppm or less, 300 ppm or less, 250 ppm or less, 200 ppm or less, 180 ppm or less, 160 ppm or less, 150 ppm or less, 130 ppm or less, or 110 ppm or less. The lower limit thereof is not particularly limited, and may be, for example, 0 ppm or more, 5 ppm or more, 10 ppm or more, 20 ppm or more, 25 ppm or more, 30 ppm or more, 32 ppm or more, or 35 ppm or more. The content per 1% of acidity (acetic acid concentration) may satisfy the above definition.

In the acetic acid-containing food or drink of the present invention, the ratio of the content of acetoin to the content of the higher alcohol (component A) may be a predetermined value or less from the viewpoint of developing the depth of aroma. The ratio may be 39 or less, 35 or less, 29 or less, 27 or less, 24 or less, 20 or less, 18 or less, 15 or less, 13 or less, 10 or less, 8 or less, 7 or less, 6.5 or less, 6 or less, 5.5 or less, 4.9 or less, 4.5 or less, 4.0 or less, 3.5 or less, 3.0 or less, 2.5 or less, 2.0 or less, 1.6 or less, or 1.3 or less. The lower limit thereof is not particularly limited, and may be, for example, 0 or more, 0.01 or more, 0.05 or more, 0.1 or more, 0.5 or more, 0.75 or more, or 1.0 or more.

The component (A) is preferably at least one selected from the group consisting of isoamyl alcohol (component A1), isobutanol (component A2), butanol (component A3), propanol (component A4), and n-amyl alcohol (component A5), preferably two or more, preferably three or more, preferably four or more, and preferably all five. The higher alcohol preferably contains at least one of isoamyl alcohol (component A1) and isobutanol (component A2), and preferably contains isoamyl alcohol (component A1) and isobutanol (component A2).

In the acetic acid-containing food or drink of the present invention, the ratio of the content of acetoin to the content of isoamyl alcohol (component A1) may be a predetermined value or less. The ratio may be 100 or less, 90 or less, 80 or less, 70 or less, 60 or less, 50 or less, 40 or less, 30 or less, 29 or less, or 28 or less. The lower limit thereof is not particularly limited, and may be, for example, 0 or more, 0.01 or more, 0.05 or more, 0.1 or more, 0.5 or more, 1.0 or more, 1.5 or more, 2.0 or more, or 2.5 or more.

In the acetic acid-containing food or drink of the present invention, the ratio of the content of acetoin to the content of isobutanol (component A2) may be a predetermined value or less. The ratio may be 200 or less, 175 or less, 150 or less, 100 or less, 75 or less, 50 or less, 45 or less, or 40 or less. The lower limit thereof is not particularly limited, and may be, for example, 0 or more, 0.01 or more, 0.05 or more, 0.1 or more, 0.5 or more, 1.0 or more, 1.5 or more, or 2.0 or more.

In the acetic acid-containing food or drink of the present invention, the ratio of the content of acetoin to the content of butanol (component A3) may be a predetermined value or less. The ratio may be 100 or less, 90 or less, 80 or less, 70 or less, 60 or less, 50 or less, 40 or less, 30 or less, 20 or less, or 10 or less. The lower limit value is not particularly limited, and may be, for example, 0 or more.

In the acetic acid-containing food or drink of the present invention, the ratio of the content of acetoin to the content of propanol (component A4) may be a predetermined value or less. The ratio may be 2500 or less, 2000 or less, 1500 or less, 1000 or less, 950 or less, 940 or less, or 930 or less. The lower limit value is not particularly limited, and may be, for example, 0 or more.

In the acetic acid-containing food or drink of the present invention, the ratio of the content of acetoin to the content of n-amyl alcohol (component A5) may be a predetermined value or less. The ratio may be 1500 or less, 1000 or less, 750 or less, 600 or less, 500 or less, 450 or less, or 425 or less. The lower limit value is not particularly limited, and may be, for example, 0 or more.

The acetic acid-containing food or drink of the present invention may contain a predetermined amount of diacetyl (CAS #: 431-03-8, another name 2,3-Butanedione). The content of diacetyl in the acetic acid-containing food or drink of the present invention is measured using a GC (FID) method, specifically by the method described in Examples described later. The content of diacetyl may be 15 ppm or less, 13 ppm or less, 10 ppm or less, 8 ppm or less, 7.5 ppm or less, 6 ppm or less, 5 ppm or less, 4 ppm or less, or 3 ppm or less. The lower limit value is not particularly limited, and may be, for example, 0 ppm. The content per 1% of acidity (acetic acid concentration) may satisfy the above definition.

In the acetic acid-containing food or drink of the present invention, the ratio of the content of diacetyl to the content of the higher alcohol (component A) may be a predetermined value or less from the viewpoint of developing the depth of the aroma by containing diacetyl in addition to acetoin. The ratio may be 0.5 or less, 0.4 or less, 0.3 or less, 0.2 or less, 0.15 or less, 0.1 or less, 0.070 or less, 0.054 or less, 0.050 or less, 0.045 or less, 0.040 or less, 0.035 or less, 0.031 or less, 0.025 or less, or 0.020 or less. The lower limit value is not particularly limited, and may be, for example, 0. The component (A) is preferably at least one selected from the group consisting of isoamyl alcohol (component A1), isobutanol (component A2), butanol (component A3), propanol (component A4), and n-amyl alcohol (component A5), preferably two or more, preferably three or more, preferably four or more, and preferably all five. The higher alcohol preferably contains at least one of isoamyl alcohol (component A1) and isobutanol (component A2), and preferably contains isoamyl alcohol (component A1) and isobutanol (component A2).

In the acetic acid-containing food or drink of the present invention, the ratio of the content of diacetyl to the content of isoamyl alcohol (component A1) may be a predetermined value or less. The ratio may be 3.0 or less, 2.5 or less, 2.0 or less, 1.5 or less, 1.0 or less, 0.75 or less, 0.5 or less, 0.4 or less, 0.3 or less, or 0.25 or less. The lower limit value is not particularly limited, and may be, for example, 0.

In the acetic acid-containing food or drink of the present invention, the ratio of the content of diacetyl to the content of isobutanol (component A2) may be a predetermined value or less. The ratio may be 3.0 or less, 2.5 or less, 2.0 or less, 1.5 or less, 1.0 or less, 0.75 or less, 0.5 or less, 0.4 or less, or 0.3 or less. The lower limit value is not particularly limited, and may be, for example, 0.

In the acetic acid-containing food or drink of the present invention, the ratio of the content of diacetyl to the content of butanol (component A3) may be a predetermined value or less. The ratio may be 100 or less, 90 or less, or 80 or less. The lower limit value is not particularly limited, and may be, for example, 0.

In the acetic acid-containing food or drink of the present invention, the ratio of the content of diacetyl to the content of propanol (component A4) may be a predetermined value or less. The ratio may be 20 or less, 15 or less, 10 or less, 8.5 or less, 7.6 or less, 5.0 or less, 4.0 or less, 3.0 or less, 2.0 or less, 1.5 or less, 1.4 or less, 1.0 or less, 0.9 or less, 0.8 or less, 0.75 or less, 0.5 or less, or 0.25 or less. The lower limit value is not particularly limited, and may be, for example, 0.

In the acetic acid-containing food or drink of the present invention, the ratio of the content of diacetyl to the content of n-amyl alcohol (component A5) may be a predetermined value or less. The ratio may be 2.0 or less, 1.5 or less, 1.0 or less, 0.75 or less, 0.5 or less, 0.4 or less, 0.3 or less, 0.25 or less, 0.2 or less, or 0.18 or less. The lower limit value is not particularly limited, and may be, for example, 0.

In the acetic acid-containing food or drink of the present invention, a predetermined amount of lactic acid (CAS #: 50-21-5) which is a precursor of acetoin and diacetyl may be contained from the viewpoint of suppressing an acid odor. The content of lactic acid in the acetic acid-containing food or drink of the present invention is specifically measured by the method described in Examples described later using high-performance liquid chromatography (HPLC). The lactic acid content may be 100 w/v% or less, 95 w/v% or less, 90 w/v% or less, 85 w/v% or less, 80 w/v% or less, 75 w/v% or less, 70 w/v% or less, 65 w/v% or less, 60 w/v% or less, 50 w/v% or less, 45 w/v% or less, 40 w/v% or less, 35 w/v% or less, 30 w/v% or less, 25 w/v% or less, or 23 w/v% or less. The lower limit thereof is not particularly limited, and may be, for example, 0 w/v% or more, 0.01 w/v% or more, 0.1 w/v% or more, 0.25 w/v% or more, 0.5 w/v% or more, 0.75 w/v% or more, 1 w/v% or more, 1.1 w/v% or more, 1.2 w/v% or more, or 1.3 w/v% or more. The content per 1% of acidity (acetic acid concentration) may satisfy the above definition.

Examples of the "lactic acid" in the present invention include salts such as potassium lactate, calcium lactate, and sodium lactate, in addition to lactic acid. These lactic acids may be added to the acetic acid-containing food or drink of the present invention so as to be within a predetermined range, or may be adjusted to be within a predetermined range depending on lactic acid contained in milk, vinegar, or other raw materials blended in the acetic acid-containing food or drink.

In the acetic acid-containing food or drink of the present invention, the decane peak area ratio to acetic acid in the acetic acid-containing food or drink measured by the Analysis Method A may be larger than a predetermined value from the viewpoint of developing a fresh aroma. The ratio may be greater than 0, 0.000001 or more, 0.000005 or more, 0.00001 or more, 0.00005 or more, 0.0001 or more, 0.00025 or more, 0.0004 or more, 0.0005 or more, 0.0006 or more, 0.0007 or more, 0.001 or more, or 0.0015 or more. The upper limit thereof is not particularly limited, and may be, for example, 1000 or less, 900 or less, 800 or less, 700 or less, 600 or less, 500 or less, 250 or less, or 100 or less.

In the acetic acid-containing food or drink of the present invention, from the viewpoint of developing a heavy aroma, the decane peak area ratio to the higher alcohol (component A) in the acetic acid-containing food or drink measured by the Analysis Method A may be larger than a predetermined value. The ratio may be greater than 0, 0.000001 or more, 0.000005 or more, 0.00001 or more, 0.00005 or more, 0.0001 or more, 0.00025 or more, 0.0005 or more, 0.00075 or more, 0.001 or more, or 0.0015 or more. The upper limit thereof is not particularly limited, and may be, for example, 1000 or less, 900 or less, 800 or less, 700 or less, 600 or less, 500 or less, 250 or less, or 100 or less.

The component (A) is preferably at least one selected from the group consisting of isoamyl alcohol (component A1), isobutanol (component A2), butanol (component A3), propanol (component A4), and n-amyl alcohol (component A5), preferably two or more, preferably three or more, preferably four or more, and preferably all five. The higher alcohol preferably contains at least one of isoamyl alcohol (component A1) and isobutanol (component A2), and preferably contains isoamyl alcohol (component A1) and isobutanol (component A2).

In the acetic acid-containing food or drink of the present invention, the decane peak area ratio with respect to the isoamyl alcohol (component A1) in the acetic acid-containing food or drink measured by the Analysis Method A may be larger than a predetermined value. The ratio may be greater than 0, 0.000001 or more, 0.000005 or more, 0.00001 or more, 0.00005 or more, 0.0001 or more, 0.00025 or more, 0.0005 or more, 0.00075 or more, 0.001 or more, or 0.0015 or more. The upper limit thereof is not particularly limited, and may be, for example, 1000 or less, 900 or less, 800 or less, 700 or less, 600 or less, 500 or less, 250 or less, or 100 or less.

In the acetic acid-containing food or drink of the present invention, the decane peak area ratio with respect to isobutanol (component A2) in the acetic acid-containing food or drink measured by the Analysis Method A may be larger than a predetermined value. The ratio may be greater than 0, 0.000001 or more, 0.000005 or more, 0.00001 or more, 0.00005 or more, 0.0001 or more, 0.00025 or more, 0.0005 or more, 0.00075 or more, 0.001 or more, or 0.0013 or more. The upper limit thereof is not particularly limited, and may be, for example, 1000 or less, 900 or less, 800 or less, 700 or less, 600 or less, 500 or less, 250 or less, or 100 or less.

In the acetic acid-containing food or drink of the present invention, the decane peak area ratio to butanol (component A3), propanol (component A4), or n-amyl alcohol (component A5) in the acetic acid-containing food or drink measured by the Analysis Method A may be larger than a predetermined value. The ratio may be greater than 0, 0.000001 or more, 0.000005 or more, 0.00001 or more, 0.00005 or more, 0.0001 or more, 0.00025 or more, 0.0005 or more, 0.00075 or more, 0.001 or more, or 0.0015 or more. The upper limit thereof is not particularly limited, and may be, for example, 1000 or less, 900 or less, 800 or less, 700 or less, 600 or less, 500 or less, 250 or less, or 100 or less.

The peak areas of acetic acid, a higher alcohol, and decane of the acetic acid-containing food or drink of the present invention can be measured using the Analysis Method A.

### Analysis Method A

The components are separated and concentrated according to the following conditions.

100 g of the ultra-pure 2 fold diluted sample is weighed into a 1 L vial and sealed before preheating at 40°C for 30 min. The vapor phase in the vial was then introduced in an amount of 200 ml as a sample into a concentrator. In the concentrator, a volatile organic compound is concentrated by removing moisture and an atmospheric component from the sample collected in the vial, introduced into GC-MS, and used for analysis. Specifically, by passing the sample through M1 (Empty) and M2 (Tenax) cooled with liquid nitrogen, moisture is retained in M1 (Empty), the volatile organic compound is concentrated into M2 (Tenax), and the other components are broken. Thereafter, only the volatile organic compound is desorbed (Desorb), transferred to M3 (Cryofocus) by a carrier gas, trapped at -150°C, then desorbed (Desorb) by rapid heating, and introduced into GC. Volatile component concentrator
- M1 (Empty) temperature: Trap -40°C → Desorb 10°C
- M2 (Tenax) temperature: Trap -50°C → Desorb 220°C
- M3 (CryoFocus) temperature: Trap -150°C -> Desorb 80°C

The acetic acid-containing food or drink of the present invention may be vinegar. In the present invention, vinegar refers to a sour taste seasoning containing acetic acid as an active ingredient. Examples of vinegars include brewed vinegars, which are produced from grains such as rice or wheat or from fruit juice, and synthetic vinegars, which are produced by adding sugar or other seasonings to a diluted solution of glacial acetic acid or acetic acid or adding brewed vinegar thereto. Examples of brewed vinegars include rice vinegar, grain vinegar (e.g., brown rice vinegar, black vinegar, sake lees vinegar, malt vinegar, adlay vinegar, and soybean vinegar), fruit vinegar (e.g., cider vinegar, grape vinegar, citrus (such as lemon, Citrus junos, Citrus sphaerocarpa, orange, mandarin, Citrus depressa Hayata, grapefruit, and Citrus microcarpa) vinegar, mango vinegar, strawberry vinegar, blueberry vinegar, pomegranate vinegar, peach vinegar, Japanese plum vinegar, pineapple vinegar, wine vinegar, and balsamic vinegar), alcoholic vinegar produced by acetic acid fermentation using ethanol as a raw material, Chinese vinegar, sherry vinegar, and the like. Examples of synthetic vinegars include glacial acetic acid or acetic acid diluted with water as appropriate.

In addition, the alcohol used as a raw material of the vinegar of the present invention preferably meets the following (i) and/or (ii) and/or (iii) .
(i) The alcohol used as a raw material of the vinegar of the present invention may contain an alcohol having a distillation step in the production process to a certain extent or less. The content may be 50 mass% or less, 40 mass% or less, 30 mass% or less, 20 mass% or less, 10 mass% or less, 5 mass% or less, 1 mass% or less, or 0 mass%.
(ii) The alcohol used as a raw material of the vinegar of the present invention may be obtained by alcoholic fermentation of a carbohydrate. The carbon source of the alcohol used as a raw material of the vinegar may be cereals (rice, wheat, barley, corn, etc.), sake cake, fruits (apple, grape, etc.), vegetables, other agricultural products, or honey, and the carbon source is preferably derived from a single plant. The carbon source described above is a carbohydrate that contributes to alcohol production.
(iii) The vinegar of the present invention is preferably one that is specified as "pure OO vinegar" in the quality labelling standard (Ministry of Agriculture, Forestry and Fisheries Notification of Japan Notification No. 1507 on October 16, 2008).

The properties and state of the acetic acid-containing food or drink of the present invention are not particularly limited as long as they are those that the food or drink can take. For example, the acetic acid-containing food or drink of the present invention is in the form of a liquid, emulsion, gel, foam, solid, powder, and the like. Among them, liquid, emulsified liquid, gel, and foam are preferable from the viewpoint of being particularly suitable as the acetic acid-containing food or drink of the present invention because of the property in which throat irritation is easily felt. The acetic acid-containing food or drink of the present invention encompasses those in a single form and those composed of any combination of foods and drinks in multiple forms.

The acetic acid-containing food or drink is not particularly limited, and examples includes a food or drink to be eaten or drunk as is, a composition for preparing a food or drink to be eaten or drunk (i.e., a composition to be used for preparing a food or drink to be eaten or drunk as is), and the like. The phrase "food or drink to be eaten or drunk as is" include not only a food or drink to be eaten or drunk without adding any components, but also a food or drink to be eaten or drunk with a seasoning appropriately added as necessary by a person who eats or drinks the food or drink at the time of eating or drinking.

Examples of the food or drink to be eaten or drunk as is include, but are not limited to, drinks, confectionery, cooked rice, noodles, prepared foods, soups, bread, pizza, cereals, packed lunches, and the like. Among them, drinks and rice are preferable, and drinks are particularly preferable.

Examples of drinks include fruit juice-containing beverages, such as fruit juices, flavored beverages, flavored water, beauty drinks, and smoothies of citrus fruits (e.g., mandarin, orange, lemon, lime, grapefruit, Citrus junos, Citrus sphaerocarpa, Citrus sudachi, bergamot, pink grapefruit, Citrus hassaku, Citrus microcarpa, Citrus depressa Hayata), tropical fruits (e.g., pineapple, banana, guava, mango, acerola, papaya, and passion fruit), litchee, strawberry, apple, peach, grape (e.g., white grape, red grape) cassis, raspberry, pomegranate, Japanese plum, pear, apricot, Asian plum, kiwifruit, melon, blueberry, and acai; dairy product-containing beverages, such as milk and beverages containing milk or milk components (e.g., processed products of milk, such as skimmed milk powder, whole milk powder, milk concentrate, yogurt, dairy cream, condensed milk, butter, skimmed milk, cream powder, sweetened milk powder, modified milk powder, whey powder, and buttermilk powder); vegetable beverages, such as juices, smoothies, and aojiru (green juice) of tomato, carrot, pumpkin, and the like; soft drinks, such as sports drinks, flavored beverages (e.g., lemonade), and fruit-flavored drinks; carbonated drinks; jelly beverages; grain beverages, such as grain beverages containing rice, soy milk, or almonds as a main ingredient; tea beverages, such as red tea, oolong tea, green tea, black tea, matcha tea, jasmine tea, rose hip tea, chamomile tea, and hojicha (Japanese green tea), and blended tea (e.g., pearl barley, barley, brown rice, soybeans, corn, and other grains, persimmon leaves, loquat leaves, leaves of kuma bamboo grass, Gynostemma pentaphyllum, ashitaba (Angelica keiskei), and dokudami (Houttuynia cordata), kelp, safflower, shiitake mushroom, and Litchi chinensis); coffee beverages; powdered beverages, such as cocoa and aojiru; alcoholic beverages, such as beers, beer-taste beverages (e.g., low-malt beers), fruit wines, sake, and other brewed liquors, shochu (Japanese distilled liquor), whiskey, brandy, spirits, and other distilled liquors, liqueurs, which are made by mixing a distilled liquor and saccharides etc. as a secondary ingredient, and other mixed alcoholic beverages, cocktails, fizzes, and chuhai, which are made by further adding fruit juices, flavors, carbon dioxide, etc. to those alcoholic beverages; and the like. Of these, for example, fruit juice-containing beverages are preferable. When the acetic acid-containing food or drink of the present invention is a fruit juice-containing drink or when a fruit juice-containing drink is produced using the acetic acid-containing food or drink (for example, vinegar) of the present invention, it is possible to enhance the fruit juice feeling of the fruit juice-containing drink (the flavor of the fruit juice at the time of drinking) and to suppress the deterioration odor of the fruit juice when the fruit juice-containing drink is stored for a long period of time (the grassy smell due to deterioration of the fruit juice or the like in the presence of acetic acid). Although the detailed mechanism is unknown, it is presumed that the aroma developed by adjusting the contents of component A and component B in the acetic acid-containing food or drink and the ratio thereof within the range disclosed in the present specification does not suppress the taste and aroma of the fruit juice itself, and has an effect of masking an unpleasant odor such as a stuffy odor and a fruit deterioration odor. These effects can solve two conflicting problems in a fruit juice-containing drink, that is, a weak fruit juice feeling due to a low fruit juice content and a strong deterioration odor of fruit juice after long-term storage due to a high fruit juice content, and are extremely qualitatively different and useful effects.

Confectionery refers to foods produced or prepared as luxury foods for taste sensation, such as olfactory sensation, with various smells by emphasizing the taste, such as sweetness or saltiness, or by improving a tactile sensation, such as mouthfeel. Specific examples include jellies, puddings, chocolate, bar (snack bar), frozen desserts (e.g., ice cream and sherbet), and the like. Of these, for example, jellies and frozen desserts (e.g., ice cream and sherbet) are preferable; and in particular, for example, jellies are particularly preferable.

Examples of cooked rice include white rice, salted rice, red bean rice, okowa (sticky glutinous rice), seasoned rice, mixed rice, rice balls, sushi rice, rice cakes, dumplings, and the like. Examples of "rice" include uruchimai (ordinary Japanese rice), glutinous rice, no-wash rice having different degrees of polishing, brown rice, and the like. Other examples include foods prepared using cooked rice and other ingredients, such as sushi, chirashi-sushi, curry and rice, rice bowl dishes, fried rice, tenshinhan (crab meat omelet on rice), and the like.

Noodles are foods that are made from dough made mainly from wheat flour, rice flour, buckwheat flour, beans, or other grain flours, and formed or processed into the shape of noodles, plates, ribbons, or the like; and that are cooked by boiling, simmering, or steaming. Noodles are not particularly limited in this regard. Examples include soba (buckwheat noodles), udon (wheat noodles), kishimen (noodles made in flat strips), ramen, Chinese noodles, pasta, macaroni, somen (thin noodles), pho, Korean cold noodles, glass noodles, and the like.

Prepared foods are foods obtained by cooking ingredients such as meat, seafood, eggs, milk, vegetables, fruits, herbs, and seaweed in an appropriate manner. Examples of prepared foods include pickles, simmered foods, grilled foods, fried foods, stir-fried foods, steamed foods, aemono (dressed dishes), and the like. Specific examples include sweet-and-sour pork, vinegared dishes, vinegar pickles, and the like.

Soups are water-rich foods obtained by cooking ingredients such as meat, seafood, eggs, milk, vegetables, fruits, herbs, and seaweed in an appropriate manner. Specific examples of soups include minestrone, suan la tang, paitan soup (white broth), jjigae soup (Korean stew), and the like.

Bread is a food with a moisture content of 10% or more made by kneading and fermenting a mixture obtained by adding yeast to the main ingredient (wheat flour, or a mixture of wheat flour and grain flour), or a mixture obtained by adding ingredients, such as water, salt, fruits (e.g., grapes), vegetables, eggs and processed products thereof, sugar, edible oils and fats, milk, and dairy products, to the mixture of the main ingredient and yeast, to prepare a dough (hereinafter referred to as "bread dough"); and baking the bread dough. Specific examples of bread include loaves of bread made by baking bread dough in a loaf pan (a rectangular parallelepiped or cylindrical pan); sweet buns made by wrapping or inserting bean paste, cream, jam, edible oils and fats, or the like in bread dough, or placing bean paste, cream, jam, edible oils and fats, or the like on the top of bread dough and baking the resulting bread dough; and the like.

Pizza is a food made by kneading wheat flour, water, salt, yeast, sugar, and a small amount of olive oil, fermenting the mixture to prepare a dough, stretching the dough thinly into a round shape, topping the dough with ingredients, and baking the dough topped with ingredients in an oven or special oven.

Cereals are simple foods made by processing grains, such as corn, oats, wheat, barley, and rice, by cooking with heat (e.g., crushing grains into thin pieces (flakes), processing grains into a puffy form (puffing grains), or mixing grains and forming the mixture into a sheet shape, followed by crushing) to make them easier to eat and to make them in a form suitable for long-term storage.

Packed lunches are not particularly limited as long as they are one or more of the above-mentioned foods and drinks arranged in a container.

The composition for preparing a food or drink to be eaten or drunk is not particularly limited, and examples thereof include compositions for preparing a drink, dessert sauce or cream, seasonings, retort foods, and the like. Of these, for example, compositions for preparing a drink, dessert sauce or cream, seasonings, and the like are preferable, and compositions for preparing a drink are more preferable.

Examples of compositions for preparing a drink include a concentrated type of drink. This type is diluted with a suitable drink (e.g., water or a drink mentioned above) and then served for drinking. The recommended dilution factor is, for example, 1.1- to 50-fold, preferably 2-to 20-fold, more preferably 3- to 12-fold, and even more preferably 4- to 8-fold.

Dessert sauce or cream is a liquid, powdery or semisolid sauce or cream that is poured on, placed on, or mixed with drinks or confectionery (e.g., jellies, cakes, and ice cream) to add flavor, texture, or color to desserts. Specific examples include caramel sauce, custard sauce, chocolate sauce, fruit sauces such as raspberry sauce, strawberry sauce, blueberry sauce, apple sauce, and pomegranate sauce, and the like.

Examples of seasonings include, but are not limited to, sauces (e.g., yakiniku (grilled meat cuisine) sauces and sesame sauces and other sesame-containing seasonings), dressings (e.g., non-oil dressing, separated dressing, and emulsified dressing), seasoning vinegar (e.g., general-purpose seasoning vinegar, seasoning vinegar for vinegared dishes, seasoning vinegar for sushi rice, seasoning liquids for pickling (e.g., for pickles), and sweet vinegar), cooked rice seasonings, ponzu seasonings, dashi-containing seasonings (e.g., mentsuyu (soup bases) and hot-pot soup bases), natto seasonings, pickling seasonings, meat seasonings, vinegar, Worcestershire sauces, ketchup, oyster sauces, salsa, sambal sauces, chili sauces, spicy-spice-containing seasonings, chutney, mustard, mayonnaise, and the like.

Retort foods are not particularly limited as long as they are obtained by packaging cooked or semi-cooked foods inside a retort pouch or a can. Examples of foods to be packaged include the above-mentioned foods themselves, foods with which the above-mentioned foods can be obtained by simple cooking (for example, by adding ingredients and cooking with heat), and the like.

The acetic acid-containing food or drink of the present invention can contain other materials according to the type of food or drink. Examples of the other materials include water, saccharides (including high-intensity sweeteners), crushed fruits and vegetables obtained by cutting, grating, or other processes (e.g., squeezed juice such as fruit juice and vegetable juice, puree, and paste), flavors, vinegar, salt, amino acid-based seasonings, nucleic acid-based seasonings, organic acid-based seasonings (or acidulants), acidulants, flavor materials, umami seasonings, alcoholic beverages, fats and oils, spicy seasonings, spicy seasoning extracts, flavoring oils, viscosity adjusters, stabilizers, coloring agents, calcium salts, ingredients, and the like. The combinations and contents of these other materials are not particularly limited and can be appropriately set according to the type of food or drink.

The other raw materials can be suitably used particularly in drinks, compositions for preparing drinks, seasonings, and dessert sauces. Examples of other materials that can be suitably used, particularly in drinks and compositions for preparing a drink include water, saccharides (including high-intensity sweeteners), crushed fruits and vegetables obtained by cutting, grating, or other processes (e.g., squeezed juice such as fruit juice and vegetable juice, puree, and paste), flavors, vinegar, salt, stabilizers, coloring agents, calcium salts, amino acid-based seasonings, nucleic acid-based seasonings, organic acid-based seasonings (or acidulants), flavor materials, umami seasonings, alcoholic beverages, and the like.

In one aspect of the present invention, the acetic acid-containing food or drink of the present invention preferably contains fruit juice. As the fruit juice, for example, fruit juice derived from fruit described later can be used. Preferably, strawberry juice, apple juice, citrus fruits (e.g., mandarin, orange, lemon, lime, grapefruit, Citrus junos, Citrus sphaerocarpa, Citrus sudachi, bergamot, pink grapefruit, Citrus hassaku, Citrus microcarpa, Citrus depressa Hayata) juice, pomegranate juice, peach juice, grape (e.g., white grape, red grape) juice, blueberry juice, raspberry juice, pineapple juice, mango juice and the like can be used. Especially preferably, orange juice, lemon juice, grapefruit juice, pink grapefruit juice, pomegranate juice, peach juice, white grape juice, red grape juice, and raspberry juice can be used. Particularly preferably, apple juice can be used. The white grape refers to a grape whose peel is yellowish green or green, and examples thereof include varieties such as Chardonnay, Sauvignon Blanc, Riesling, Semillon, Viognier, and Muscat of Alexandria. The red grape refers to a grape whose peel is black, purple, or red, and examples thereof include varieties such as Cabernet Sauvignon, Merlot, Pinot noir, Muscat berry A, Syrah, Kyoho grape, Concord grape, Tempranillo, and Carmenere. The fruit juice is not limited thereto, and may be used singly or in any combination of two or more at any ratio, and for example, pomegranate juice and peach juice, apple juice and white grape juice, grapefruit juice and lemon juice and lime juice, blueberry juice and raspberry juice and red grape juice, orange juice and pineapple juice and mango juice can be combined. When the acetic acid-containing food or drink of the present invention is a fruit juice-containing acetic acid-containing food or drink or when the acetic acid-containing food or drink of the present invention is used as a raw material for an acetic acid-containing food or drink containing fruit juice to enhance the fruit juice feeling of the acetic acid-containing food or drink and the food or drink is stored for a long period of time, the deterioration odor derived from fruit juice can be suppressed.

The fruit juice content (on a not-from-concentrate fruit juice basis) in the acetic acid-containing food or drink of the present invention is not particularly limited, and is usually 0.1 to 1000 mass%, more preferably 0.15 to 900 mass%, and still preferably 0.2 to 900 mass% from the viewpoint of the advantage of adding fruit juice and ease of preparation. The upper limit or lower limit of the content can be a lower value or a higher value than the above range, and these values may be, for example, 1 mass%, 2 mass%, 3 mass%, 5 mass%, or 10 mass%, 50 mass%, 100 mass%, 150 mass%, 200 mass%, 250 mass%, 300 mass%, 400 mass%, 500 mass%, 600 mass%, 700 mass%, and 800 mass%. As an example, the lower limit of the content can be, for example, 1 mass% or more, 2 mass% or more, 3 mass% or more, 5 mass% or more, or 10 mass% or more, and the upper limit of the content can be 50 mass% or less, 100 mass% or less, 150 mass% or less, 200 mass% or less, 250 mass% or less, 300 mass% or less, 400 mass% or less, 500 mass% or less, 600 mass% or less, 700 mass% or less, or 800 mass% or less. The fruit juice content (on a not-from-concentrate fruit juice basis) refers to the mass% concentration based on not-from-concentrate fruit juice, which is obtained by squeezing a fruit, taken as 100%, and can be calculated by multiplying the fruit juice content (mass%) in a food or drink by the concentration ratio of the fruit juice. For example, when apple juice with a concentration ratio of 5-fold is added in an amount of 10 mass% to a food or drink, the fruit juice content (on a not-from-concentrate fruit juice basis) is 50 mass%. In addition, the concentration ratio of each fruit juice can be converted, for example, on the basis of the standard of refractometer reading for sugar or the standard of acidity of straight fruit juice of various fruits shown in JAS standard (Japanese Agricultural Standards of fruit drinks, December 24, 2013, Ministry of Agriculture, Forestry and Fisheries Notification of Japan Notification No. 3118).

When the acetic acid-containing food or drink of the present invention is a drink or a composition for preparing a drink, the pH thereof is not particularly limited as long as it is an acidic value (less than 7). The pH is generally determined from the viewpoint of the balance between flavor and taste. Although it is not particularly limited, the pH is generally 2.0 or more, preferably 2.2 or more, and more preferably 2.3 or more, and the pH is also generally 4.6 or less, preferably 4.5 or less, and more preferably 4.4 or less.

Examples of saccharides include sugar, maltose, fructose, isomerized liquid sugar, glucose, brown cane sugar, honey, mizuame (syrup), dextrin, lactose, galactose, and sugar alcohols such as sorbitol, maltitol, and xylitol. These saccharides may be used singly or in any combination of two or more at any ratio.

Examples of high-intensity sweeteners include aspartame, acesulfame potassium, sucralose, neotame, licorice extract, stevia, and enzyme-treated products thereof. These high-intensity sweeteners may be used singly or in any combination of two or more at any ratio.

Examples of the fruit include fruits derived from apple, peach, grape (e.g., white grape, red grape), acerola, blueberry, pear, apricot, citrus (e.g., orange, lemon, Citrus junos, Citrus sphaerocarpa, orange, grapefruits, pink grapefruits, Citrus hassaku, and Citrus microcarpa, Citrus depressa Hayata), strawberry, pineapple, banana, melon, kiwi fruit, cassis, apricot, guava, plum, mango, papaya, litchee, Japanese plum, pomegranate, açai, raspberry, white grape, bergamot, passion fruit, Citrus microcarpa, and the like. Among them, apple, blueberry, citrus, strawberry, pomegranate, grape, peach, Japanese plum, mango, pineapple, banana, litchee, and the like can be preferably used, strawberry, apple, citrus (e.g., mandarin, orange, lemon, lime, grapefruit, Citrus junos, Citrus sphaerocarpa, cedar, bergamot, pink grapefruit, Citrus hassaku, Citrus microcarpa, and Citrus depressa Hayata), pomegranate, peach, grape (e.g., white grape, red grape), blueberry, raspberry, pineapple, mango, and the like can be more preferably used, and apple, orange, lemon, grapefruit, pink grapefruit, pomegranate, peach, white grape, red grape, raspberry, and the like can be especially preferably used, and apple can be particularly preferably used. The fruits are not limited thereto, and may be used singly or in any combination of two or more at any ratio, and for example, pomegranate and peach, apple and white grape, grapefruit and lemon and lime, blueberry and raspberry and red grape, orange and pineapple and mango can be combined.

Examples of vegetables include, but are not limited to, those derived from fruit vegetables (e.g., tomato, pepper, bell pepper, cucumber, eggplant, red bell pepper, pumpkin, soybean, and green soybean), root vegetables (e.g., ginger, garlic, radish, corn, carrot, and beet), leaf vegetables (e.g., onion, cabbage, lettuce, spinach, Chinese cabbage, celery, komatsuna (Japanese mustard spinach), bok choy, mulukhiyah, kale, perilla, Chinese chive, parsley, and Welsh onion), stem vegetables (e.g., garlic, asparagus, and bamboo shoot), flower vegetables (e.g., broccoli and cauliflower), mushrooms, and the like. These vegetables may be used singly or in any combination of two or more at any ratio. Of these, tomato, bell pepper, red bell pepper, pumpkin, soybean, green soybean, ginger, corn, carrot, beet, spinach, kale, perilla, and broccoli can be preferably used; tomato, bell pepper, pumpkin, corn, beet, and carrot can be more still preferably used; and tomato, carrot, and beet can be particularly preferably used. The vegetable juice is preferably tomato juice, carrot juice, corn juice, beet juice, kale juice, spinach juice, ginger juice, soy milk, and the like, particularly preferably tomato juice, ginger juice, soy milk, and the like, and still preferably tomato juice. In addition, squeezed juices (fruit juices and vegetable juices), purees, pastes, and the like, obtained from these vegetables and fruits may be blended into the acetic acid-containing food or drink of the present invention singly or in any combination of two or more at any ratio, and for example, tomato juice, ginger juice, and soy milk may be contained, and apple juice may be further contained.

Examples of flavors include grape flavors, apple flavors, lemon flavors, orange flavors, grapefruit flavors, Citrus junos flavors, Citrus sudachi flavors, blueberry flavors, Japanese plum flavors, cassis flavors, pomegranate flavors, peach flavors, raspberry flavors, strawberry flavors, mango flavors, pineapple flavors, banana flavors, litchee flavors, milk flavors such as yogurt flavors, rose hip flavors, chamomile flavors, jasmine flavors, ginger flavors, garlic flavors, mustard flavors, onion flavors, sesame flavors, Welsh onion flavors, Chinese chive flavors, perilla flavors, wasabi flavors, and the like. These flavors may be used singly or in any combination of two or more at any ratio.

When the fruit juice-containing acetic acid-containing food or drink of the present invention is an aspect of a fruit juice-containing drink blended with apple juice, the effect of enhancing the fruit juice feeling of the fruit juice-containing acetic acid-containing drink and suppressing a deterioration odor derived from fruit juice when the drink is stored for a long period of time is especially large, and even when saccharides, a high-intensity sweetener, or a flavor is not added to the drink, it is possible to obtain a drink having preferable characteristics for drinking in which a stuffy odor is weak, a fruit juice feeling is strong, and a fruit deterioration odor is suppressed.

The acetic acid-containing food or drink of the present invention has an effect of enhancing sweetness and umami taste derived from raw materials. Therefore, the acetic acid-containing food or drink of the present invention can be suitably used not only for the drink as described above but also for seasonings, daily dishes, and rice using raw materials having umami taste. The effect of enhancing umami taste and sweetness of the acetic acid-containing food or drink can be enhanced without increasing the amount of an amino acid or saccharides added by adjusting the contents of component A and component B in the acetic acid-containing food or drink and the ratio thereof within the range disclosed in the present specification is extremely qualitatively different effects.

Salts may be used as is or may be a food containing salt. Examples of foods containing salt include, but are not limited to, soy sauce, miso (fermented soybean paste), soup stock, and the like.

Examples of soy sauces include, but are not limited to, koikuchi (dark-colored) soy sauce, usukuchi (light-colored) soy sauce, white soy sauce, tamari (thick) soy sauce, saishikomi (refermented) soy sauce, and the like. These soy sauces may be used singly or in any combination of two or more at any ratio.

Examples of misos include, but are not limited to, barley miso, rice miso, bean miso, mixed miso, as well as dark-brown miso, white miso, light-colored miso, etc., named according to the difference in color caused by the production method therefor. These misos may be used singly or in any combination of two or more at any ratio.

Examples of amino acid-based seasonings include sodium L-glutamate, DL-alanine, glycine, L- or DL-tryptophan, L-phenylalanine, L- or DL-methionine, L-lysine, L-aspartic acid, sodium L-aspartate, L-arginine, and the like. These amino acid-based seasonings may be used singly or in any combination of two or more at any ratio.

Examples of nucleic acid-based seasonings include disodium 5'-inosinate, disodium 5'-guanylate, disodium 5'-uridylate, disodium 5'-cytidylate, calcium 5'-ribonucleotide, disodium 5'-ribonucleotide, and the like. These nucleic acid-based seasonings may be used singly or in any combination of two or more at any ratio.

Examples of organic acid-based seasonings include calcium citrate, trisodium citrate, potassium gluconate, sodium gluconate, succinic acid, monosodium succinate, disodium succinate, sodium acetate, potassium DL-bitartrate, potassium L-bitartrate, sodium DL-tartrate, sodium L-tartrate, potassium lactate, calcium lactate, sodium lactate, monosodium fumarate, sodium DL-malate, and the like. These organic acid-based seasonings may be used singly or in any combination of two or more at any ratio. Use of two or more organic acid-based seasonings is preferable, because the tastes of the seasonings are enhanced synergistically.

Examples of acidulants include lactic acid, malic acid, citric acid, gluconic acid, succinic acid, tartaric acid, phytic acid, fumaric acid, phosphoric acid, and the like. These acidulants may be used singly or in any combination of two or more at any ratio.

Examples of flavor materials include soup stock made from bonito, soup stock made from kelp, vegetable extract, bonito extract, kelp extract, seafood extract, meat extract, and the like. These flavor materials may be used singly or in any combination of two or more at any ratio.

Examples of umami seasonings include protein hydrolysates, yeast extracts, and the like. These umami seasonings may be used singly or in any combination of two or more at any ratio.

Examples of alcoholic beverages include sake, synthetic sake, mirin (sweet cooking rice wine), shochu (Japanese distilled liquor), wine, liqueur, Shaoxing rice wine, and the like. These alcoholic beverages may be used singly or in any combination of two or more at any ratio.

Examples of fats and oils include soybean oil, soybean germ oil, rapeseed oil, corn oil, sesame oil, perilla oil, linseed oil, peanut oil, safflower oil, high oleic safflower oil, sunflower oil, cottonseed oil, grape seed oil, macadamia nut oil, hazelnut oil, pumpkin seed oil, walnut oil, camellia oil, Camellia sinensis seed oil, perilla oil, olive oil, rice-bran oil, wheat germ oil, palm oil, alga oil, and the like. These fats and oils may be used singly or in any combination of two or more at any ratio.

Spicy seasonings refer to plant parts (e.g., fruits, pericarps, flowers, buds, barks, stems, leaves, seeds, roots, rhizomes, or the like of plants) that have specific aromas, pungent tastes, and/or color tones, and are added to foods or drinks for the purpose of flavoring, deodorizing, seasoning, coloring, or the like. Spicy seasonings include spices and herbs. Spices refer to spicy seasonings derived from plant parts other than stems, leaves, and flowers. Examples of spices include pepper (black pepper, white pepper, and red pepper), garlic, ginger, sesame (sesame seed), chili pepper, horseradish, mustard, Citrus junos, nutmeg, cinnamon, paprika, cardamom, cumin, saffron, allspice, clove, sansho (Japanese pepper), orange peel, fennel, licorice, fenugreek, dill seed, Sichuan pepper, long pepper, olive fruit, and the like. Herbs refer to spicy seasonings derived from stems, leaves, or flowers. Examples of herbs include watercress, coriander, perilla, celery, tarragon, chive, chervil, sage, thyme, laurel, Chinese chive, parsley, mustard green (leaf mustard), myoga (Japanese ginger), mugwort, basil, oregano, rosemary, peppermint, savory, lemongrass, dill, wasabi leaf, sansho (Japanese pepper) leaf, and the like.

Spicy seasoning extracts may be any extracts of foods generally labeled as "spicy seasonings" or "spices." Examples of spicy seasoning extracts include chili pepper extract, mustard extract, ginger extract, wasabi extract, pepper extract, garlic extract, onion extract, sansho (Japanese pepper) extract, and the like. These spicy seasoning extracts may be used singly or in any combination of two or more at any ratio.

Examples of flavoring oils include ginger oil, garlic oil, mustard oil, onion oil, sesame oil, Welsh onion oil, Chinese chive oil, seri (Japanese parsley) oil, perilla oil, wasabi oil, lemon oil, Citrus junos oil, seafood oil, meat oil, and the like. These flavoring oils may be used singly or in any combination of two or more at any ratio.

Examples of viscosity adjusters include xanthan gum, guar gum, gellan gum, gum arabic, tamarind seed gum, tara gum, gum tragacanth, pectin, cellulose, carrageenan, agar, starch, alginic acid, sodium alginate, karaya gum, pullulan, chitin, chitosan, and the like. These viscosity adjusters may be used singly or in any combination of two or more at any ratio.

Examples of ingredients include vegetables (e.g., carrot, burdock, and radish), grains (e.g., adzuki bean and soybean), meat, fishes, and the like. These ingredients may be used singly or in any combination of two or more at any ratio.

In one aspect, the acetic acid-containing food or drink of the present invention can be used for preparing an acetic acid-containing food or drink. The acetic acid-containing food or drink is as described above. In a preferred aspect, the acetic acid-containing food or drink of the present invention can be used for preparing at least one acetic acid-containing food or drink selected from the group consisting of vinegar, drinks, seasoning, a dessert sauce, and rice.

### Examples

The present invention is described in detail below with reference to Examples. However, the present invention is not limited thereto.

### Test Example 1. Flavor Evaluation Test 1 (Study on influence of ratio of component A and component B in acetic acid-containing food or drink on stuffy odor, pungent odor and rich aroma)

First, a diluted solution of the component to be evaluated was prepared. Various components of isoamyl alcohol (component A1) (reagent name: 3-Methyl-1 butanol, manufactured by Inoue Perfumery MFG. Co., Ltd., food additive, product code: 0002051, purity: 98.0% or higher, CAS #: 123-51-3), isobutanol (component A2) (reagent name: 2-Methylpropan-1-ol, manufactured by Inoue Perfumery MFG. Co., Ltd., food additive, product code: 0002092, purity: 98.0% or higher, CAS #: 78-83-1), butanol (component A3) (reagent name: 1-Butanol, manufactured by Inoue Perfumery MFG. Co., Ltd., food additive, product code: 0002093, purity: 99.5% or higher, CAS #: 71-36-3), propanol (component A4) (reagent name: Propan-1-ol, manufactured by Inoue Perfumery MFG. Co., Ltd., food additive, product code: 0002768, purity: 99.0% or higher, CAS #: 71-23-8), and n-amyl alcohol (component A5) (reagent name: Pentan-1-ol, manufactured by Inoue Perfumery MFG. Co., Ltd., food additive, product code: 0002052, purity: 98.0% or higher, CAS #: 71-41-0) were each added to a 70% ethanol aqueous solution, and sufficiently stirred to prepare a 100,000 ppm solution. The solution was appropriately diluted with ion-exchanged water to obtain a diluted solution of the component to be evaluated (diluent 1). Subsequently, acetic acid (grade: special grade, purity of 99.7% or higher, produced by Kanto Chemical Co., Ltd.) was added to ion-exchanged water and sufficiently stirred to prepare a 10% solution, and various components of isovaleric acid (component B1) (reagent name: 3-Methylbutanoic acid, produced by Inoue Perfumery MFG. Co., Ltd., food additive, product code: 0002512, purity: 98.0% or higher, CAS #: 503-74-2), isobutyric acid (component B2) (reagent name: 2-Methylpropanoic acid, produced by Inoue Perfumery MFG. Co., Ltd., food additive, product code: 0002102, purity: 98.0% or higher, CAS #: 79-31-2), butyric acid (component B3) (reagent name: Butanoic acid, produced by Inoue Perfumery MFG. Co., Ltd., food additive, product code: 0002169, purity: 99.0% or higher, CAS #: 107-92-6), propionic acid (component B4) (reagent name: Propanoic acid, produced by Inoue Perfumery MFG. Co., Ltd., food additive, product code: 0002433, purity: 99.5% or higher, CAS #: 79-09-4), and valeric acid (component B5) (reagent name: Pentanoic acid, produced by Inoue Perfumery MFG. Co., Ltd., food additive, product code: 0002627, purity: 98.0% or higher, CAS #: 109-52-4) were added to the 10% acetic acid aqueous solution, sufficiently stirred, and appropriately diluted with ion-exchanged water so as to have acidity of 10%, 5%, and 1%, thereby obtaining a diluted solutions of the component to be evaluated (diluent 2). Subsequently, the diluted solutions of the respective components to be evaluated (diluent 1 and diluent 2) were mixed and sufficiently stirred to prepare test solutions (Comparative Examples 1 to 3, Examples 1 to 62) having compounding compositions and concentrations shown in Table 1. In Test Example 1 to 3, anhydrous ethanol was appropriately added to test solutions having an acidity of 5 w/v% or 10 w/v% so that the ethanol content in the test solution was 0.2%, and anhydrous ethanol was appropriately added to test solutions having an acidity of 1 w/v% so that the ethanol content in the test solution was 0.04%. In addition, each test solution was sealed in a container and allowed to stand at 25°C for 1 day after the component preparation in order to stabilize the aroma.

For each test solution, based on comparison with the evaluation of the control (Comparative Example), scores were given for stuffy odor, pungent odor, rich aroma, and overall odor based on them according to the following criteria for evaluation, and the average score was calculated. The control of Examples 1 to 26 is Comparative Example 1, the control of Examples 27 to 48 is Comparative Example 2, and the control of Examples 49 to 62 is Comparative Example 3. Prior to the evaluation, in Comparative Example 1, Comparative Example 2, and Comparative Example 3, it was confirmed that a stuffy odor was strongly felt, and a rich aroma was not felt.

The flavor evaluation was specifically performed as follows. 10 ml of a test solution or a control was placed in a sensory testing glass tinted so that the color of the contents was invisible. The glass was then covered with a Petri dish or the like as a lid. After the glass was turned around several times in this state, the lid was opened and odor was smelled to evaluate a stuffy odor, pungent odor and rich aroma based on the following criteria. In addition, the overall aroma quality felt from a stuffy odor, pungent odor, rich aroma, and the like was evaluated as a comprehensive evaluation. Once the smell disappeared from the nasal cavity, the next sample evaluation was performed.

### Criteria for evaluation of stuffy odor

+3: Significantly less stuffy odor than the control.
+2: Less stuffy odor than the control.
+1: Slightly less stuffy odor than the control.
± 0: Stuffy odor is equivalent to that of the control.
   - 1: Slightly strong stuffy odor as compared to the control.
   - 2: Strong stuffy odor as compared to the control.
   - 3: Very strong stuffy odor as compared to the control.

### Criteria for evaluation of pungent odor

+3: Significantly less pungent odor than the control.
+2: Less pungent odor than the control.
+1: Slightly less pungent odor than the control.
± 0: Stuffy odor is equivalent to that of the control.
   - 1: Slightly strong pungent odor as compared to the control.
   - 2: Strong pungent odor as compared to the control.
   - 3: Very strong pungent odor as compared to the control.

### Criteria for evaluation for rich aroma

+3: Very strong rich aroma as compared to the control.
+2: Strong rich aroma as compared to the control.
+1: Slightly strong rich aroma as compared to the control.
± 0: Stuffy odor is equivalent to that of the control.
   - 1: Slightly less rich aroma than the control.
   - 2: Less rich aroma than the control.
   - 3: Significantly less rich aroma than the control.

### Comprehensive evaluation

+3: Significantly better aroma than the control.
+2: Better aroma than control.
+1: Slightly better aroma than the control.
± 0: Stuffy odor is equivalent to that of the control.
   - 1: Slightly worse aroma than the control.
   - 2: Worse aroma than the control.
   - 3: Significantly worse aroma than the control.

All flavor evaluation tests described herein were performed by evaluation by 10 expert panelists whose ability to judge flavor had been proven in certain tests. The certain tests in flavor refer to the identification tests described below in 1) and 2). Persons who particularly performed well in the identification tests were defined as expert panelists. The panelists selected were skilled panelists who had worked as sensory inspectors for 10 years or more.

Identification Test 1): a taste identification test in which aqueous solutions of five taste components (sweet taste: taste of sugar, sour taste: taste of tartaric acid, umami taste: taste of sodium glutamate, salty taste: taste of sodium chloride, and bitter taste: taste of caffeine) at a concentration close to each component's threshold are prepared, and whether the five taste samples can be accurately identified from a total of seven samples including two distilled water samples in addition to the solutions of five taste components is tested.

Identification Test 2): a concentration difference identification test in which five aqueous saline solutions and five aqueous acetic acid solutions each having slightly different concentrations are prepared, and whether their slight concentration difference can be accurately identified is tested.

Table 1 shows the results.

**Table 1-1**

| | | | Comparative Example 1 | Example 1 | Example 2 | Example 3 | Example 4 | Exanple 5 | Example 6 | Example 7 | Exanple 8 | Example 9 | Example 10 | Example 11 | Example 12 |
|---|---|---|---|---|---|---|---|---|---|---|---|---|---|---|---|
| | Acetic acid | w/v% | 5 | 5 | 5 | 5 | 5 | 5 | 5 | 5 | 5 | 5 | 5 | 5 | 5 |
| A1 | Isoamyl alcohol | ppm | 10 | 10 | 10 | 10 | 10 | 10 | 10 | 20 | 20 | 20 | 20 | 20 | 20 |
| A2 | Isobutanol | ppm | 10 | 10 | 10 | 10 | 10 | 10 | 10 | 20 | 20 | 20 | 20 | 20 | 20 |
| A3 | Butanol | ppm | 10 | 10 | 10 | 10 | 10 | 10 | 10 | 20 | 20 | 20 | 20 | 20 | 20 |
| A4 | Propanol | ppm | 10 | 10 | 10 | 10 | 10 | 10 | 10 | 20 | 20 | 20 | 20 | 20 | 20 |
| A5 | n-Amyl alcohol | ppm | 10 | 10 | 10 | 10 | 10 | 10 | 10 | 20 | 20 | 20 | 20 | 20 | 20 |
| | Total of five higher alcohols | ppm | 50 | 50 | 50 | 50 | 50 | 50 | 50 | 100 | 100 | 100 | 100 | 100 | 100 |
| B1 | Isovaleric acid | ppm | 120 | 100 | 80 | 40 | 20 | 15 | 10 | 120 | 100 | 80 | 40 | 32 | 28 |
| B2 | Isobutyric acid | ppm | 120 | 100 | 80 | 40 | 20 | 15 | 10 | 120 | 100 | 80 | 40 | 32 | 28 |
| B3 | Butyric acid | ppm | 120 | 100 | 80 | 40 | 20 | 15 | 10 | 120 | 100 | 80 | 40 | 32 | 28 |
| B4 | Propionic acid | ppm | 120 | 100 | 80 | 40 | 20 | 15 | 10 | 120 | 100 | 80 | 40 | 32 | 28 |
| B5 | Valeric acid | ppm | 120 | 100 | 80 | 40 | 20 | 15 | 10 | 120 | 100 | 80 | 40 | 32 | 28 |
| | Total of five lower fatty acids | ppm | 600 | 500 | 400 | 200 | 100 | 75 | 50 | 600 | 500 | 400 | 200 | 160 | 140 |
| B/A | Lower fatty acid/higher alcohol | | 12 | 10 | 8 | 4 | 2 | 1.5 | 1 | 6 | 5 | 4 | 2 | 1.6 | 1.4 |
| | Rich aroma | | - | 0.5 | 0.7 | 1.5 | 2.5 | 2.5 | 2.9 | 0.9 | 1 | 1.1 | 2.1 | 2.1 | 2.2 |
| | Pungent odor | | - | 0 | 0 | 0 | 0 | 0 | 0 | -0.1 | -0.1 | -0.1 | -0.1 | -0.1 | -0.1 |
| | Stuffy odor | | - | 0.5 | 0.7 | 1.7 | 2.5 | 2.5 | 2.8 | 1 | 1.1 | 1.2 | 2.1 | 2.1 | 2.3 |
| | Comprehensive evaluation (automatic) | | - | 0.6 | 0.7 | 1.6 | 2.5 | 2.5 | 2.9 | 0.7 | 0.8 | 1.1 | 1.7 | 1.7 | 2.1 |

**Table 1-2**

| | | | Example 13 | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|---|---|
| | Acetic acid | w/v% | 5 | 5 | 5 | 5 | 5 | 5 | 5 | 5 | 5 | 5 | 5 | 5 | 5 | 5 |
| A1 | Isoamyl alcohol | ppm | 20 | 20 | 30 | 30 | 30 | 30 | 30 | 30 | 40 | 40 | 40 | 40 | 40 | 40 |
| A2 | Isobutanol | ppm | 20 | 20 | 30 | 30 | 30 | 30 | 30 | 30 | 40 | 40 | 40 | 40 | 40 | 40 |
| A3 | Butanol | ppm | 20 | 20 | 30 | 30 | 30 | 30 | 30 | 30 | 40 | 40 | 40 | 40 | 40 | 40 |
| A4 | Propanol | ppm | 20 | 20 | 30 | 30 | 30 | 30 | 30 | 30 | 40 | 40 | 40 | 40 | 40 | 40 |
| A5 | n-Anyl alcohol | ppm | 20 | 20 | 30 | 30 | 30 | 30 | 30 | 30 | 40 | 40 | 40 | 40 | 40 | 40 |
| | Total of five higher alcohols | ppm | 100 | 100 | 150 | 150 | 150 | 150 | 150 | 150 | 200 | 200 | 200 | 200 | 200 | 200 |
| B1 | Isovaleric acid | ppm | 20 | 10 | 120 | 100 | 80 | 40 | 20 | 10 | 120 | 100 | 8C | 40 | 20 | 10 |
| B2 | Isobutyric acid | ppm | 20 | 10 | 120 | 100 | 80 | 40 | 20 | 10 | 120 | 100 | 8C | 40 | 20 | 10 |
| B3 | Butyric acid | ppm | 20 | 10 | 120 | 100 | 80 | 40 | 20 | 10 | 120 | 100 | 80 | 40 | 20 | 10 |
| B4 | Propionic acid | ppm | 20 | 10 | 120 | 100 | 80 | 40 | 20 | 10 | 120 | 100 | 80 | 40 | 20 | 10 |
| B5 | Valeric acid | ppm | 20 | 10 | 120 | 100 | 80 | 40 | 20 | 10 | 120 | 100 | 8C | 40 | 20 | 10 |
| | Total of five lower fatty acids | ppm | 100 | 50 | 600 | 500 | 400 | 200 | 100 | 50 | 600 | 500 | 400 | 200 | 100 | 50 |
| B/A | Lower fatty acid/higher alcohol | | 1 | 0.5 | 4 | 3.33 | 2.67 | 1.33 | 0.67 | 0.33 | 3 | 2.5 | 2 | 1 | 0.5 | 0.25 |
| | Rich aroma | | 2.4 | 2.8 | 1.1 | 1.1 | 1.4 | 2.1 | 2.3 | 2.7 | 1.4 | 1.5 | 1.7 | 1.8 | 2.3 | 2.7 |
| | Pungent odor | | -0.1 | -0.1 | -0.7 | -0.7 | -0.7 | -0.7 | -0.7 | -0.7 | -1.3 | -1.3 | -1.3 | -1.3 | -1.3 | -1.3 |
| | Stuffy odor | | 2.5 | 2.8 | 1.2 | 1.3 | 1.5 | 2.1 | 2.5 | 2.8 | 1.5 | 1.6 | 1.8 | 2 | 2.5 | 2.8 |
| | Comprehensive evaluation (automatic) | | 2.2 | 2.7 | 0.5 | 0.6 | 1.1 | 1.2 | 1.9 | 2.3 | 0.5 | 0.6 | 0.8 | 1.1 | 1.4 | 2.1 |

**Table 1-3**

| | | | Comparative Example 2 | Example 27 | Example 28 | Example 29 | Example 30 | Example 31 | Example 32 | Example 33 | Example 34 | Example 35 | Example 36 | Example 37 | Example 38 |
|---|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 | 1 |
| A1 | Isoamyl alcohol | ppm | 2 | 2 | 2 | 2 | 2 | 2 | 2 | 2 | 2.4 | 2.4 | 2.4 | 2.4 | 2.4 |
| A2 | Isobutanol | ppm | 2 | 2 | 2 | 2 | 2 | 2 | 2 | 2 | 2.4 | 2.4 | 2.4 | 2.4 | 2.4 |
| A3 | Butanol | ppm | 2 | 2 | 2 | 2 | 2 | 2 | 2 | 2 | 2.4 | 2.4 | 2.4 | 2.4 | 2.4 |
| A4 | Propanol | ppm | 2 | 2 | 2 | 2 | 2 | 2 | 2 | 2 | 2.4 | 2.4 | 2.4 | 2.4 | 2.4 |
| A5 | n-Amyl alcohol | ppm | 2 | 2 | 2 | 2 | 2 | 2 | 2 | 2 | 2.4 | 2.4 | 2.4 | 2.4 | 2.4 |
| | Total of five higher alcohols | ppm | 10 | 10 | 10 | 10 | 10 | 10 | 10 | 10 | 12 | 12 | 12 | 12 | 12 |
| B1 | Isovaleric acid | ppm | 24 | 20 | 16 | 10 | 8 | 4 | 3 | 2 | 24 | 12 | 8 | 6 | 4 |
| B2 | Isobutyric acid | ppm | 24 | 20 | 16 | 10 | 8 | 4 | 3 | 2 | 24 | 12 | 8 | 6 | 5 |
| B3 | Butyric acid | ppm | 24 | 20 | 16 | 10 | 8 | 4 | 3 | 2 | 24 | 12 | 8 | 6 | 5 |
| B4 | Propionic acid | ppm | 24 | 20 | 16 | 10 | 8 | 4 | 3 | 2 | 24 | 12 | 8 | 6 | 5 |
| B5 | Valeric acid | ppm | 24 | 20 | 16 | 10 | 8 | 4 | 3 | 2 | 24 | 12 | 8 | 6 | 5 |
| | Total of five lower fatty acids | ppm | 120 | 100 | 80 | 50 | 40 | 20 | 15 | 10 | 120 | 60 | 40 | 30 | 24 |
| B/A | Lower fatty acid/higher alcohol | | 12 | 10 | 8 | 5 | 4 | 2 | 1.5 | 1 | 10 | 5 | 3.33 | 2.5 | 2 |
| | Rich aroma | | - | 0.2 | 0.4 | 0.6 | 1.5 | 2.6 | 2.6 | 2.8 | 0.2 | 0.6 | 1.5 | 2 | 2.3 |
| | Pungent odor | | - | 0 | 0 | 0 | 0 | 0 | 0 | 0 | 0 | 0 | 0 | 0 | 0 |
| | Stuffy odor | | - | 0.2 | 0.4 | 0.6 | 1.5 | 2.6 | 2.6 | 2.8 | 0.2 | 0.6 | 1.5 | 2 | 2.3 |
| | Comprehensive evaluation (automatic) | | - | 0.2 | 0.4 | 1 | 1.8 | 2.8 | 2.8 | 2.9 | 0.2 | 1 | 1.7 | 2.1 | 2.6 |

**Table 1-4**

| | | | Exanple 39 | Exanple 40 | Example 41 | Example 42 | Example 43 | Exanple 44 | Example 45 | Exanple 46 | Example 47 | Example 48 |
|---|---|---|---|---|---|---|---|---|---|---|---|---|
| | Acetic acid | w/v% | 1 | 1 | 1 | 1 | 1 | 1 | 1 | 1 | 1 | 1 |
| A1 | Isoamyl alcohol | ppm | 2.4 | 3 | 3 | 3 | 4 | 5 | 6 | 7 | 8 | 9 |
| A2 | Isobutanol | ppm | 2.4 | 3 | 3 | 3 | 4 | 5 | 6 | 7 | 8 | 9 |
| A3 | Butanol | ppm | 2.4 | 3 | 3 | 3 | 4 | 5 | 6 | 7 | 8 | 9 |
| A4 | Propanol | ppm | 2.4 | 3 | 3 | 3 | 4 | 5 | 6 | 7 | 8 | 9 |
| A5 | n-Amyl alcohol | ppm | 2.4 | 3 | 3 | 3 | 4 | 5 | 6 | 7 | 8 | 9 |
| | Total of five higher alcohols | ppm | 12 | 15 | 15 | 15 | 20 | 25 | 30 | 35 | 40 | 45 |
| B1 | Isovaleric acid | ppm | 4.5 | 24 | 15 | 6 | 8 | 10 | 12 | 14 | 16 | 18 |
| B2 | Isobutyric acid | ppm | 4.5 | 24 | 15 | 6 | 8 | 10 | 12 | 14 | 16 | 18 |
| B3 | Butyric acid | ppm | 4.5 | 24 | 15 | 6 | 8 | 10 | 12 | 14 | 16 | 18 |
| B4 | Propionic acid | ppm | 4.5 | 24 | 15 | 6 | 8 | 10 | 12 | 14 | 16 | 18 |
| B5 | Valeric acid | ppm | 4.5 | 24 | 15 | 6 | 8 | 10 | 12 | 14 | 16 | 18 |
| | Total of five lower fatty acids | ppm | 22.5 | 120 | 75 | 30 | 40 | 50 | 60 | 70 | 80 | 90 |
| B/A | Lower fatty acid/higher alcohol | | 1.88 | 8 | 5 | 2 | 2 | 2 | 2 | 2 | 2 | 2 |
| | Rich aroma | | 2.3 | 0.3 | 0.4 | 2.3 | 2 | 1.8 | 1.7 | 1.1 | 0.9 | 0.7 |
| | Pungent odor | | 0 | -0.1 | -0.1 | -0.1 | -0.2 | -0.6 | -0.7 | -0.8 | -1.3 | -1.4 |
| | Stuffy odor | | 2.3 | 0.3 | 0.4 | 2.3 | 2 | 1.8 | 1.7 | 1.1 | 0.9 | 0.7 |
| | Conprehensive evaluation (automatic) | | 2.6 | 0.3 | 0.6 | 2.5 | 2.2 | 1.6 | 1.6 | 0.9 | 0.9 | 0.8 |

**Table 1-5**

| | | | Coirparativ e Example 3 | Exampl e 49 | Exampl e 50 | Exampl e 51 | Exampl e 52 | Exampl e 53 | Exampl e 54 | Exampl e 55 | Exampl e 56 | Exampl e 57 | Exampl e 58 | Exampl e 59 | Exampl e 60 | Exampl e 61 | Exampl e 62 |
|---|---|---|---|---|---|---|---|---|---|---|---|---|---|---|---|---|---|
| | Acetic acid | w/v% | 10 | 10 | 10 | 10 | 10 | 10 | 10 | 10 | 10 | 10 | 10 | 10 | 10 | 10 | 10 |
| A1 | Isoamyl alcohol | ppm | 20 | 24 | 24 | 24 | 24 | 24 | 24 | 24 | 24 | 36 | 36 | 36 | 36 | 40 | 50 |
| A2 | Isobutanol | ppm | 20 | 24 | 24 | 24 | 24 | 24 | 24 | 24 | 24 | 36 | 36 | 36 | 36 | 40 | 50 |
| A3 | Butanol | ppm | 20 | 24 | 24 | 24 | 24 | 24 | 24 | 24 | 24 | 36 | 36 | 36 | 36 | 40 | 50 |
| A4 | Propanol | ppm | 20 | 24 | 24 | 24 | 24 | 24 | 24 | 24 | 24 | 36 | 36 | 36 | 36 | 40 | 50 |
| A5 | n-Amyl alcohol | ppm | 20 | 24 | 24 | 24 | 24 | 24 | 24 | 24 | 24 | 36 | 36 | 36 | 36 | 40 | 50 |
| | Total of five higher alcohols | ppm | 100 | 120 | 120 | 120 | 120 | 120 | 120 | 120 | 120 | 180 | 180 | 180 | 180 | 200 | 250 |
| B1 | Isovaleric acid | ppm | 220 | 180 | 120 | 72 | 48 | 44 | 30 | 20 | 16 | 140 | 72 | 64 | 60 | 80 | 80 |
| B2 | Isobutyric acid | ppm | 220 | 180 | 120 | 72 | 48 | 44 | 30 | 20 | 16 | 140 | 72 | 64 | 60 | 80 | 80 |
| B3 | Butyric acid | ppm | 220 | 180 | 120 | 72 | 48 | 44 | 30 | 20 | 16 | 140 | 72 | 64 | 60 | 80 | 80 |
| B4 | Propionic acid | ppm | 220 | 180 | 120 | 72 | 48 | 44 | 30 | 20 | 16 | 140 | 72 | 64 | 60 | 80 | 80 |
| B5 | Valeric acid | ppm | 220 | 180 | 120 | 72 | 48 | 44 | 30 | 20 | 16 | 140 | 72 | 64 | 60 | 80 | 80 |
| | Total of five lower fatty acids | ppm | 1100 | 900 | 600 | 360 | 240 | 220 | 150 | 100 | 80 | 700 | 360 | 320 | 300 | 400 | 400 |
| B/A | Lower fatty acid/higher alcohol | | 11 | 7.5 | 5 | 3 | 2 | 1.83 | 1.25 | 0.83 | 0.67 | 3.89 | 2 | 1.78 | 1.67 | 2 | 1.6 |
| | Rich aroma | | - | 0.5 | 1.1 | 1.5 | 2.3 | 2.3 | 2.5 | 2.8 | 2.8 | 1.4 | 2 | 2 | 2.5 | 2 | 2 |
| | Pungent odor | | - | 0 | 0 | 0 | 0 | 0 | 0 | 0 | 0 | -0.2 | -0.2 | -0.2 | -0.2 | -0.3 | -0.9 |
| | Stuffy odor | | - | 0.5 | 1.6 | 1.9 | 2.4 | 2.4 | 2.6 | 2.9 | 2.9 | 1.1 | 2.2 | 2.2 | 2.4 | 2.2 | 2.2 |
| | Comprehensive evaluation (automatic) | | - | 0.6 | 0.9 | 1.3 | 2.1 | 2.1 | 2.6 | 2.9 | 2.9 | 0.7 | 1.7 | 1.7 | 2.3 | 1.5 | 1.1 |

From Table 1, it was found that by adjusting the contents of component A and component B and the ratio thereof (B/A), the stuffy odor is suppressed, and an acetic acid-containing food or drink having a rich aroma can be obtained.

### Test Example 2. Flavor Evaluation Test 2 (Study on influence of contents of components A1 to A5 and components B1 to B5 and ratio thereof (B1/A1, B2/A2, B4/A4) on stuffy odor, pungent odor and rich aroma)

According to the composition shown in Table 2, test solutions in which acetic acid, the components A1 to A5, and the components B1 to B5 were blended in the same manner as in Flavor Evaluation Test 1 was prepared (Comparative Examples 4 to 8, Examples 63 to 169), and evaluated in the same manner and viewpoint as in Flavor Evaluation Test 1. The control of Examples 63 to 86 is Comparative Example 4, the control of Examples 87 to 109 is Comparative Example 5, the control of Examples 110 to 133 is Comparative Example 6, the control of Examples 134 to 149 is Comparative Example 7, and the control of Examples 150 to 169 is Comparative Example 8. Prior to the evaluation, in Comparative Examples 4 to 8, it was confirmed that a stuffy odor was strongly felt, and a rich aroma was not felt.

Table 2 shows the results.

**Table 2-1**

| | | | Comparative Example 4 | Example 63 | Example 64 | Example 65 | Example 66 | Example 67 | Example 68 | Example 69 | Example 70 | Example 71 | Example 72 | Example 73 | Example 74 |
|---|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 | 1 |
| A1 | Isoamyl alcohol | ppm | 30 | 30 | 30 | 30 | 30 | 30 | 24 | 24 | 24 | 24 | 24 | 24 | 16 |
| B1 | Isovaleric acid | ppm | 330 | 240 | 180 | 120 | 60 | 30 | 240 | 150 | 96 | 72 | 48 | 24 | 120 |
| B/A | Lower fatty acid/higher alcohol | | 11 | 8 | 6 | 4 | 2 | 1 | 10 | 6.25 | 4 | 3 | 2 | 1 | 7.5 |
| | Rich aroma | | - | 0.3 | 0.4 | 0.8 | 2 | 2.2 | 0.2 | 0.3 | 0.9 | 1.2 | 2.1 | 2.3 | 0.3 |
| | Pungent odor | | - | 0 | 0 | 0 | 0 | 0.1 | 0.8 | 0.8 | 0.8 | 0.8 | 0.9 | 0.9 | 1.9 |
| | Stuffy odor | | - | 0.6 | 1.1 | 1.3 | 1.9 | 2 | 0.5 | 0.8 | 1.3 | 1.6 | 2 | 2.2 | 0.7 |
| | Coirprehensive evaluation (automatic) | | - | 0.3 | 0.3 | 0.5 | 1.3 | 1.4 | 0.3 | 0.4 | 0.8 | 1 | 1.6 | 1.7 | 0.6 |

**Table 2-2**

| | | | Example 75 | Example 76 | Example 77 | Example 78 | Example 79 | Example 80 | Example 81 | Example 82 | Example 83 | Example 84 | Example 85 | Example 86 |
|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 |
| A1 | Isoamyl alcohol | ppm | 16 | 16 | 16 | 16 | 16 | 8 | 8 | 8 | 8 | 8 | 8 | 6 |
| B1 | Isovaleric acid | ppm | 100 | 80 | 48 | 32 | 16 | 24 | 20 | 16 | 10 | 8 | 4 | 4 |
| B/A | Lower fatty acid/higher alcohol | | 6.25 | 5 | 3 | 2 | 1 | 3 | 2.5 | 2 | 1.25 | 1 | 0.5 | 0.67 |
| | Rich aroma | | 0.3 | 0.6 | 1.4 | 2.2 | 2.5 | 1.5 | 1.8 | 2.5 | 2.7 | 2.8 | 3 | 3 |
| | Pungent odor | | 1.9 | 1.9 | 1.9 | 1.9 | 2 | 2.7 | 2.7 | 2.7 | 2.8 | 2.9 | 2.9 | 2.9 |
| | Stuffy odor | | 0.8 | 1.1 | 1.7 | 2.1 | 2.5 | 1.7 | 2.4 | 2.5 | 2.7 | 2.8 | 3 | 3 |
| | Coirprehensive evaluation (automatic) | | 0.6 | 1.1 | 1.6 | 2 | 2.2 | 1.8 | 2.1 | 2.5 | 2.7 | 2.8 | 3 | 3 |

**Table 2-3**

| | | | Comparative Example 5 | Example 87 | Example 88 | Example 89 | Example 90 | Example 91 | Example 92 | Example 93 | Example 94 | Example 95 | Example 96 | Example 97 |
|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 |
| A2 | Isobutanol | ppm | 30 | 30 | 30 | 30 | 30 | 30 | 24 | 24 | 24 | 24 | 24 | 24 |
| B2 | Isobutyric acid | ppm | 330 | 300 | 240 | 180 | 120 | 60 | 96 | 72 | 48 | 24 | 12 | 6 |
| B/A | Lower fatty acid/higher alcohol | | 11 | 10 | 8 | 6 | 4 | 2 | 4 | 3 | 2 | 1 | 0.5 | 0.25 |
| | Rich aroma | | - | 0.4 | 0.7 | 1 | 1.2 | 1.5 | 1.2 | 1.3 | 1.7 | 1.8 | 2.4 | 2.6 |
| | Pungent odor | | - | 0 | 0 | 0 | 0 | 0 | 0.6 | 0.6 | 0.6 | 0.6 | 0.6 | 0.6 |
| | Stuffy odor | | - | 0.5 | 0.8 | 1 | 1.2 | 1.6 | 1.4 | 1.5 | 1.8 | 1.9 | 2.4 | 2.7 |
| | Coirprehensive evaluation (automatic) | | - | 0.4 | 0.5 | 0.6 | 0.7 | 1 | 0.8 | 0.9 | 1.1 | 1.2 | 1.5 | 2 |

**Table 2-4**

| | | | Example 98 | Example 99 | Example 100 | Example 101 | Example 102 | Example 103 | Example 104 | Example 105 | Example 106 | Example 107 | Example 108 | Example 109 |
|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 |
| A2 | Isobutanol | ppm | 12 | 12 | 12 | 12 | 12 | 12 | 6 | 6 | 6 | 6 | 4 | 4 |
| B2 | Isobutyric acid | ppm | 48 | 24 | 20 | 16 | 12 | 6 | 12 | 8 | 4 | 2 | 4 | 2 |
| B/A | Lower fatty acid/higher alcohol | | 4 | 2 | 1.67 | 1.33 | 1 | 0.5 | 2 | 1.33 | 0.67 | 0.33 | 1 | 0.5 |
| | Rich aroma | | 1.3 | 1.8 | 1.8 | 2.2 | 2.4 | 2.6 | 2.4 | 2.5 | 3 | 3 | 3 | 3 |
| | Pungent odor | | 1.7 | 1.7 | 1.7 | 1.7 | 1.7 | 1.7 | 2.6 | 2.6 | 2.6 | 2.6 | 2.6 | 2.6 |
| | Stuffy odor | | 1.5 | 1.9 | 1.9 | 2.1 | 2.4 | 2.7 | 2.4 | 2.6 | 3 | 3 | 3 | 3 |
| | Coirprehensive evaluation (automatic) | | 1.3 | 1.4 | 1.4 | 1.7 | 2.2 | 2.6 | 2.4 | 2.8 | 3 | 3 | 3 | 3 |

**Table 2-5**

| | | | Coirparative Example 6 | Example 110 | Example 111 | Example 112 | Example 113 | Example 114 | Example 115 | Example 116 | Example 117 | Example 118 | Example 119 | Example 120 |
|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 |
| A3 | Butanol | ppm | 10 | 10 | 10 | 10 | 10 | 10 | 8 | 8 | 8 | 8 | 8 | 8 |
| B3 | Butyric acid | ppm | 120 | 80 | 60 | 40 | 20 | 10 | 64 | 48 | 32 | 16 | 8 | 4 |
| B/A | Lower fatty acid/higher alcohol | | 12 | 8 | 6 | 4 | 2 | 1 | 8 | 6 | 4 | 2 | 1 | 0.5 |
| | Rich aroma | | - | 0 | 0 | 0 | 0 | 0 | 0 | 0 | 0 | 0 | 0 | 0 |
| | Pungent odor | | - | 0 | 0 | 0 | 0 | 0 | 1 | 1 | 1 | 1 | 1 | 1 |
| | Stuffy odor | | - | 0.1 | 0.1 | 0.1 | 0.1 | 0.2 | 0.1 | 0.1 | 0.3 | 0.4 | 1 | 1.4 |
| | Coirprehensive evaluation (automatic) | | - | 0.1 | 0.1 | 0.1 | 0.1 | 0.2 | 0.3 | 0.3 | 0.4 | 0.4 | 0.5 | 1.4 |

**Table 2-6**

| | | | Example 121 | Example 122 | Example 123 | Example 124 | Example 125 | Example 126 | Example 127 | Example 128 | Example 129 | Example 130 | Example 131 | Example 132 | Example 133 |
|---|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 | 1 |
| A3 | Butanol | ppm | 4 | 4 | 4 | 4 | 4 | 4 | 2 | 2 | 2 | 2 | 2 | 2 | 1 |
| B3 | Butyric acid | ppm | 32 | 24 | 16 | 8 | 4 | 2 | 16 | 12 | 8 | 6 | 4 | 2 | 1 |
| B/A | Lower fatty acid/higher alcohol | | 8 | 6 | 4 | 2 | 1 | 0.5 | 8 | 6 | 4 | 3 | 2 | 1 | 1 |
| | Rich aroma | | -0.1 | -0.1 | -0.1 | -0.1 | -0.1 | -0.1 | -0.1 | -0.1 | -0.1 | -0.1 | -0.1 | -0.1 | -0.1 |
| | Pungent odor | | 1.5 | 1.5 | 1.5 | 1.5 | 1.5 | 1.5 | 1.9 | 1.9 | 1.9 | 1.9 | 1.9 | 1.9 | 1.9 |
| | Stuffy odor | | 0.3 | 0.3 | 0.4 | 1 | 1.4 | 1.8 | 0.1 | 0.2 | 1 | 1.3 | 1.4 | 1.5 | 1.5 |
| | Coirprehensive evaluation (automatic) | | 0.5 | 0.5 | 0.5 | 1.5 | 1.7 | 2 | 0.7 | 1.2 | 1.7 | 1.8 | 2 | 2.2 | 2.2 |

**Table 2-7**

| | | | Comparativ e Example 7 | Example 134 | Example 135 | Example 136 | Example 137 | Example 138 | Example 139 | Example 140 | Example 141 | Example 142 | Example 143 | Example 144 | Example 145 | Example 146 | Example 147 | Example 148 | Example 149 |
|---|---|---|---|---|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 | 1 | 1 | 1 | 1 | 1 |
| A4 | Propanol | ppm | 11 | 10 | 10 | 10 | 8 | 8 | 6 | 6 | 6 | 4 | 4 | 4 | 2 | 2 | 2 | 2 | 2 |
| B4 | Propionic acid | ppm | 1000 | 60 | 40 | 20 | 20 | 16 | 12 | 8 | 4 | 6 | 4 | 2 | 20 | 16 | 12 | 8 | 4 |
| B/A | Lower fatty acid/higher alcohol | | 90.91 | 6 | 4 | 2 | 2.5 | 2 | 2 | 1.33 | 0.67 | 1.5 | 1 | 0.5 | 10 | 8 | 6 | 4 | 2 |
| | Rich aroma | | - | 1.7 | 1.7 | 2 | 2 | 2.1 | 2.4 | 2.6 | 2.9 | 2.6 | 2.9 | 2.9 | 2 | 2.1 | 2.4 | 2.6 | 2.9 |
| | Pungent odor | | - | 0.7 | 0.7 | 0.7 | 1.4 | 1.4 | 2.1 | 2.1 | 2.1 | 2.1 | 2.1 | 2.1 | 2.5 | 2.5 | 2.5 | 2.5 | 2.5 |
| | Stuffy odor | | - | 2.1 | 2.1 | 2.2 | 2.2 | 2.4 | 2.5 | 2.8 | 3 | 2.8 | 3 | 3 | 2.2 | 2.4 | 2.5 | 2.8 | 3 |
| | Coirprehensiv e evaluation (automatic) | | - | 1 | 1 | 1.3 | 1.4 | 1.7 | 1.9 | 2.2 | 2.6 | 2.4 | 2.8 | 2.8 | 1.9 | 2 | 2.4 | 2.7 | 2.9 |

**Table 2-8**

| | | | Comparative Example 8 | Example 150 | Example 151 | Example 152 | Example 153 | Example 154 | Example 155 | Example 156 | Example 157 | Example 158 | Example 159 | Example 160 |
|---|---|---|---|---|---|---|---|---|---|---|---|---|---|---|
| | Acetic acid | w/v% | 1 | 1 | 1 | 1 | 1 | 1 | 1 | 1 | 1 | 1 | 1 | 1 |
| A5 | n-Amyl alcohol | ppm | 10 | 8 | 8 | 8 | 8 | 8 | 8 | 8 | 7 | 7 | 7 | 4 |
| B5 | Valeric acid | ppm | 120 | 80 | 64 | 48 | 32 | 16 | 8 | 4 | 6 | 4 | 2 | 8 |
| B/A | Lower fatty acid/higher alcohol | | 12 | 10 | 8 | 6 | 4 | 2 | 1 | 0.5 | 0.86 | 0.57 | 0.29 | 2 |
| | Rich aroma | | - | 0 | 0 | 0 | 0 | 0 | 0 | 0 | -0.1 | -0.1 | -0.1 | 0 |
| | Pungent odor | | - | 0.9 | 0.9 | 0.9 | 0.9 | 0.9 | 0.9 | 0.9 | 1.2 | 1.2 | 1.2 | 1.4 |
| | Stuffy odor | | - | 0 | 0.1 | 0.1 | 0.2 | 0.2 | 1.3 | 1.6 | 1.5 | 1.6 | 1.8 | 1.3 |
| | Comprehensive evaluation (automatic) | | - | 0.1 | 0.2 | 0.2 | 0.2 | 0.2 | 0.4 | 0.5 | 0.6 | 0.8 | 1 | 0.8 |

**Table 2-9**

| | | | Example 161 | Example 162 | Example 163 | Example 164 | Example 165 | Example 166 | Example 167 | Example 168 | Example 169 |
|---|---|---|---|---|---|---|---|---|---|---|---|
| | Acetic acid | w/v% | 1 | 1 | 1 | 1 | 1 | 1 | 1 | 1 | 1 |
| A5 | n-Amyl alcohol | ppm | 4 | 4 | 4 | 2 | 2 | 2 | 2 | 2 | 1 |
| B5 | Valeric acid | ppm | 6 | 4 | 2 | 10 | 6 | 4 | 2 | 1 | 1 |
| B/A | Lower fatty acid/higher alcohol | | 1.5 | 1 | 0.5 | 5 | 3 | 2 | 1 | 0.5 | 1 |
| | Rich aroma | | -0.1 | -0.1 | -0.1 | 0 | -0.1 | -0.1 | -0.1 | -0.1 | -0.1 |
| | Pungent odor | | 1.4 | 1.4 | 1.4 | 1.6 | 1.6 | 1.6 | 1.6 | 1.6 | 1.6 |
| | Stuffy odor | | 1.5 | 1.6 | 1.8 | 0.6 | 1.5 | 1.6 | 1.8 | 1.8 | 1.8 |
| | Comprehensive evaluation (automatic) | | 0.9 | 1 | 1.4 | 0.4 | 1.2 | 1.5 | 1.8 | 1.8 | 1.8 |

From Table 2, it was found that by adjusting the contents of components A1 to A5 and components B1 to B5 and/or the ratio thereof (B1/A1, B2/A2, B4/A4), a rich aroma can be imparted while suppressing a stuffy odor and pungent odor. In addition, it has been found that the content of each component in the acetic acid-containing food or drink, which is effective for controlling stuffy odor, pungent odor, and rich aroma, varies depending on the type of component.

### Test Example 3. Flavor Evaluation Test 3 (Study on influence of content of each component in aspect containing two or more component A and component B and ratio thereof (B1/A1, B2/A2, B4/A4) on stuffy odor, pungent odor, and rich aroma)

According to the composition shown in Table 3, a test solution in which acetic acid, the components A1 to A5, and the components B1 to B5 were blended in the same manner as in Flavor Evaluation Test 1 was prepared (Comparative Example 9, Examples 185 to 208), and evaluated in the same manner and viewpoint as in Flavor Evaluation Test 1. The control was Comparative Example 9. Prior to the evaluation, in Comparative Example 9, it was confirmed that a stuffy odor and a pungent odor were strongly felt, and a rich aroma was not felt.

Table 3 shows the results.

**Table 3-1**

| | | | Comparative Example 9 | Example 185 | Example 186 | Example 187 | Example 188 | Example 189 | Example 190 | Example 191 | Example 192 | Example 193 | Example 194 | Example 195 | Example 196 |
|---|---|---|---|---|---|---|---|---|---|---|---|---|---|---|---|
| | Acetic acid | w/v% | 5 | 5 | 5 | 5 | 5 | 5 | 5 | 5 | 5 | 5 | 5 | 5 | 5 |
| A1 | Isoamyl alcohol | ppm | 40.0 | 22.3 | 19.1 | 30.0 | 51.7 | 54.9 | 12.4 | 21.9 | 22.9 | 19.8 | 17.1 | 17.8 | 18.7 |
| A2 | Isobutanol | ppm | 30.0 | 13.8 | 11.7 | 19.4 | 26.4 | 32.1 | 5.2 | 0.0 | 8.6 | 6.3 | 10.8 | 12.8 | 14.6 |
| A3 | Butanol | ppm | 10.0 | 0.0 | 0.0 | 0.0 | 0.0 | 0.0 | 0.0 | 0.0 | 0.0 | 0.0 | 0.0 | 0.0 | 0.0 |
| A4 | Propanol | ppm | 10.0 | 1.0 | 0.9 | 0.9 | 2.7 | 3.0 | 0.0 | 0.0 | 1.8 | 2.4 | 1.1 | 1.0 | 1.4 |
| A5 | n-Amyl alcohol | ppm | 10.0 | 0.0 | 0.0 | 0.0 | 0.0 | 0.0 | 0.0 | 0.0 | 0.0 | 0.0 | 10.1 | 0.1 | 0.0 |
| | Total of five higher alcohols | ppm | 100.0 | 37.1 | 31.7 | 50.3 | 80.8 | 90.0 | 17.6 | 21.9 | 33.3 | 28.5 | 39.2 | 31.8 | 34.8 |
| B1 | Isovaleric acid | ppm | 300.0 | 4.6 | 6.4 | 9.0 | 18.7 | 19.9 | 15.9 | 24.2 | 50.5 | 86.2 | 82.5 | 71.6 | 54.5 |
| B2 | Isobutyric acid | ppm | 240.0 | 5.8 | 3.4 | 2.7 | 8.1 | 6.5 | 40.0 | 58.6 | 74.9 | 44.2 | 51.6 | 40.8 | 36.2 |
| B3 | Butyric acid | ppm | 120.0 | 0.0 | 0.0 | 0.2 | 0.7 | 0.4 | 0.0 | 0.0 | 0.0 | 0.0 | 0.0 | 21.3 | 0.0 |
| B4 | Propionic acid | ppm | 240.0 | 12.8 | 12.1 | 11.6 | 44.6 | 52.1 | 3.9 | 5.0 | 0.0 | 34.9 | 19.5 | 23.0 | 34.0 |
| B5 | Valeric acid | ppm | 120.0 | 0.0 | 0.0 | 0.2 | 0.0 | 0.0 | 0.0 | 16.7 | 0.0 | 0.0 | 0.0 | 0.0 | 0.0 |
| | Total of five lower fatty acids | ppm | 1020.0 | 23.2 | 21.9 | 23.8 | 72.1 | 78.9 | 59.8 | 104.5 | 125.4 | 165.2 | 153.6 | 156.6 | 124.8 |
| B/A | Lower fatty acid/higher alcohol | | 10.20 | 0.62 | 0.69 | 0.47 | 0.89 | 0.88 | 3.40 | 4.76 | 3.77 | 5.79 | 3.92 | 4.93 | 3.59 |
| | Rich aroma | | - | 3 | 3 | 3 | 2.8 | 2.8 | 2.1 | 0.9 | 2.1 | 1.3 | 1.9 | 1.4 | 2.3 |
| | Pungent odor | | - | 2.2 | 2.2 | 2.2 | 1 | 0.9 | 2 | 2 | 2 | 1.9 | 1.4 | 1.9 | 2.1 |
| | Stuffy odor | | - | 3 | 3 | 3 | 2.9 | 2.9 | 2.2 | 0.9 | 2.2 | 1.4 | 2 | 1.5 | 2.4 |
| | Coirprehensive evaluation (automatic) | | - | 3 | 3 | 3 | 2.8 | 2.7 | 2.1 | 1 | 2.1 | 1.4 | 1.8 | 1.5 | 2.3 |

**Table 3-2**

| | | | Example 197 | Example 198 | Example 199 | Example 200 | Example 201 | Example 202 | Example 203 | Example 204 | Example 205 | Example 206 | Example 207 | Example 208 |
|---|---|---|---|---|---|---|---|---|---|---|---|---|---|---|
| | Acetic acid | w/v% | 5 | 5 | 5 | 5 | 5 | 5 | 5 | 5 | 5 | 5 | 5 | 5 |
| A1 | Isoamyl alcohol | ppm | 19.9 | 18.8 | 17.1 | 16.0 | 8.6 | 8.1 | 42.9 | 14.5 | 7.9 | 7.2 | 20.0 | 30.3 |
| A2 | Isobutanol | ppm | 14.8 | 8.9 | 12.6 | 10.4 | 5.3 | 5.3 | 19.5 | 8.2 | 5.1 | 4.8 | 7.2 | 19.6 |
| A3 | Butanol | ppm | 0.0 | 0.0 | 0.0 | 0.0 | 0.0 | 0.0 | 0.0 | 0.3 | 0.0 | 0.0 | 0.0 | 0.0 |
| A4 | Propanol | ppm | 1.5 | 1.2 | 1.1 | 1.3 | 1.0 | 0.5 | 0.0 | 0.2 | 0.4 | 2.0 | 1.7 | 0.6 |
| A5 | n-Amyl alcohol | ppm | 0.0 | 0.0 | 0.0 | 0.0 | 0.3 | 0.0 | 0.0 | 13.4 | 0.0 | 0.0 | 0.0 | 1.6 |
| | Total of five higher alcohols | ppm | 36.2 | 28.9 | 30.8 | 27.8 | 15.2 | 13.9 | 62.4 | 36.5 | 13.4 | 14.0 | 28.9 | 52.1 |
| B1 | Isovaleric acid | ppm | 54.2 | 71.1 | 58.6 | 65.2 | 40.0 | 32.0 | 151.7 | 45.2 | 57.1 | 23.1 | 21.2 | 55.7 |
| B2 | Isobutyric acid | ppm | 64.6 | 33.4 | 45.2 | 56.7 | 36.0 | 39.4 | 75.9 | 282.4 | 31.9 | 74.5 | 24.1 | 52.8 |
| B3 | Butyric acid | ppm | 22.4 | 0.0 | 6.1 | 7.1 | 0.0 | 1.9 | 0.0 | 0.0 | 0.9 | 0.0 | 1.9 | 0.0 |
| B4 | Propionic acid | ppm | 29.5 | 36.2 | 26.3 | 26.6 | 21.9 | 14.6 | 59.5 | 29.7 | 35.1 | 3.8 | 27.7 | 22.5 |
| B5 | Valeric acid | ppm | 0.0 | 0.0 | 3.3 | 5.1 | 0.0 | 6.7 | 0.0 | 0.0 | 5.8 | 0.0 | 8.4 | 0.0 |
| | Total of five lower fatty acids | ppm | 170.7 | 140.7 | 139.5 | 160.7 | 97.9 | 94.6 | 287.1 | 357.3 | 130.7 | 101.4 | 83.3 | 131.0 |
| B/A | Lower fatty acid/higher alcohol | | 4.71 | 4.87 | 4.53 | 5.78 | 6.44 | 6.79 | 4.60 | 9.78 | 9.75 | 7.23 | 2.88 | 2.52 |
| | Rich aroma | | 1.5 | 2.2 | 2.1 | 1.3 | 1.6 | 2 | 0.7 | 0.5 | 0.7 | 1.1 | 2.6 | 2.4 |
| | Pungent odor | | 2 | 2 | 2 | 2 | 1.9 | 2.1 | 1.2 | 1.5 | 2 | 2.1 | 2.1 | 2 |
| | Stuffy odor | | 1.7 | 2.2 | 2.2 | 1.4 | 1.8 | 2.2 | 0.6 | 0.4 | 0.6 | 1.2 | 2.7 | 2.6 |
| | Coirprehensive evaluation (automatic) | | 1.5 | 2.2 | 2.1 | 1.4 | 1.7 | 2 | 0.7 | 0.5 | 0.8 | 1.2 | 2.7 | 2.5 |

From Table 3, it was found that a rich aroma can be more remarkably (qualitatively differently in some cases) imparted while suppressing a stuffy odor and pungent odor, among the components selected from components A1 to A5 and components B1 to B5, by adjusting the content of a specific component to a specific content, adjusting the ratio of each component (B1/A1, B2/A2, B4/A4), and further adjusting the total content of components A1 to A5 and the total content of components B1 to B5 and the ratio thereof.

### Test Example 4. Flavor Evaluation Test 4 (Flavor evaluation test in drink using acetic acid-containing food or drink (vinegar) of present invention)

First, the contents of component A and component B were measured for a commercially available vinegar by the following method, and then components A1 to A5 and components B1 to B5 were appropriately added in the same manner as in the method described in Test 1 so as to have the composition of Table 4, thereby obtaining vinegar 1 to 5.

### Method for measuring component A

### [1] Method for analyzing components

The peak area of each component was analyzed by gas chromatography according to the following conditions. In addition, each component (the same component as that used in the formulation) was similarly analyzed as a sample, and the content of each component in each sample was calculated by an external standard method.

### Gas Chromatography Conditions

- Measuring equipment: Agilent Technologies 7820 GC System (produced by Agilent Technologies)
- GC column: TC-WAX (produced by G.L. Science) length 30 m, inner diameter 0.53 mm, film thickness 1.0 µm
- Gas flow rate: 5 mL/min (carrier: He gas)
- Temperature conditions: held at 40°C (6 min) -> raised at 8°C /min -> held at 130°C (0 min) -> post-run at 230°C (10 min)
- Injection amount: 0.5 µL
- Injection port mode: split (split ratio 5 : 1, split flow rate 25 mL/min)
- Detector: FID (produced by Agilent Technologies)
- Measurement method: FID_FLAVOR_SP5
- Analysis Method: FID_FLAVOR_SP5_ANALYSIS

### Method for quantifying components (the external standard method)

[2] Each component (the same component as used in the formulation) of a known concentration diluted with anhydrous ethanol was analyzed as a standard sample and a calibration curve was created based on the detected peak area. The analysis results of analyzed samples were fit to the calibration curve to calculate the content of each component.

### Method for measuring component B

The sample was diluted 5 times with ultrapure water (dilution ratio can be appropriately prepared), and the peak area of each component was analyzed using high-performance liquid chromatography (HPLC) according to the following conditions. In addition, each component of 5 mg% diluted with ultrapure water was similarly analyzed as a sample, and the content of each component of each sample was calculated by an external standard method.
- Measuring equipment: high-performance liquid chromatography (Model: LC-20AD, produced by Shimadzu Corporation)
- Mobile phase (1): 4 mM p-toluenesulfonic acid aqueous solution, flow rate 0.9 mL/min
- Mobile phase (2): 16 mM Bis-Tris aqueous solution containing 4 mM p-toluenesulfonic acid and 80 µM MEDTA, flow rate 0.9 mL/min
- Column: Shodex KC-G 6B + KC-811 × 2 (produced by Showa Denko K.K.)
- Column temperature: 52°C
- Detection equipment: electric conductivity detector (produced by Shimadzu Corporation)

**Table 4**

| | | | Vinegar 1 | Vinegar 2 | Vinegar 3 | Vinegar 4 | Vinegar 5 |
|---|---|---|---|---|---|---|---|
| | Acidity (in terms of acetic acid) | w/v% | 5.0 | 5.0 | 5.0 | 5.0 | 5.0 |
| A1 | Isoamyl alcohol | ppm | 20.0 | 20.0 | 42.9 | 17.1 | 30.0 |
| A2 | Isobutanol | ppm | 15.0 | 15.0 | 19.5 | 12.6 | 19.4 |
| A3 | Butanol | ppm | 5.0 | 5.0 | 0.0 | 0.0 | 0.0 |
| A4 | Propanol | ppm | 5.0 | 5.0 | 0.0 | 1.1 | 0.9 |
| A5 | n-Amyl alcohol | ppm | 5.0 | 5.0 | 0.0 | 0.0 | 0.0 |
| | Total of five higher alcohols | ppm | 50 | 50 | 62.4 | 30.8 | 50.3 |
| B1 | Isovaleric acid | ppm | 132.2 | 110.0 | 151.7 | 58.6 | 9.0 |
| B2 | Isobutyric acid | ppm | 112.2 | 90.0 | 75.9 | 45.2 | 2.7 |
| B3 | Butyric acid | ppm | 72.2 | 50.0 | 0.0 | 6.1 | 0.2 |
| B4 | Propionic acid | ppm | 132.2 | 110.0 | 59.5 | 26.3 | 11.6 |
| B5 | Valeric acid | ppm | 72.2 | 50.0 | 0.0 | 3.3 | 0.2 |
| | Total of five lower fatty acids | ppm | 521.1 | 410.0 | 287.1 | 139.5 | 23.7 |
| B/A | Lower fatty acid/higher alcohol | | 10.42 | 8.20 | 4.60 | 4.53 | 0.47 |

Subsequently, various raw materials were appropriately added so as to have the composition shown in Table 5, thereby obtaining a fruit juice-containing drink (drink 1 to 10). Regarding the vinegar which is one of the raw materials of each fruit juice-containing drink, samples were prepared in which the type of vinegar to be used was changed as shown in Table 6, and the obtained samples were sterilized at 90°C for 120 seconds in a state of being sealed in a container, filled in a bottle (150 ml volume glass bottle), and sealed, and stored at 60°C for 10 days (corresponding to storage at normal temperature of 20°C for 12 months), thereby obtaining samples for evaluation tests (Comparative Examples 10 to 19, Examples 209 to 248). The fruit juice content (g) in Table 5 refers to the content of fruit juice in terms of straight.

**Table 5**

| | | | Drink 1 | Drink 2 | Drink 3 | Drink 4 | Drink 5 | Drink 6 | Drink 7 | Drink 8 | Drink 9 | Drink 10 |
|---|---|---|---|---|---|---|---|---|---|---|---|---|
| Vinegar | Vinegar* | g | 50 | 50 | 50 | 50 | 50 | 50 | 50 | 50 | 50 | 50 |
| Saccharides and sweeteners | Sugar | g | 100 | 30 | 100 | 100 | 100 | 100 | 100 | 100 | | |
| | Honey | g | | | | | | | | | 100 | |
| Fruit juice | Strawberry juice | g | 300 | | | | | | | | | |
| | Orange juice | g | | | | | | | | 200 | | |
| | Apple juice | g | | 800 | | | 2 | | | | 100 | |
| | Pomegranate juice | g | | | | 20 | | | | | | |
| | Peach juice | g | | | | 30 | | | | | | |
| | White grape juice | g | | | | | 8 | | | | | 350 |
| | Grapefruit juice | g | | | | | | 15 | | | | |
| | Lemon juice | g | | | 200 | | | 3 | | | | |
| | Lime juice | g | | | | | | 2 | | | | |
| | Blueberry juice | g | | | | | | | 3 | | | 250 |
| | Raspberry juice | g | | | | | | | 1 | | | 250 |
| | Red grape juice | g | | | | | | | 1 | | | 50 |
| | Pineapple juice | g | | | | | | | | 200 | | |
| | Mango juice | g | | | | | | | | 100 | | |
| Vegetable juice | Tomato juice | g | | | | | | | | | 50 | |
| | Ginger juice | g | | | | | | | | | 5 | |
| | Soy milk | g | | | | | | | | | 300 | |
| Others | Carbonated water | g | | | 470 | | | | | | | 450 |
| | Jasmine tea | g | | | | | | | | 100 | | |
| | Alcohol (distilled spirit) | g | | | | | 50 | | | | | |
| Water | | g | + | + | + | + | + | + | + | + | + | + |
| Total | | g | 1000 | 1000 | 1000 | 1000 | 1000 | 1000 | 1000 | 1000 | 1000 | 1000 |

| | | | | | | | | | | | | |
|---|---|---|---|---|---|---|---|---|---|---|---|---|
| *Use of any of vinegar 1 to 5 | | | | | | | | | | | | |

For each sample after storage, stuffy odor was evaluated in the same manner as in Flavor Evaluation Test 1. Deterioration odor of fruit juice was evaluated in the same manner as in Flavor Evaluation Test 1 based on the following criteria for evaluation. On the other hand, with respect to the fruit juice feeling, about 5 ml of a sample was dropped onto the hand of the evaluator with a dropper, and the flavor of the fruit juice contained in the sample, which was felt when the sample was placed in the mouth, was evaluated based on the following criteria for evaluation. Furthermore, comprehensive aroma and good taste based on the above were evaluated as comprehensive evaluation. The control of Examples 209 to 212 is Comparative Example 10, the control of Examples 213 to 216 is Comparative Example 11, the control of Examples 217 to 220 is Comparative Example 12, the control of Examples 221 to 224 is Comparative Example 13, the control of Examples 225 to 228 is Comparative Example 14, the control of Examples 229 to 232 is Comparative Example 15, the control of Examples 233 to 236 is Comparative Example 16, the control of Examples 237 to 240 is Comparative Example 17, the control of Examples 241 to 244 is Comparative Example 18, and the control of Examples 245 to 248 is Comparative Example 19.

### Criteria for evaluation of deterioration odor of fruit juice

+3: Significantly less deterioration odor of fruit juice than the control.
+2: Less deterioration odor of fruit juice than the control.
+1: Slightly less deterioration odor of fruit juice than the control.
± 0: Stuffy odor is equivalent to that of the control.
-1: Slightly deterioration odor of fruit juice as compared to the control.
-2: Strong deterioration odor of fruit juice as compared to the control.
-3: Very strong rich deterioration odor of fruit juice compared to the control.

### Criteria for evaluation of fruit juice feeling

+3: Very strong fruit juice feeling as compared to the control.
+2: Strong fruit juice feeling as compared to the control.
+1: Slightly strong fruit juice feeling as compared to the control.
± 0: Stuffy odor is equivalent to that of the control.
-1: Slightly less fruit juice feeling than the control.
-2: Less fruit juice feeling than the control.
-3: Significantly less fruit juice feeling than the control.

### Criteria for comprehensive evaluation

+3: Significantly superior taste and aroma as compared to the control.
+2: Superior taste and aroma as compared to the control.
+1: Slightly superior taste and aroma as compared to the control.
± 0: Stuffy odor is equivalent to that of the control.
-1: Slightly inferior in taste and aroma as compared to the control.
-2: Inferior taste and aroma as compared to control.
-3: Significantly inferior taste and aroma as compared to the control.

Table 6 shows the results.

**Table 6-1**

| | Drink 1 | | | | |
|---|---|---|---|---|---|
| | Comparative Example 10 | Example 209 | Example 210 | Example 211 | Example 212 |
| Vinegar | Vinegar 1 | Vinegar 2 | Vinegar 3 | Vinegar 4 | Vinegar 5 |
| Stuffy odor | - | 1.2 | 1.6 | 2.1 | 2.7 |
| Fruit juice feeling | - | 1.1 | 1.7 | 2 | 2.8 |
| Deterioration odor of fruit | - | 1.1 | 1.5 | 1.9 | 2.8 |
| Comprehensive evaluation | - | 1.1 | 1.6 | 2 | 2.8 |

**Table 6-2**

| | Drink 2 | | | | |
|---|---|---|---|---|---|
| | Comparative Example 11 | Example 213 | Example 214 | Example 215 | Example 216 |
| Vinegar | Vinegar 1 | Vinegar 2 | Vinegar 3 | Vinegar 4 | Vinegar 5 |
| Stuffy odor | - | 1 | 1.6 | 2.2 | 3 |
| Fruit juice feeling | - | 0.9 | 1.7 | 2.3 | 3 |
| Deterioration odor of fruit | - | 1.1 | 1.5 | 2.1 | 3 |
| Comprehensive evaluation | - | 1 | 1.5 | 2.2 | 3 |

**Table 6-3**

| | Drink 3 | | | | |
|---|---|---|---|---|---|
| | Comparative Example 12 | Example 217 | Example 218 | Example 219 | Example 220 |
| Vinegar | Vinegar 1 | Vinegar 2 | Vinegar 3 | Vinegar 4 | Vinegar 5 |
| Stuffy odor | - | 1.1 | 1.6 | 2.1 | 2.8 |
| Fruit juice feeling | - | 1 | 1.5 | 1.9 | 3 |
| Deterioration odor of fruit | - | 1 | 1.6 | 1.8 | 2.9 |
| Comprehensive evaluation | - | 1 | 1.6 | 2 | 2.9 |

**Table 6-4**

| | Drink 4 | | | | |
|---|---|---|---|---|---|
| | Comparative Example 13 | Example 221 | Example 222 | Example 223 | Example 224 |
| Vinegar | Vinegar 1 | Vinegar 2 | Vinegar 3 | Vinegar 4 | Vinegar 5 |
| Stuffy odor | - | 1.1 | 1.7 | 2.2 | 3 |
| Fruit juice feeling | - | 1.2 | 1.7 | 2.1 | 3 |
| Deterioration odor of fruit | - | 1 | 1.6 | 2.2 | 2.9 |
| Comprehensive evaluation | - | 1.1 | 1.7 | 2.2 | 3 |

**Table 6-5**

| | Drink 5 | | | | |
|---|---|---|---|---|---|
| | Comparative Example 14 | Example 225 | Example 226 | Example 227 | Example 228 |
| Vinegar | Vinegar 1 | Vinegar 2 | Vinegar 3 | Vinegar 4 | Vinegar 5 |
| Stuffy odor | - | 0.9 | 1.4 | 1.9 | 2.7 |
| Fruit juice feeling | - | 0.8 | 1.5 | 1.8 | 2.8 |
| Deterioration odor of fruit | - | 0.8 | 1.5 | 1.8 | 2.7 |
| Comprehensive evaluation | - | 0.8 | 1.5 | 1.8 | 2.7 |

**Table 6-6**

| | Drink 6 | | | | |
|---|---|---|---|---|---|
| | Comparative Example 15 | Example 229 | Example 230 | Example 231 | Example 232 |
| Vinegar | Vinegar 1 | Vinegar 2 | Vinegar 3 | Vinegar 4 | Vinegar 5 |
| Stuffy odor | - | 1 | 1.6 | 2 | 2.8 |
| Fruit juice feeling | - | 1.1 | 1.4 | 2.1 | 2.7 |
| Deterioration odor of fruit | - | 1 | 1.4 | 1.8 | 2.8 |
| Comprehensive evaluation | - | 1 | 1.5 | 2 | 2.8 |

**Table 6-7**

| | Drink 7 | | | | |
|---|---|---|---|---|---|
| | Comparative Example 16 | Example 233 | Example 234 | Example 235 | Example 236 |
| Vinegar | Vinegar 1 | Vinegar 2 | Vinegar 3 | Vinegar 4 | Vinegar 5 |
| Stuffy odor | - | 0.9 | 1.5 | 2 | 2.8 |
| Fruit juice feeling | - | 1 | 1.5 | 1.9 | 2.8 |
| Deterioration odor of fruit | - | 1 | 1.5 | 1.9 | 2.7 |
| Comprehensive evaluation | - | 1 | 1.5 | 1.9 | 2.8 |

**Table 6-8**

| | Drink 8 | | | | |
|---|---|---|---|---|---|
| | Comparative Example 17 | Example 237 | Example 238 | Example 239 | Example 240 |
| Vinegar | Vinegar 1 | Vinegar 2 | Vinegar 3 | Vinegar 4 | Vinegar 5 |
| Stuffy odor | - | 1 | 1.5 | 1.9 | 2.8 |
| Fruit juice feeling | - | 1.2 | 1.7 | 2.2 | 2.9 |
| Deterioration odor of fruit | - | 1 | 1.4 | 2 | 2.8 |
| Comprehensive evaluation | - | 1.1 | 1.5 | 2 | 2.8 |

**Table 6-9**

| | Drink 9 | | | | |
|---|---|---|---|---|---|
| | Comparative Example 18 | Example 241 | Example 242 | Example 243 | Example 244 |
| Vinegar | Vinegar 1 | Vinegar 2 | Vinegar 3 | Vinegar 4 | Vinegar 5 |
| Stuffy odor | - | 1 | 1.5 | 2.1 | 2.8 |
| Fruit juice feeling | - | 0.7 | 1.3 | 1.8 | 2.4 |
| Deterioration odor of fruit | - | 0.9 | 1.4 | 1.9 | 2.7 |
| Comprehensive evaluation | - | 0.8 | 1.4 | 1.9 | 2.6 |

**Table 6-10**

| | Drink 10 | | | | |
|---|---|---|---|---|---|
| | Comparative Example 19 | Example 245 | Example 246 | Example 247 | Example 248 |
| Vinegar | Vinegar 1 | Vinegar 2 | Vinegar 3 | Vinegar 4 | Vinegar 5 |
| Stuffy odor | - | 0.8 | 1.4 | 2 | 2.9 |
| Fruit juice feeling | - | 0.9 | 1.3 | 2.1 | 3 |
| Deterioration odor of fruit | - | 0.8 | 1.5 | 2 | 2.8 |
| Comprehensive evaluation | - | 0.8 | 1.4 | 2 | 2.9 |

From Table 6, it was found that the stuffy odor and the deterioration odor of the fruit juice of the fruit juice-containing drink are suppressed and the fruit juice feeling is further enhanced in the acetic acid-containing food or drink in which the content of a specific component among the components selected from components A1 to A5 and components B1 to B5 is adjusted to a specific content, the ratio (B1/A1, B2/A2, B4/A4) of each component is adjusted, and the total content of components A1 to A5 and the total content of components B1 to B5 and the ratio thereof are further adjusted. In particular, in Example 216, extremely excellent results were obtained, and it was found that the acetic acid-containing food or drink of the present invention was remarkably effective particularly when used in combination with apple juice. The same evaluations as in Example 216 were also obtained for the drink having the same composition as in Example 216 except that no sugar was added.

### Flavor Evaluation Test 5 (Flavor evaluation test in seasoning using acetic acid-containing food or drink (vinegar) of present invention)

In the same manner as in Flavor Evaluation Test 4, components A1 to A5 and components B1 to B5 were appropriately added so as to have the composition shown in Table 4, thereby obtaining vinegar 1 to 5.

Subsequently, seasoning 1 to 8 was obtained by appropriately adding various raw materials so as to have the composition shown in Table 7. Regarding the vinegar which is one of the raw materials of each seasoning, samples for evaluation were prepared by changing the type of vinegar to be used as shown in Table 8 (Comparative Examples 20 to 27, Examples 249 to 280).

**Table 7**

| | | | Seasoning 1 | Seasoning 2 | Seasoning 3 | Seasoning 4 | Seasoning 5 | Seasoning 6 | Seasoning 7 | Seasoning 8 |
|---|---|---|---|---|---|---|---|---|---|---|
| | | | Seasoning vinegar | Sushi vinegar | Ponzu sauce | Sauce | Dashi | Dressing A | Dressing B | Dessert sauce |
| Vinegar | Vinegar* | g | 350 | 500 | 200 | 100 | 15 | 350 | 500 | 500 |
| Fruit juice | Lemon juice | g | 30 | | 30 | | | | 300 | |
| | Citrus junos juice | g | | | 30 | | 30 | | | |
| | Strawberry juice | g | | | | | | 150 | | 80 |
| | Raspberry juice | g | | | | | | 100 | | 40 |
| | Pomegranate juice | g | | | | | | | | 20 |
| | White grape juice | g | | | | 25 | | | | |
| | 5-fold concentrated apple juice | g | 10 | | | | | 10 | 10 | 200 |
| Seasoning | Salt | g | 20 | 100 | 30 | 50 | 20 | 50 | 60 | |
| | Sugar | g | 100 | 500 | 50 | | 30 | | | 100 |
| | Soy sauce | g | | | 200 | | 50 | | | |
| | Olive oil | g | | | | | | 50 | | |
| | Spice (pepper) | g | | | | | | | 10 | |
| | Bonito extract | g | | | 150 | | 200 | | | |
| | Kelp extract | g | 100 | | 50 | | | | | |
| | Vegetable extract (onion, celery, and carrot) | g | | | | 100 | | | | |
| Others | Shredded garlic | g | | | | 30 | | | | |
| | Roasted sesame | g | | | | 30 | | | | |
| Water | | g | + | | + | + | + | + | + | + |
| Total | | g | 1000 | 1100 | 1000 | 1000 | 1000 | 1000 | 1000 | 1000 |

| | | | | | | | | | | |
|---|---|---|---|---|---|---|---|---|---|---|
| *Use of any of vinegar 1 to 5 | | | | | | | | | | |

For each sample, a stuffy odor was evaluated in the same manner as in Flavor Evaluation Test 1. In addition, depending on the type of seasoning, the fruit juice feeling of the seasoning was evaluated in the same manner as in Flavor Evaluation Test 4. In addition, depending on the type of seasoning, the umami taste and sweetness of the seasoning were evaluated by the same method as the method of evaluating the fruit juice feeling in the flavor evaluation test 4 based on the following criteria for evaluation. Furthermore, based on the above, comprehensive aromas and tastes were evaluated as comprehensive evaluations in the same criteria for evaluation as in Flavor Evaluation Test 4. The control of Examples 249 to 252 is Comparative Example 20, the control of Examples 253 to 256 is Comparative Example 21, the control of Examples 257 to 260 is Comparative Example 22, the control of Examples 261 to 264 is Comparative Example 23, the control of Examples 265 to 268 is Comparative Example 24, the control of Examples 269 to 272 is Comparative Example 25, the control of Examples 273 to 276 is Comparative Example 26, and the control of Examples 277 to 280 is Comparative Example 27.

Table 8 shows the results.

**Table 8-1**

| | Seasoning 1 | | | | |
|---|---|---|---|---|---|
| | Comparative Example 20 | Example 249 | Example 250 | Example 251 | Example 252 |
| Vinegar | Vinegar 1 | Vinegar 2 | Vinegar 3 | Vinegar 4 | Vinegar 5 |
| Stuffy odor | - | 0.6 | 1.4 | 2 | 2.8 |
| Fruit juice feeling | - | 0.8 | 1.2 | 1.7 | 2.8 |
| Umami taste | - | 0.8 | 1.3 | 1.7 | 2.7 |
| Comprehensive evaluation | - | 0.7 | 1.3 | 1.8 | 2.8 |

**Table 8-2**

| | Seasoning 2 | | | | |
|---|---|---|---|---|---|
| | Sushi vinegar 1 | Sushi vinegar 2 | Sushi vinegar 3 | Sushi vinegar 4 | Sushi vinegar 5 |
| | Comparative Example 21 | Example 253 | Example 254 | Example 255 | Example 256 |
| Vinegar | Vinegar 1 | Vinegar 2 | Vinegar 3 | Vinegar 4 | Vinegar 5 |
| Stuffy odor | - | 1.1 | 1.6 | 2.1 | 2.9 |
| Sweetness | - | 0.7 | 1.2 | 1.6 | 2.9 |
| Comprehensive evaluation | - | 0.9 | 1.4 | 1.8 | 2.9 |

**Table 8-3**

| | Seasoning 3 | | | | |
|---|---|---|---|---|---|
| | Comparative Example 22 | Example 257 | Example 258 | Example 259 | Example 260 |
| Vinegar | Vinegar 1 | Vinegar 2 | Vinegar 3 | Vinegar 4 | Vinegar 5 |
| Stuffy odor | - | 0.8 | 1.3 | 1.8 | 2.7 |
| Fruit juice feeling | - | 0.7 | 1.3 | 1.7 | 2.5 |
| Umami taste | - | 0.6 | 1.2 | 1.9 | 2.6 |
| Comprehensive evaluation | - | 0.7 | 1.3 | 1.9 | 2.6 |

**Table 8-4**

| | Seasoning 4 | | | | |
|---|---|---|---|---|---|
| | Comparative Example 23 | Example 261 | Example 262 | Example 263 | Example 264 |
| Vinegar | Vinegar 1 | Vinegar 2 | Vinegar 3 | Vinegar 4 | Vinegar 5 |
| Stuffy odor | - | 0.7 | 1.1 | 1.5 | 2.2 |
| Fruit juice feeling | - | 0.6 | 1.3 | 1.7 | 2.3 |
| Umami taste | - | 0.6 | 1.2 | 1.5 | 2.1 |
| Comprehensive evaluation | - | 0.6 | 1.2 | 1.6 | 2.2 |

**Table 8-5**

| | Seasoning 5 | | | | |
|---|---|---|---|---|---|
| | Comparative Example 24 | Example 265 | Example 266 | Example 267 | Example 268 |
| Vinegar | Vinegar 1 | Vinegar 2 | Vinegar 3 | Vinegar 4 | Vinegar 5 |
| Stuffy odor | - | 0.6 | 0.9 | 1.4 | 1.8 |
| Fruit juice feeling | - | 0.5 | 1 | 1.4 | 1.9 |
| Umami taste | - | 0.5 | 0.9 | 1.3 | 1.7 |
| Comprehensive evaluation | - | 0.5 | 0.9 | 1.4 | 1.8 |

**Table 8-6**

| | Seasoning 6 | | | | |
|---|---|---|---|---|---|
| | Comparative Example 25 | Example 269 | Example 270 | Example 271 | Example 272 |
| Vinegar | Vinegar 1 | Vinegar 2 | Vinegar 3 | Vinegar 4 | Vinegar 5 |
| Stuffy odor | - | 0.8 | 1.4 | 1.7 | 2.7 |
| Fruit juice feeling | - | 1.1 | 1.4 | 1.8 | 2.8 |
| Comprehensive evaluation | - | 0.9 | 1.4 | 1.7 | 2.8 |

**Table 8-7**

| | Seasoning 7 | | | | |
|---|---|---|---|---|---|
| | Comparative Example 26 | Example 273 | Example 274 | Example 275 | Example 276 |
| Vinegar | Vinegar 1 | Vinegar 2 | Vinegar 3 | Vinegar 4 | Vinegar 5 |
| Stuffy odor | - | 1 | 1.5 | 1.9 | 2.8 |
| Fruit juice feeling | - | 1 | 1.4 | 1.8 | 2.9 |
| Comprehensive evaluation | - | 1 | 1.5 | 1.9 | 2.8 |

**Table 8-8**

| | Seasoning 8 | | | | |
|---|---|---|---|---|---|
| | Comparative Example 27 | Example 277 | Example 278 | Example 279 | Example 280 |
| Vinegar | Vinegar 1 | Vinegar 2 | Vinegar 3 | Vinegar 4 | Vinegar 5 |
| Stuffy odor | - | 1.1 | 1.5 | 2 | 3 |
| Fruit juice feeling | - | 0.9 | 1.5 | 2.1 | 3 |
| Comprehensive evaluation | - | 1 | 1.5 | 2 | 3 |

From Table 8, it has been found that the stuffy odor of the seasoning is suppressed, and the fruit juice feeling, the umami taste, and the sweetness are further enhanced in the vinegar in which the content of a specific component among the components selected from components A1 to A5 and components B1 to B5 is adjusted to a specific content, the ratio (B1/A1, B2/A2, B4/A4) of each component is adjusted, and the total content of components A1 to A5 and the total content of components B1 to B5 and the ratio thereof are adjusted.

### Flavor Evaluation Test 6 (Flavor evaluation test on rice produced using acetic acid-containing food or drink (vinegar) of present invention)

First, white rice (Koshihikari produced in Toyama Prefecture) was weighed so as to have the composition shown in Table 9, water (tap water) in an amount in which the white rice was sufficiently immersed was added, and the mixture was left to stand at room temperature (20°C) for 60 minutes to immerse the white rice, then the water used for immersion was discarded, and water (tap water) was added again so that the water addition amount with respect to the white rice had the composition shown in Table 9, and the rice was cooked in the fast-cooking mode of a commercially available rice cooker (JKT-G101 manufactured by Tiger Corporation) to obtain rice. Sushi vinegar 1 to 5 (Comparative Example 21 and Examples 253 to 256) used in Evaluation Test 5 was added to the total amount of the obtained rice so as to have the composition shown in Table 9, and the mixture was stirred with a rice scoop to obtain vinegar 1 to 5 (Comparative Example 28 and Examples 281 to 284).

About 20 g of each rice was weighed, and subjected to a flavor evaluation test. In the flavor evaluation test, the sweetness and umami taste of the rice when it is placed in the mouth and chewed were evaluated according to the same criteria for evaluation as in the Flavor Evaluation Test 4. In addition, the stuffy odor was evaluated based on the same criteria for evaluation as in the flavor evaluation test 1 from the aroma that pass through the nose during chewing. Furthermore, based on the above, the overall taste and aroma were evaluated according to the same criteria for evaluation as in Flavor Evaluation Test 4.

Table 9 shows the results.

**Table 9**

| | | Comparative Example 28 | Example 281 | Example 282 | Example 283 | Example 284 |
|---|---|---|---|---|---|---|
| | | Vinegared rice 1 | Vinegared rice 2 | Vinegared rice 3 | Vinegared rice 4 | Vinegared rice 5 |
| Sushi vinegar 1 | ml | 110 | | | | |
| Sushi vinegar 2 | ml | | 110 | | | |
| Sushi vinegar 3 | ml | | | 110 | | |
| Sushi vinegar 4 | ml | | | | 110 | |
| Sushi vinegar 5 | ml | | | | | 110 |
| Rice | 9 | 450 | 450 | 450 | 450 | 450 |
| Water | ml | 560 | 560 | 560 | 560 | 560 |
| Stuffy odor | | - | 0.4 | 1 | 1.7 | 2.9 |
| Sweetness | | - | 0.4 | 0.8 | 1.4 | 2.7 |
| Umami taste | | - | 0.5 | 0.9 | 1.4 | 2.8 |
| Comprehensive evaluation | | - | 0.4 | 0.9 | 1.5 | 2.8 |

From Table 9, it was found that the stuffy odor derived from the vinegar is suppressed and the umami taste and sweetness of the rice are enhanced in the rice produced using the vinegar in which the content of a specific component among the components selected from components A1 to A5 and components B1 to B5 is adjusted to a specific content, the ratio (B1/A1, B2/A2, B4/A4) of each component is adjusted, and the total content of components A1 to A5 and the total content of components B1 to B5 and the ratio thereof are adjusted.

### Test Example 7. Flavor Evaluation Test 5 (Study on influence of diacetyl, acetoin, and lactic acid on depth of aroma and suppression of acid odor)

Diacetyl (produced by Tokyo Chemical Industry Co., Ltd.), acetoin (produced by Tokyo Chemical Industry Co., Ltd.), and lactic acid (produced by Tokyo Chemical Industry Co., Ltd.) were appropriately added to each of the test products evaluated highly in Test Examples 1 and 3 so as to have the composition shown in Table 10, thereby obtaining test products 285 to 303. Diacetyl, acetoin, and lactic acid were measured by the following method. In addition, each test solution was sealed in a container and allowed to stand at 25°C for 1 day after the component preparation in order to stabilize the aroma. For each sample after storage, the depth of aroma and the suppression of acid odor were evaluated in the same manner as in Flavor Evaluation Test 1. In addition, for the suppression of the acid odor, a sample to which lactic acid was not added in each test product was used as a control.

### [1] Method for analyzing diacetyl and acetoin

The peak area of each component was analyzed by gas chromatography according to the following conditions. In addition, each component (the same component as that used in the formulation) was similarly analyzed as a sample, and the content of each component in each sample was calculated by an external standard method.

### Gas Chromatography Conditions

- Measuring equipment: Agilent Technologies 7820 GC System (produced by Agilent Technologies)
- GC column: TC-WAX (produced by G.L. Science) length 30 m, inner diameter 0.53 mm, film thickness 1.0 µm
- Gas flow rate: 5 mL/min (carrier: He gas)
- Temperature conditions: held at 40°C (6 min) -> raised at 8°C/min -> held at 130°C (0 min) -> post-run at 230°C (10 min)
- Injection amount: 0.5 µL
- Injection port mode: split (split ratio 5 : 1, split flow rate 25 mL/min)
- Detector: FID (produced by Agilent Technologies)
- Measurement method: FID_FLAVOR_SP5
- Analysis Method: FID_FLAVOR_SP5_ANALYSIS

### Quantitative method of diacetyl and acetoin (external standard method)

[2] Known concentrations of diacetyl and acetoin diluted with anhydrous ethanol were analyzed as sample samples, and a calibration curve was prepared based on the detected peak area. The analysis results of analyzed samples were fit to the calibration curve to calculate the content of each component.

### Content of Lactic Acid

The content of lactic acid was measured under the following conditions using high-performance liquid chromatography (HPLC).

### HPLC Conditions

High-performance liquid chromatography (Model LC-10ADVP produced by Shimadzu Corporation)
Mobile phase (1): 4 mM p-toluenesulfonic acid aqueous solution, flow rate 0.9 mL/min
Mobile phase (2): 16 mM Bis-Tris aqueous solution containing 4 mM p-toluenesulfonic acid and 80 µM MEDTA, flow rate 0.9 mL/min
Column: Shodex KC810P + KC-811 × 2 (produced by Showa Denko K.K.)
Column temperature: 50°C
Detection: Electrical conductivity detector

### Criteria for evaluation for depth of aroma

++: Significantly deep aroma.
+: Deep aroma.
-: Nothing in particular.

### Criteria for evaluation for suppression of acid odor

++: Significantly suppressed acid odor as compared to control.
++: Suppressed acid odor as compared to control.

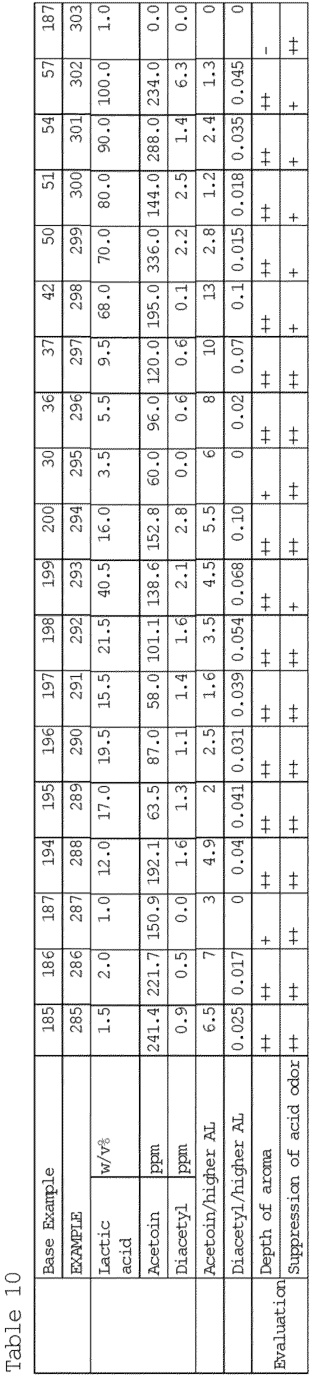

### Test Example 8. Flavor Evaluation Test 6 (Study on influence of acetic acid, higher alcohol, and decane peak area ratio on fresh aroma and heavy aroma in acetic acid-containing food or drink measured by Analysis Method A)

Test products 304 to 317 were obtained by adjusting various components so as to have the composition shown in Table 11 for the test products evaluated highly in Test Examples 1 and 3. The acetic acid, a higher alcohol, and decane peak areas were measured by the following method. Decane produced by Tokyo Chemical Industry Co., Ltd. was used. In addition, each test solution was sealed in a container and allowed to stand at 25°C for 1 day after the component preparation in order to stabilize the aroma. For each sample after storage, a fresh aroma and a heavy aroma were evaluated in the same manner as in Flavor Evaluation Test 1. For the fresh aroma and heavy aroma, each test product to which no decane was added was used as a control.

### Method and conditions for measurement of acetic acid, higher alcohol, and decane peak area by Analysis Method A

### [1] Method for separating and concentrating acetic acid, higher alcohol, and decane

### Analysis Method A

The components were separated and concentrated under the following conditions.

100 g of the ultra-pure 2 fold diluted sample was weighed into a 1 L vial and sealed before preheating at 40°C for 30 min. The vapor phase in the vial was then introduced in an amount of 200 ml as a sample into a concentrator. In the concentrator, a volatile organic compound was concentrated by removing moisture and an atmospheric component from the sample collected in the vial, introduced into GC-MS, and used for analysis. Specifically, by passing the sample through M1 (Empty) and M2 (Tenax) cooled with liquid nitrogen, moisture was retained in M1 (Empty), the volatile organic compound was concentrated into M2 (Tenax), and the other components were broken. Thereafter, only the volatile organic compound was desorbed (Desorb), transferred to M3 (Cryofocus) by a carrier gas, trapped at -150°C, then desorbed (Desorb) by rapid heating, and introduced into GC.
- Volatile component concentrator:
   Entech 7200 (produced by Entech Corporation)
- Concentration mode: CTD
- M1 (Empty) temperature: Trap -40°C → Desorb 10°C
- M2 (Tenax) temperature: Trap -50°C → Desorb 220°C
- M3 (CryoFocus) temperature: Trap -150°C -> Desorb 80°C

### [2] Method for measuring acetic acid, higher alcohol, and decane

Using gas chromatography and mass spectrometry, the peak areas of acetic acid, a higher alcohol, and decane were analyzed according to the following conditions. Specifically, a component peak in each sample was identified based on ions characteristic of each component (acetic acid: m/z = 60, component A1: m/z = 70, component A2: m/z = 74, component A3: m/z = 56, component A4: m/z = 59, component A5: m/z = 70, decane: m/z = 142), and a peak area was obtained. The "m/z" in the present invention refers to a value detected in a range of -0.3 to + 0.7 in the m/z center value of each component.

### Gas Chromatography Conditions

- Measuring equipment: Agilent 7980B GC System (produced by Agilent Technologies)
- GC column: DB-1 (produced by Agilent Technologies), length 60 m, aperture 0.32 mm, film thickness 1.0 µm
- Carrier: He gas, gas flow rate: 2.68 mL/min
- Temperature conditions: maintained at 35°C (5 min) → increased to 220°C at a temperature increment of 3°C /min -> maintained for 5 minutes

### Mass Spectrometry Conditions

- Measuring equipment: Agilent 5977B MSD (produced by Agilent Technologies)
- Ionization method: EI (ionization voltage 70 eV)
- Measurement mode: SCAN (scan mass: 35.0 to 270.0)

### Criteria for evaluation for fresh aroma

++: Strong fresh aroma is sensed as compared to the control.
+: Fresh aroma is sensed as compared to the control.

### Criteria for evaluation for heavy aroma

++: Strong heavy aroma is sensed as compared to the control.
+: Heavy aroma is sensed as compared to the control.

**Table 11**

| | Base Example | 198 | 186 | 185 | 194 | 187 | 200 | 195 | 199 | 197 | 196 | 51 | 57 | 36 | 37 |
|---|---|---|---|---|---|---|---|---|---|---|---|---|---|---|---|
| | EXAMPLE | 304 | 305 | 306 | 307 | 308 | 309 | 310 | 311 | 312 | 313 | 314 | 315 | 316 | 317 |
| Peak area ratio | Decane/acetic acid | 0.00025 | 0.004 | 0.15 | 0.055 | 0.00075 | 0.00001 | 0.075 | 0.0075 | 0.0005 | 0.0006 | 0.01 | 0.001 | 0.000001 | 0.0001 |
| | Decane/higher AL | 0.00025 | 0.002 | 0.0035 | 0.0025 | 0.0007 | 0.00001 | 0.001 | 0.0001 | 0.0005 | 0.0006 | 0.0015 | 0.003 | 0.000005 | 0.000001 |
| | Decane/isoamyl alcohol | 0.002 | 0.0015 | 0.002825 | 0.008541 | 0.00075 | 0.001 | 0.008139 | 0.0006 | 0.0005 | 0.0001 | 0.00025 | 0.000075 | 0.00005 | 0.00001 |
| | Decane/isobutanol | 0.005 | 0.0035 | 0.006 | 0.01 | 0.00075 | 0.001 | 0.008 | 0.0005 | 0.00025 | 0.00005 | 0.0001 | 0.00001 | 0.000005 | 0.000001 |
| Evaluation | Fresh aroma | ++ | ++ | ++ | ++ | ++ | + | ++ | ++ | ++ | ++ | ++ | ++ | + | ++ |
| | Heavy aroma | ++ | ++ | ++ | ++ | ++ | + | ++ | + | + | ++ | ++ | ++ | + | + |

### Test Example 9. Flavor Evaluation Test 7 (Flavor evaluation test in acetic acid-containing food or drink (seasoning) of present invention)

Test products 318 to 322 was obtained by adjusting the composition to that in Table 12. In addition, each test solution was sealed in a container and allowed to stand at 25°C for 1 day after the component preparation in order to stabilize the aroma. For each sample after storage, depth of an aroma, suppression of an acid odor, a fresh aroma, and a heavy aroma were evaluated in the same manner as in Flavor Evaluation Test 1. In each test product, a sample to which no component to be evaluated was added was used as a control.

**Table 12**

| | EXAMPLE | | 318 | 319 | 320 | 321 | 322 |
|---|---|---|---|---|---|---|---|
| | | | Seasoning vinegar | Sushi vinegar | Ponzu sauce | Sauce | Dashi |
| Vinegar | Vinegar | g | 350 | 500 | 200 | 100 | 15 |
| Fruit juice | Lemon juice | g | 30 | | 30 | | |
| | Citrus junos juice | g | | | 30 | | 30 |
| | Strawberry juice | g | | | | | |
| | Raspberry juice | g | | | | | |
| | Pomegranate juice | g | | | | | |
| | White grape juice | g | | | | 25 | |
| | 5-fold concentrated apple juice | g | 10 | | | | |
| Seasoning | Salt | g | 20 | 100 | 30 | 50 | 20 |
| | Sugar | g | 100 | 500 | 50 | | 30 |
| | Soy sauce | g | | | 200 | | 50 |
| | Olive oil | g | | | | | |
| | Spice (pepper) | g | | | | | |
| | Bonito extract | g | | | 150 | | 200 |
| | Kelp extract | g | 100 | | 50 | | |
| | Vegetable extract (onion, celery, and carrot) | g | | | | 100 | |
| Others | Shredded garlic | g | | | | 30 | |
| | Roasted sesame | g | | | | 30 | |
| Water | | g | + | | + | + | + |
| Total | | g | 1000 | 1100 | 1000 | 1000 | 1000 |
| | Acidity (in terms of acetic acid) | w/v% | 4.4 | 4.5 | 4.9 | 5.1 | 4.6 |
| A1 | Isoamyl alcohol | ppm | 8.34 | 12.44 | 15.31 | 12.99 | 7.89 |
| A2 | Isobutanol | ppm | 6.66 | 7.38 | 16.70 | 10.30 | 3.82 |
| A3 | Butanol | ppm | 0.01 | 0.00 | 0.01 | 0.01 | 0.01 |
| A4 | Propanol | ppm | 0.41 | 1.35 | 0.54 | 0.38 | 0.00 |
| A5 | n-Amyl alcohol | ppm | 0.01 | 0.00 | 0.01 | 0.01 | 0.01 |
| | Total of five higher alcohols | ppm | 15.43 | 21.16 | 32.57 | 23.69 | 11.72 |
| B1 | Isovaleric acid | ppm | 16.68 | 25.79 | 54.14 | 65.82 | 30.53 |
| B2 | Isobutyric acid | ppm | 10.36 | 22.13 | 37.6 | 38.41 | 23.22 |
| B3 | Butyric acid | ppm | 0.01 | 0.00 | 0.35 | 0.01 | 0.57 |
| B4 | Propionic acid | ppm | 8.67 | 12.19 | 12.3 | 12.07 | 13.01 |
| B5 | Valeric acid | ppm | 0.01 | 2.03 | 1.71 | 0.01 | 0.01 |
| | Total of five lower fatty acids | ppm | 35.73 | 62.14 | 106.10 | 116.32 | 67.34 |
| | Lactic acid | w/v% | 1.85 | 5.05 | 3.42 | 67.48 | 9.37 |
| | Acetoin | ppm | 71.00 | 77.00 | 40.00 | 350.00 | 90.00 |
| | Diacetyl | ppm | 0.54 | 0.01 | 0.01 | 2.86 | 0.01 |
| B/A | Lower fatty acid/higher alcohol | | 2.32 | 2.94 | 3.26 | 4.91 | 5.74 |
| | Acetoin/higher AL | | 4.60 | 3.64 | 1.23 | 14.77 | 7.68 |
| | Diacetyl/higher AL | | 0.035 | 0.000473 | 0.000307 | 0.12 | 0.000853 |
| Peak area ratio | Decane/acetic acid | | 0.003 | 0.005 | 0.06 | 0.12 | 0.18 |
| | Decane/higher AL | | 0.0008 | 0.0026 | 0.0033 | 0.0037 | 0.0023 |
| | Decane/isoamyl alcohol | | 0.009 | 0.0015 | 0.003 | 0.008 | 0.002 |
| | Decane/isobutanol | | 0.0015 | 0.004 | 0.0065 | 0.015 | 0.012 |
| Evaluation | Depth of aroma | | ++ | ++ | ++ | ++ | ++ |
| | Suppression of acid odor | | ++ | ++ | ++ | ++ | ++ |
| | Fresh aroma | | ++ | ++ | ++ | ++ | ++ |
| | Heavy aroma | | ++ | ++ | ++ | ++ | ++ |

## Claims

1. An acetic acid-containing food or drink having an acidity of 0.2 w/v% or more and a ratio of a content of a lower fatty acid (component B) to a content of a higher alcohol (component A) (component B/component A) of 0 to 10.

2. The acetic acid-containing food or drink according to claim 1, wherein the higher alcohol is at least one selected from the group consisting of isoamyl alcohol (component A1), isobutanol (component A2), butanol (component A3), propanol (component A4), and n-amyl alcohol (component A5), and the lower fatty acid is at least one selected from the group consisting of isovaleric acid (component B1), isobutyric acid (component B2), butyric acid (component B3), propionic acid (component B4), and valeric acid (component B5).

3. The acetic acid-containing food or drink according to claim 1 or 2, which meets at least one requirement selected from the group consisting of
(requirement 1) a ratio of the content of isovaleric acid (component B1) to the content of isoamyl alcohol (component A1) (component B1/component A1) is 8 or less,
(requirement 2) a ratio of the content of isobutyric acid (component B2) to the content of isobutanol (component A2) (component B2/component A2) is 10 or less, and
(requirement 3) a ratio of the content of propionic acid (component B4) to the content of propanol (component A4) (component B4/component A4) is 80 or less.

4. The acetic acid-containing food or drink according to any one of claims 1 to 3, which meets at least one requirement selected from the group consisting of
(requirement 4) containing isoamyl alcohol (component A1), the content of which is 24 ppm or less per 1% of acidity, and
(requirement 5) containing isobutanol (component A2), the content of which is 24 ppm or less per 1% acidity.

5. The acetic acid-containing food or drink according to claim 4, which meets at least one requirement selected from the group consisting of
(requirement 6) the content of butanol (component A3) is 8 ppm or less per 1% acidity,
(requirement 7) the content of propanol (component A4) is 10 ppm or less per 1% of acidity, and
(requirement 8) the content of the n-amyl alcohol (component A5) is 8 ppm or less per 1% acidity.

6. The acetic acid-containing food or drink according to any one of claims 1 to 5, which meets at least one requirement selected from the group consisting of
(requirement 9) the content of isovaleric acid (component B1) is 20 ppm or less per 1% acidity,
(requirement 10) the content of isobutyric acid (component B2) is 16 ppm or less per 1% acidity,
(requirement 11) the content of butyric acid (component B3) is 8 ppm or less per 1% acidity,
(requirement 12) the content of propionic acid (component B4) is 20 ppm or less per 1% acidity, and
(requirement 13) the content of valeric acid (component B5) is 8 ppm or less per 1% acidity.

7. The acetic acid-containing food or drink according to any one of claims 1 to 6, which meets at least one requirement selected from the group consisting of
(requirement 14) a ratio of the content of isobutyric acid (component B2) to the content of isoamyl alcohol (component A1) (component B2/component A1) is 10 or less,
(requirement 15) a ratio of the content of propionic acid (component B4) to the content of isoamyl alcohol (component A1) (component B4/component A1) is 10 or less, and
(requirement 16) a ratio of the content of isovaleric acid (component B1) to the content of isobutanol (component A2) (component B1/component A2) is 15 or less.

8. The acetic acid-containing food or drink according to any one of claims 1 to 7, wherein the ratio of the content of acetoin to the content of the higher alcohol (component A) is 39 or less.

9. The acetic acid-containing food or drink according to any one of claims 1 to 8, wherein the ratio of the content of diacetyl to the content of the higher alcohol (component A) is 0.5 or less.

10. The acetic acid-containing food or drink according to any one of claims 1 to 9, wherein a decane peak area ratio to acetic acid in the acetic acid-containing food or drink as measured by the following Analysis Method A is more than 0.
Analysis Method A
The components are separated and concentrated according to the following conditions.
100 g of the ultra-pure 2 fold diluted sample is weighed into a 1 L vial and sealed before preheating at 40°C for 30 min. Thereafter, 200 ml of a gas phase in the vial as a sample is introduced into the concentrator. In the concentrator, a volatile organic compound is concentrated by removing moisture and an atmospheric component from the sample collected in the vial, introduced into GC-MS, and used for analysis. Specifically, by passing the sample through M1 (Empty) and M2 (Tenax) cooled with liquid nitrogen, moisture is retained in M1 (Empty), the volatile organic compound is concentrated into M2 (Tenax), and the other components are broken. Thereafter, only the volatile organic compound is desorbed (Desorb), transferred to M3 (CryoFoucus) by a carrier gas, trapped at -150°C, then desorbed (Desorb) by rapid heating, and introduced into GC.
Volatile component concentrator
- M1 (Empty) temperature: Trap -40°C → Desorb 10°C
- M2 (Tenax) temperature: Trap -50°C → Desorb 220°C
- M3 (CryoFocus) temperature: Trap -150°C → Desorb 80°C

11. The acetic acid-containing food or drink according to any one of claims 1 to 10, wherein a decane peak area ratio with respect to the higher alcohol (component A) in the acetic acid-containing food or drink measured by the Analysis Method A is more than 0.

12. The acetic acid-containing food or drink according to any one of claims 1 to 11, wherein the acetic acid-containing food or drink is vinegar.

13. The acetic acid-containing food or drink according to any one of claims 1 to 12, wherein the acetic acid-containing food or drink is a drink or a composition for preparing the drink.

14. The acetic acid-containing food or drink according to claim 13, further comprising fruit juice.

15. The acetic acid-containing food or drink according to claim 14, the fruit juice content (on a not-from-concentrate fruit juice basis) is 0.2 mass% or more and 900 mass% or less.

16. The acetic acid-containing food or drink according to claim 14 or 15, wherein the fruit juice is at least one selected from the group consisting of strawberry juice, apple juice, citrus juice, pomegranate juice, peach juice, grape juice, blueberry juice, raspberry juice, pineapple juice, and mango juice.

17. The acetic acid-containing food or drink according to any one of claims 13 to 16, further comprising vegetable juice.

18. The acetic acid-containing food or drink according to claim 17, wherein the vegetable juice is at least one selected from the group consisting of tomato juice, ginger juice, and soy milk.

19. The acetic acid-containing food or drink according to any one of claims 1 to 12, wherein the acetic acid-containing food or drink is seasoning, a dessert sauce, or rice.

20. The acetic acid-containing food or drink according to any one of claims 1 to 12, which is for preparing at least one acetic acid-containing food or drink selected from the group consisting of a drink, a seasoning, a dessert sauce, and rice.
